# EUROPEAN PATENT APPLICATION

(11) **EP 4 149 086 A1**
(43) Date of publication of application: **15.03.2023**
(21) Application number: 22194526.4
(22) Date of filing: 08.09.2022
(51) Int. Cl.: H04L 67/00

(54) **DATA SENDING METHOD, APPARATUS AND SYSTEM**

(30) Priority: 10.09.2021 CN 202111060556; 30.12.2021 CN 202111659437
(71) Applicant: Huawei Technologies Co., Ltd., Shenzhen, Guangdong 518129, (CN)
(72) Inventor: ZHANG, Yongkang, Shenzhen, 518129 (CN)
(74) Representative: Körber, Martin Hans

(57) **Abstract**

This application discloses a data sending method and apparatus, a data receiving method, apparatus, and system, and a medium, and relates to the communication field. The method is applied to a master module that exchanges first data with a communication peer device based on the QUIC protocol. The master module is configured to provide an application service. The method includes: The master module obtains the first data, where the first data is for implementing the application service; the master module sends the first data to a slave module serving as a backup module; and the master module processes the first data based on a backup success message received from the slave module, where the backup success message indicates that the first data is successfully backed up. In this application, interruption of the application service can be avoided.

## Description

### TECHNICAL FIELD

This application relates to the communication field, and in particular, to a data sending method and apparatus, a data receiving method, apparatus, and system, and a medium.

### BACKGROUND

QUIC is a reliable and secure transport protocol based on the user datagram protocol (user datagram protocol, UDP) and byte streams. QUIC runs on top of UDP and provides functions such as reliability and congestion control that are similar to those of the transmission control protocol (transmission control protocol, TCP).

When a service is transmitted between a client and a server over the QUIC protocol, the client may include a first QUIC module, and the server may include a second QUIC module. The client and the server create at least one connection (connection) instance between the first QUIC module and the second QUIC module based on QUIC. QUIC has a stream multiplexing function. The client and the server may create a maximum of 2⁶² streams (streams) on the connection instance. Each stream may independently provide data transmission for an application (application, APP), and the APP is for providing an application service.

The first QUIC module located on the client or the second QUIC module located on the server may be faulty. Consequently, data transmission between the client and the server is interrupted, and the application service provided by the APP is interrupted.

### SUMMARY

This application provides a data sending method and apparatus, a data receiving method, apparatus, and system, and a medium, to avoid interruption of an application service. Technical solutions are as follows.

According to a first aspect, this application provides a data sending method, where the method is applied to a master module that exchanges first data with a communication peer device based on the QUIC protocol, and the master module is configured to provide an application service. In the method, the master module obtains the first data, where the first data is for implementing the application service. The master module sends the first data to a slave module serving as a backup module. The master module processes the first data based on a backup success message received from the slave module, where the backup success message indicates that the first data is successfully backed up.

Before processing the first data, the master module sends the first data to the slave module, where the slave module is the backup module of the master module. The slave module processes the first data, and a processing operation performed by the slave module is a backup operation of processing the first data by the master module. When the slave module successfully backs up the first data, the master module processes the first data, to ensure that both the slave module and the master module store the first data. In this way, when the master module is faulty, the slave module continues to process the data based on data processing progress reported before the master module is faulty, so that the slave module continues to provide the application service, to avoid interruption of the application service.

In a possible implementation, the master module generates the first data. The master module sends the first data to the communication peer device over the QUIC protocol. Because the master module first sends the first data to the slave module, the slave module backs up a received operation of sending the first data by the master module, where the master module and the slave module are located in a communication local device. In this way, when the master module is faulty, the slave module continues to send the data to the communication peer device based on data sending progress reported before the master module is faulty. Before and after the master module is faulty, the communication peer device receives the data continuously sent by the communication local device, and the communication peer device is unaware that the master module is faulty, to avoid the interruption of the application service.

In another possible implementation, the master module receives the first data that is sent by the communication peer device based on the QUIC protocol. Exchange of the first data is completed between a master QUIC module included in the master module and a master application APP module included in the master module. Because the master module first sends the first data to the slave module, the slave module backs up an operation of receiving the first data by the master module, where the master module and the slave module are located in a communication local device. In this way, when the master module is faulty, the slave module continues to receive the data based on data receiving progress reported before the master module is faulty. Before and after the master module is faulty, the communication local device can continuously receive the data continuously sent by the communication peer device, and the communication peer device is unaware that the master module is faulty, to avoid the interruption of the application service.

In another possible implementation, that the first data is successfully backed up includes that the exchange of the first data is completed between a slave QUIC module included in the slave module and a slave APP module included in the slave module. The exchange of the first data is completed between the slave QUIC module and the slave APP module, so that the slave module backs up an operation of processing the first data by the master module. In addition, because the exchange of the first data is completed between the slave QUIC module and the slave APP module, a status of the data exchange between the master APP module and the master QUIC module is consistent with a status of the data exchange between the slave APP module and the slave QUIC module, so that the data between the master APP module 101 and the master QUIC module 102 and the data between the slave APP module 201 and the slave QUIC module 202 are naturally spliced.

In another possible implementation, before the master module completes processing the first data, the master module obtains second data, where the second data is for implementing the application service, and the second data is different from the first data. The master module sends the second data and a first flag to the slave module, where the first flag is for indicating to suspend backup of the second data before processing of the first data is completed. In this way, when the master module and the slave module obtain the second data in a process of processing the first data, the slave module suspends the backup of the second data based on the first flag before completing processing the first data, so that an error caused because the slave module processes the second data in the process of processing the first data can be avoided. For example, a case in which data processing progress of the master module is inconsistent with data processing progress of the slave module can be avoided.

In another possible implementation, before the master module sends the first data to the slave module, the master module sends first status data to the slave module, where the first status data includes running status data that is of the master module and that is generated before the slave module goes online. In this way, the slave module can set, based on the first status data, a running status of the slave module to be consistent with a running status of the master module. In this way, when the master module is faulty, the slave module can successfully replace the master module, to continue to provide the application service.

In another possible implementation, the first status data includes at least one of the following: a QUIC protocol-based connection connection instance, a QUIC protocol-based stream stream instance, and data buffered in a buffer space corresponding to the stream instance.

In another possible implementation, before the master module sends the first data to the slave module, the master module processes third data, where the third data is data that is sent by the communication peer device and that is received by the master module before a first time point, and the first time point is a time point at which the slave module successfully backs up the first status data. Optionally, the third data and data last processed by the master module are consecutive, and the third data is data that can be processed by the master module before the master module processes the first data. In this way, the third data is processed before the first data is processed, so that efficiency of providing the application service can be improved.

In another possible implementation, the master module obtains an identifier of a target instance, where the identifier of the target instance is for identifying the target instance created by the master module and the communication peer device. The master module sends a backup request to the slave module, where the backup request includes the identifier of the target instance, and the backup request is for requesting to back up the target instance. The master module processes the target instance based on a backup response sent by the slave module, where the backup response is for responding to successful backup of the target instance. After receiving the backup request, the slave module also obtains the target instance. In this way, when the slave module replaces the master module, the slave module immediately transmits, based on the target instance, the data for implementing the application service to the communication peer device.

In another possible implementation, the master module creates the target instance. Exchange of information related to creation of the target instance is completed between the master QUIC module included in the master module and the master application APP module included in the master module. Because the information related to the target instance is exchanged between the master QUIC module and the master APP module, the master APP module is associated with the target instance, and data between the master APP module and the communication peer device may be transmitted by using the target instance.

In another possible implementation, the successful backup of the target instance includes that the exchange of the information related to the creation of the target instance is completed between the slave QUIC module included in the slave module and the slave APP module included in the slave module. Because the information related to the target instance is exchanged between the slave QUIC module and the slave APP module, the slave APP module is associated with the target instance. In this way, when the slave module replaces the master module, the slave module can immediately transmit data between the slave APP module and the communication peer device by using the target instance.

In another possible implementation, the master module sends a deletion request to the slave module, where the deletion request includes the identifier of the target instance, and the deletion request is for requesting to delete the target instance. The master module receives a deletion response sent by the slave module, where the deletion response is for responding to successful deletion of the target instance. The master module sends the deletion request to the slave module, and deletes the target instance after receiving the deletion response. This ensures that the master module deletes the target instance only after the target instance in the slave module is successfully deleted, and ensures that both the master module and the slave module successfully delete the target instance.

In another possible implementation, the target instance is the QUIC protocol-based connection instance or the QUIC protocol-based stream instance.

In another possible implementation, the master module and the slave module are located on a same device, or the master module and the slave module are located on different devices.

According to a second aspect, this application provides a data receiving method, where the method is applied to a slave module, the slave module is a backup module of a master module, the master module is configured to exchange first data with a communication peer device based on the QUIC protocol, and the master module is configured to provide an application service. In the method, the slave module receives the first data sent by the master module, where the first data is for implementing the application service. The slave module backs up the first data. The slave module sends a backup success message to the master module, where the backup success message indicates that the first data is successfully backed up.

Because the slave module is the backup module of the master module, the slave module receives the first data sent by the master module and processes the first data. A processing operation performed by the slave module is a backup operation of processing the first data by the master module. After successfully backing up the first data, the slave module sends the backup success message to the master module, where the backup success message is for triggering the master module to process the first data, to ensure that both the slave module and the master module store the first data. In this way, when the master module is faulty, the slave module continues to process the data based on data processing progress reported before the master module is faulty, so that the slave module continues to provide the application service, to avoid interruption of the application service.

In a possible implementation, the first data is data generated by the master module. The master module needs to send the first data to the communication peer device, and the slave module may back up an operation of sending the first data by the master module. The master module and the slave module are located in a communication local device. In this way, when the master module is faulty, the slave module continues to send the data to the communication peer device based on data sending progress reported before the master module is faulty. Before and after the master module is faulty, the communication peer device receives the data continuously sent by the communication local device, and the communication peer device is unaware that the master module is faulty.

In another possible implementation, the first data is data that is sent by the communication peer device based on the QUIC protocol and that is received by the master module. In this way, the slave module backs up an operation of receiving the first data by the master module, where the master module and the slave module are located in a communication local device. In this way, when the master module is faulty, the slave module continues to receive the data based on data receiving progress reported before the master module is faulty. Before and after the master module is faulty, the communication local device can continuously receive the data continuously sent by the communication peer device, and the communication peer device is unaware that the master module is faulty.

In another possible implementation, exchange of the first data is completed between a slave QUIC module included in the slave module and a slave APP module included in the slave module. The exchange of the first data is completed between the slave QUIC module and the slave APP module, so that the slave module backs up an operation of processing the first data by the master module.

In another possible implementation, before the slave module completes processing the first data, the slave module receives second data and a first flag, where the second data is data obtained by the master module before the master module completes processing the first data, the second data is for implementing the application service, and the second data is different from the first data. The slave module suspends backup of the second data based on the first flag.

When the master module and the slave module obtain the second data in a process of processing the first data, the slave module suspends the backup of the second data based on the first flag, so that an error caused because the slave module processes the second data in the process of processing the first data can be avoided. For example, data processing progress of the master module may be inconsistent with data processing progress of the slave module.

In another possible implementation, before the slave module receives the first data sent by the master module, the slave module receives first status data sent by the master module, where the first status data includes running status data that is of the master module and that is generated before the slave module goes online. The slave module backs up the first status data. In this way, the slave module backs up the first status data, to set a running status of the slave module to be consistent with a running status of the master module. In this way, when the master module is faulty, the slave module can successfully replace the master module, to continue to provide the application service.

In another possible implementation, the first status data includes at least one of the following: a connection connection instance, a stream stream instance, and data buffered in a buffer space corresponding to the stream instance.

In another possible implementation, the slave module receives a backup request sent by the master module, where the backup request includes an identifier of a target instance, and the identifier of the target instance is for identifying the target instance created by the master module and the communication peer device. The slave module backs up the target instance based on the backup request. The slave module sends a backup response to the master module, where the backup response is for responding to successful backup of the target instance. The slave module backs up the target instance to obtain the target instance. In this way, when the slave module replaces the master module, the slave module immediately transmits, based on the target instance, the data for implementing the application service to the communication peer device.

In another possible implementation, exchange of information related to creation of the target instance is completed between the slave QUIC module included in the slave module and the slave APP module included in the slave module. Because the information related to the target instance is exchanged between the slave QUIC module and the slave APP module, the slave APP module is associated with the target instance. In this way, when the slave module replaces the master module, the slave module can immediately transmit data between the slave APP module and the communication peer device by using the target instance.

In another possible implementation, the slave module receives a deletion request sent by the master module, where the deletion request includes the identifier of the target instance. The slave module deletes the target instance based on the deletion request. The slave module sends a deletion response to the master module, where the deletion response is for responding to successful deletion of the target instance. The slave module receives the deletion request sent by the master module, deletes the target instance, and then sends the deletion response to the master module, to trigger the master module to delete the target instance. This ensures that the master module deletes the target instance only after the target instance in the slave module is successfully deleted, and ensures that both the master module and the slave module successfully delete the target instance.

In another possible implementation, the target instance is a QUIC protocol-based connection instance or a QUIC protocol-based stream instance.

In another possible implementation, the master module and the slave module are located on a same device, or the master module and the slave module are located on different devices.

According to a third aspect, this application provides a data sending apparatus, where the apparatus is configured to exchange first data with a communication peer device based on the QUIC protocol, and the apparatus is configured to provide an application service. The apparatus includes:
a processing unit, configured to obtain the first data, where the first data is for implementing the application service; and
a transceiver unit, configured to send the first data to a slave module serving as a backup module.

The processing unit is further configured to process the first data based on a backup success message received from the slave module, where the backup success message indicates that the first data is successfully backed up.

Before the processing unit processes the first data, the transceiver unit sends the first data to the slave module, where the slave module is the backup module of the apparatus. The slave module processes the first data, and a processing operation performed by the slave module is a backup operation of processing the first data by the apparatus. After the slave module successfully backs up the first data, the processing unit processes the first data, to ensure that both the slave module and the apparatus store the first data. In this way, when the apparatus is faulty, the slave module continues to process the data based on data processing progress reported before the apparatus is faulty, so that the slave module continues to provide the application service, to avoid interruption of the application service.

In a possible implementation, the processing unit is configured to generate the first data.

The transceiver unit is further configured to send the first data to the communication peer device over the QUIC protocol.

Because the transceiver unit first sends the first data to the slave module, the slave module backs up a received operation of sending the first data by the apparatus, where the apparatus and the slave module are located in a communication local device. In this way, when the apparatus is faulty, the slave module continues to send the data to the communication peer device based on data sending progress reported before the apparatus is faulty. Before and after the apparatus is faulty, the communication peer device receives the data continuously sent by the communication local device, and the communication peer device is unaware that the apparatus is faulty.

In another possible implementation, the transceiver unit is further configured to receive the first data sent by the communication peer device based on the QUIC protocol.

The processing unit is configured to complete exchange of the first data between a master QUIC module included in the apparatus and a master application APP module included in the apparatus.

Because the transceiver unit first sends the first data to the slave module, the slave module backs up an operation of receiving the first data by the apparatus, where the apparatus and the slave module are located in a communication local device. In this way, when the apparatus is faulty, the slave module continues to receive the data based on data receiving progress reported before the apparatus is faulty. Before and after the apparatus is faulty, the communication local device can continuously receive the data continuously sent by the communication peer device, and the communication peer device is unaware that the apparatus is faulty.

In another possible implementation, that the first data is successfully backed up includes that the exchange of the first data is completed between a slave QUIC module included in the slave module and a slave APP module included in the slave module. The exchange of the first data is completed between the slave QUIC module and the slave APP module, so that the slave module backs up an operation of processing the first data by the apparatus. In addition, because the exchange of the first data is completed between the slave QUIC module and the slave APP module, a status of the data exchange between the master APP module and the master QUIC module is consistent with a status of the data exchange between the slave APP module and the slave QUIC module, so that the data between the master APP module 101 and the master QUIC module 102 and the data between the slave APP module 201 and the slave QUIC module 202 are naturally spliced.

In another possible implementation, the processing unit is further configured to obtain second data before completing processing the first data, where the second data is for implementing the application service, and the second data is different from the first data.

The transceiver unit is further configured to send the second data and a first flag to the slave module, where the first flag is for indicating to suspend backup of the second data before processing of the first data is completed.

In this way, when the apparatus and the slave module obtain the second data in a process of processing the first data, the slave module suspends the backup of the second data based on the first flag, so that an error caused because the slave module processes the second data in the process of processing the first data can be avoided. For example, a case in which data processing progress of the apparatus is inconsistent with data processing progress of the slave module can be avoided.

In another possible implementation, the transceiver unit is further configured to: before sending the first data to the slave module, send first status data to the slave module, where the first status data includes running status data that is of the apparatus and that is generated before the slave module goes online. In this way, the slave module can set, based on the first status data, a running status of the slave module to be consistent with a running status of the apparatus. In this way, when the apparatus is faulty, the slave module can successfully replace the apparatus, to continue to provide the application service.

In another possible implementation, the first status data includes at least one of the following: a QUIC protocol-based connection connection instance, a QUIC protocol-based stream stream instance, and data buffered in a buffer space corresponding to the stream instance.

In another possible implementation, the processing unit is further configured to process third data before the transceiver unit sends the first data to the slave module, where the third data is data that is sent by the communication peer device and that is received by the transceiver unit before a first time point, and the first time point is a time point at which the slave module successfully backs up the first status data. Optionally, the third data and data last processed by a master module are consecutive, and the third data is data that can be processed by the master module before the master module processes the first data. In this way, compared with processing the third data when processing the first data, processing the third data before processing the first data can improve efficiency of providing the application service.

In another possible implementation, the processing unit is further configured to obtain an identifier of a target instance, where the identifier of the target instance is for identifying the target instance created by the apparatus and the communication peer device.

The transceiver unit is further configured to send a backup request to the slave module, where the backup request includes the identifier of the target instance, and the backup request is for requesting to back up the target instance.

The processing unit is further configured to process the target instance based on a backup response sent by the slave module, where the backup response is for responding to successful backup of the target instance.

After receiving the backup request, the slave module also obtains the target instance. In this way, when the slave module replaces the apparatus, the slave module immediately transmits, based on the target instance, the data for implementing the application service to the communication peer device.

In another possible implementation, the processing unit is further configured to create the target instance. Exchange of information related to creation of the target instance is completed between the master QUIC module included in the apparatus and the master application APP module included in the apparatus. Because the information related to the target instance is exchanged between the master QUIC module and the master APP module, the master APP module is associated with the target instance. In this way, data between the master APP module and the communication peer device can be transmitted by using the target instance.

In another possible implementation, the successful backup of the target instance includes that the exchange of the information related to the creation of the target instance is completed between the slave QUIC module included in the slave module and the slave APP module included in the slave module. Because the information related to the target instance is exchanged between the slave QUIC module and the slave APP module, the slave APP module is associated with the target instance. In this way, when the slave module replaces the apparatus, the slave module can immediately transmit data between the slave APP module and the communication peer device by using the target instance.

In another possible implementation, the transceiver unit is further configured to send a deletion request to the slave module, where the deletion request includes the identifier of the target instance, and the deletion request is for requesting to delete the target instance.

The transceiver unit is further configured to receive a deletion response sent by the slave module, where the deletion response is for responding to successful deletion of the target instance.

In another possible implementation, the target instance is the QUIC protocol-based connection instance or the QUIC protocol-based stream instance.

In another possible implementation, the apparatus and the slave module are located on a same device, or the apparatus and the slave module are located on different devices.

According to a fourth aspect, this application provides a data receiving apparatus, where the apparatus is a backup module of a master module, the master module is configured to exchange first data with a communication peer device based on the QUIC protocol, and the master module is configured to provide an application service. The apparatus includes:
a transceiver unit, configured to receive the first data sent by the master module, where the first data is for implementing the application service; and
a processing unit, configured to back up the first data.

The transceiver unit is further configured to send a backup success message to the master module, where the backup success message indicates that the first data is successfully backed up.

Because the apparatus is the backup module of the master module, the transceiver unit receives the first data sent by the master module, and the processing unit processes the first data. A processing operation performed by the processing unit is a backup operation of processing the first data by the master module. After successfully backing up the first data, the processing unit sends the backup success message to the master module, where the backup success message is for triggering the master module to process the first data, to ensure that both the apparatus and the master module store the first data. In this way, when the master module is faulty, the apparatus continues to process the data based on data processing progress reported before the master module is faulty, so that the apparatus continues to provide the application service, to avoid interruption of the application service.

In a possible implementation, the first data is data generated by the master module. The master module needs to send the first data to the communication peer device, and the apparatus may back up an operation of sending the first data by the master module. The master module and the slave module are located in a communication local device. In this way, when the master module is faulty, the apparatus continues to send the data to the communication peer device based on data sending progress reported before the master module is faulty. Before and after the master module is faulty, the communication peer device receives the data continuously sent by the communication local device, and the communication peer device is unaware that the master module is faulty.

In another possible implementation, the first data is data that is sent by the communication peer device based on the QUIC protocol and that is received by the master module. In this way, the apparatus backs up an operation of receiving the first data by the master module, where the master module and the slave module are located in a communication local device. In this way, when the master module is faulty, the apparatus continues to receive the data based on data receiving progress reported before the master module is faulty. Before and after the master module is faulty, the communication local device can continuously receive the data continuously sent by the communication peer device, and the communication peer device is unaware that the master module is faulty.

In another possible implementation, the processing unit is configured to complete exchange of the first data between a slave QUIC module included in the apparatus and a slave APP module included in the apparatus. The exchange of the first data is completed between the slave QUIC module and the slave APP module, so that the apparatus backs up an operation of processing the first data by the master module.

In another possible implementation, before the processing unit completes processing the first data, the transceiver unit is further configured to receive second data and a first flag, where the second data is data obtained by the master module before the master module completes processing the first data, the second data is for implementing the application service, and the second data is different from the first data.

The processing unit is further configured to suspend backup of the second data based on the first flag.

When the master module and the apparatus obtain the second data in a process of processing the first data, the processing unit suspends the backup of the second data based on the first flag, so that an error caused because the processing unit processes the second data in the process of processing the first data can be avoided. For example, data processing progress of the master module may be inconsistent with data processing progress of the apparatus.

In another possible implementation, the transceiver unit is further configured to: before receiving the first data sent by the master module, receive first status data sent by the master module, where the first status data includes running status data that is of the master module and that is generated before the apparatus goes online.

The processing unit is further configured to back up the first status data. In this way, the processing unit backs up the first status data, to set a running status of the apparatus to be consistent with a running status of the master module. In this way, when the master module is faulty, the apparatus can successfully replace the master module, to continue to provide the application service.

In another possible implementation, the first status data includes at least one of the following: a connection connection instance, a stream stream instance, and data buffered in a buffer space corresponding to the stream instance.

In another possible implementation, the transceiver unit is further configured to receive a backup request sent by the master module, where the backup request includes an identifier of a target instance, and the identifier of the target instance is for identifying the target instance created by the master module and the communication peer device.

The processing unit is further configured to back up the target instance based on the backup request.

The transceiver unit is further configured to send a backup response to the master module, where the backup response is for responding to successful backup of the target instance.

The processing unit backs up the target instance to obtain the target instance. In this way, when the apparatus replaces the master module, the apparatus immediately transmits, based on the target instance, the data for implementing the application service to the communication peer device.

In another possible implementation, the processing unit is configured to implement, between the slave QUIC module included in the apparatus and the slave APP module included in the apparatus, exchange of information related to creation of the target instance. Because the information related to the target instance is exchanged between the slave QUIC module and the slave APP module, the slave APP module is associated with the target instance. In this way, when the apparatus replaces the master module, the apparatus can immediately transmit data between the slave APP module and the communication peer device by using the target instance.

In another possible implementation, the transceiver unit is further configured to receive a deletion request sent by the master module, where the deletion request includes the identifier of the target instance.

The processing unit is further configured to delete the target instance based on the deletion request.

The transceiver unit is further configured to send a deletion response to the master module, where the deletion response is for responding to successful deletion of the target instance.

In another possible implementation, the target instance is a QUIC protocol-based connection instance or a QUIC protocol-based stream instance.

In another possible implementation, the master module and the apparatus are located on a same device, or the master module and the apparatus are located on different devices.

According to a fifth aspect, this application provides a data sending apparatus. The apparatus includes a processor and a memory. The processor and the memory may be connected through an internal connection. The memory is configured to store a program, and the processor is configured to execute the program in the memory, to enable the apparatus to complete the method according to any one of the first aspect or the possible implementations of the first aspect.

According to a sixth aspect, this application provides a data receiving apparatus. The apparatus includes a processor and a memory. The processor and the memory may be connected through an internal connection. The memory is configured to store a program, and the processor is configured to execute the program in the memory, to enable the apparatus to complete the method according to any one of the second aspect or the possible implementations of the second aspect.

According to a seventh aspect, this application provides a network device. The network device includes a main control board and an interface board. The main control board includes a first processor and a first memory. The interface board includes a second processor, a second memory, and an interface card. The main control board is coupled to the interface board.

The first memory may be configured to store program code, and the first processor is configured to invoke the program code in the first memory to perform the following operations: obtaining first data, where the first data is for implementing an application service; and sending the first data to a slave module serving as a backup module.

The second memory may be configured to store program code, and the second processor is configured to invoke the program code in the second memory to trigger the interface card to perform the following operation: processing the first data based on a backup success message received from the slave module, where the backup success message indicates that the first data is successfully backed up.

In a possible implementation, an inter-process communication (inter-process communication, IPC) channel is established between the main control board and the interface board, and the main control board and the interface board communicate with each other through the IPC channel.

According to an eighth aspect, this application provides a network device. The network device includes a main control board and an interface board. The main control board includes a first processor and a first memory. The interface board includes a second processor, a second memory, and an interface card. The main control board is coupled to the interface board.

The first memory may be configured to store program code, and the first processor is configured to invoke the program code in the first memory to perform the following operations: receiving first data sent by a master module, where the first data is for implementing an application service; and backing up the first data.

The second memory may be configured to store program code, and the second processor is configured to invoke the program code in the second memory to perform the following operation: sending a backup success message to the master module, where the backup success message indicates that the first data is successfully backed up.

In a possible implementation, an inter-process communication (inter-process communication, IPC) channel is established between the main control board and the interface board, and the main control board and the interface board communicate with each other through the IPC channel.

According to a ninth aspect, this application provides a data receiving system. The system includes the apparatus provided in the third aspect and the apparatus provided in the fourth aspect, the system includes the apparatus provided in the fifth aspect and the apparatus provided in the sixth aspect, or the system includes the network device provided in the seventh aspect and the network device provided in the eighth aspect.

According to a tenth aspect, this application provides a computer program product. The computer program product includes a computer program stored in a computer-readable storage medium, and the computing program is loaded by a processor to implement the method according to any one of the first aspect, the second aspect, the possible implementations of the first aspect, or the possible implementations of the second aspect.

According to an eleventh aspect, this application provides a computer-readable storage medium, configured to store a computer program. The computer program is loaded by a processor to perform the method according to any one of the first aspect, the second aspect, the possible implementations of the first aspect, or the possible implementations of the second aspect.

According to a twelfth aspect, this application provides a chip, including a memory and a processor. The memory is configured to store computer instructions, and the processor is configured to invoke the computer instructions from the memory and run the computer instructions, to perform the method according to any one of the first aspect, the second aspect, the possible implementations of the first aspect, or the possible implementations of the second aspect.

### BRIEF DESCRIPTION OF DRAWINGS

FIG. 1 is a schematic diagram of a format of a QUIC protocol stack according to an embodiment of this application;
FIG. 2 is a schematic diagram of a scenario of a multi-path according to an embodiment of this application;
FIG. 3 is a schematic diagram of an implementation architecture of a multi-path according to an embodiment of this application;
FIG. 4 is a flowchart of sending a packet according to an embodiment of this application;
FIG. 5 is a schematic diagram of a structure of a device with two main control boards according to an embodiment of this application;
FIG. 6 is a schematic diagram of restoring a status by a device after a master/slave switchover or a restart according to an embodiment of this application;
FIG. 7 is a schematic diagram of a structure of a system according to an embodiment of this application;
FIG. 8 is a schematic diagram of a structure of another system according to an embodiment of this application;
FIG. 9 is a schematic diagram of a structure of a network architecture according to an embodiment of this application;
FIG. 10 is a flowchart of an instance creation method according to an embodiment of this application;
FIG. 11 is a flowchart of another instance creation method according to an embodiment of this application;
FIG. 12 is a flowchart of a target instance deletion method according to an embodiment of this application;
FIG. 13 is a flowchart of another target instance deletion method according to an embodiment of this application;
FIG. 14 is a flowchart of a data sending method according to an embodiment of this application;
FIG. 15 is a flowchart of a data receiving method according to an embodiment of this application;
FIG. 16 is a flowchart of a batch backup method according to an embodiment of this application;
FIG. 17 is a flowchart of another batch backup method according to an embodiment of this application;
FIG. 18A and FIG. 18B are a flowchart of delimitation in a receiving direction according to an embodiment of this application;
FIG. 19A and FIG. 19B are a flowchart of delimitation in a sending direction according to an embodiment of this application;
FIG. 20 is a flowchart of another data sending method according to an embodiment of this application;
FIG. 21 is a flowchart of another data sending method according to an embodiment of this application;
FIG. 22 is a flowchart of another data sending method according to an embodiment of this application;
FIG. 23 is a flowchart of another data sending method according to an embodiment of this application;
FIG. 24 is a flowchart of a slave-to-master promotion method according to an embodiment of this application;
FIG. 25 is a schematic diagram of a structure of a data sending apparatus according to an embodiment of this application;
FIG. 26 is a schematic diagram of a structure of a data receiving apparatus according to an embodiment of this application;
FIG. 27 is a schematic diagram of a structure of another data sending apparatus according to an embodiment of this application;
FIG. 28 is a schematic diagram of a structure of another data receiving apparatus according to an embodiment of this application;
FIG. 29 is a schematic diagram of a structure of a device according to an embodiment of this application;
FIG. 30 is a schematic diagram of a structure of another device according to an embodiment of this application; and
FIG. 31 is a schematic diagram of a structure of another system according to an embodiment of this application.

### DESCRIPTION OF EMBODIMENTS

The following further describes in detail embodiments of this application with reference to accompanying drawings.

The following explains and describes some terms and concepts in embodiments of this application.

### (1) QUIC protocol

The QUIC protocol is a reliable and secure transport protocol based on UDP. The QUIC protocol is a quick UDP internet connections (Quick UDP Internet Connections) protocol initially proposed by GOOGLE (Google), and is abbreviated as QUIC, which is also referred to as gQUIC. The Internet Engineering Task Force (internet engineering task force, IETF) considered that QUIC is a name, not an acronym (QUIC is a name, not an acronym) when standardizing it. For details, see the request for comments (request for comments, RFC) 9000. It may be understood that a method provided in embodiments of this application is applicable to gQUIC, or is applicable to IETF standardized QUIC. In other words, the QUIC protocol in embodiments of this application may be the gQUIC protocol, or may be the IETF standardized QUIC protocol.

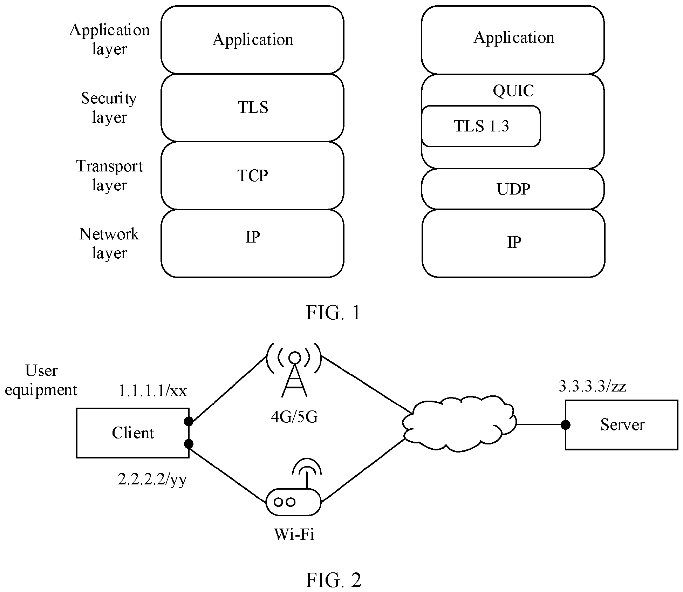

FIG. 1 shows a protocol stack of the QUIC protocol. The QUIC protocol runs on top of UDP, highly integrates TLS 1.3, and provides functions such as reliability and congestion control that are similar to those of the transmission control protocol (transmission control protocol, TCP). A conventional hypertext transfer protocol (hypertext transfer protocol, HTTP) protocol stack is on a left side of FIG. 1. Four protocols are application (application), TLS, TCP, and the internet protocol (internet protocol, IP) from top to bottom. The application is HTTP/1.1, HTTP/2, or the border gateway protocol (border gateway protocol, BGP). The protocol stack of the QUIC protocol is on a right side of FIG. 1. Four protocols are application, QUIC, UDP, and IP from top to bottom. The application is HTTP/3 or the BGP, and QUIC integrates the TLS 1.3.

In addition to the functions such as the reliability and the congestion control that are similar to those provided by TCP, the QUIC protocol further provides the following enhanced functions.
(a) Stream multiplexing (stream multiplexing): The stream multiplexing means that a plurality of byte streams may be simultaneously transmitted in a single QUIC connection (connection), and each byte stream is referred to as a stream. The QUIC connection is for establishing, between two subjects, a sharing status required for data transmission. For example, security contexts (for example, identity authentication, confidentiality protection, and security protection) required for the data transmission are provided. The security context may also be referred to as connection information. The stream is for providing a data transmission service in the security context provided by the QUIC connection.

The QUIC connection is uniquely identified by using a connection identifier (connection ID (English full name: identifier)), that is, each QUIC connection has a different connection ID. In one QUIC connection, each stream is uniquely identified by using a stream identifier. A length of the stream identifier is 64 bits (bits), where 2 least significant bits identify a type of the stream. For simplicity, it may be considered that the stream identifier includes two parts: the type of the stream (the 2 least significant bits) and an index (index) of the stream (the remaining 62 bits). This indicates that each connection may create four different types of streams, and the four different types of streams are respectively a bidirectional stream created by a client, a bidirectional stream created by a server, a unidirectional stream created by the client, and a unidirectional stream created by the server. Table 1 shows the four different types of streams. Two least significant bits of a stream ID of the bidirectional stream created by the client are 00. Two least significant bits of a stream ID of the bidirectional stream created by the server are 01. Two least significant bits of a stream ID of the unidirectional stream created by the client are 02. Two least significant bits of a stream ID of the unidirectional stream created by the server are 03. Each type of stream may create 2⁶² streams. Each stream can independently provide a data transmission service for an application. Data can be transmitted bidirectionally by using the bidirectional stream. For example, the client sends the data to the server by using the bidirectional stream, and the server also sends the data to the client by using the bidirectional stream. Data can be transmitted unidirectionally by using the unidirectional stream. For example, the client sends the data to the server by using the unidirectional stream, and the server sends the data to the client by using another unidirectional stream.

**Table 1**

| Bit of the stream ID | Type of the stream |
|---|---|
| 0x00 | Bidirectional stream created by the client |
| 0x01 | Bidirectional stream created by the server |
| 0x02 | Unidirectional stream created by the client |
| 0x03 | Unidirectional stream created by the server |

The stream in this application is different from a common flow (flow). The stream in this application is the byte stream in the QUIC connection, and is identified by using the stream ID. The common flow is mainly for a forwarding plane. Different flows may be identified by using different quintuples, or may be identified by using different triplets. A quintuple includes a source address, a destination address, a protocol, a source port, and a destination port. A triplet includes a source address, a destination address, and a protocol.

On the forwarding plane, when different flows are forwarded, the different flows can be output from different ports. For example, a forwarding device outputs a flow identified by using a first quintuple from a first port of the forwarding device, and outputs a flow identified by using a second quintuple from a second port of the forwarding device.

(b) Path (Path): The path is a transmission route between a client and a server, and may be identified by using a quintuple. The quintuple includes a source address, a destination address, a source port, a destination port, and a protocol. For QUIC, both the source address and the destination address may be IP addresses, and a protocol in the quintuple may be UDP.

In the QUIC protocol, paths include a single-active path (single-active path) and a multi-active path (multi-active path). The multi-active path may also be considered as a QUIC multi-active path, and the multi-active path may also be referred to as a multi-path (multi-path) for short. The single-active path means that data is allowed to be transmitted on only one path at any moment in one QUIC connection. The multi-active path means that data can be simultaneously transmitted on a plurality of paths at one moment in one QUIC connection. The multi-active path can more fully use a network resource, to obtain better transmission performance. For example, FIG. 2 is a schematic diagram of a scenario of a multi-path. User equipment (user equipment, UE) accesses two different networks at a same moment. Optionally, the two networks include a wired network and a wireless network, or the two networks include two wireless networks. For example, the two wireless networks include a wireless-fidelity (wireless-fidelity, Wi-Fi) network and a cellular network (cellular network), and the cellular network includes a 4th generation communication technology (4th Generation mobile communication technology, 4G), a 5th generation communication technology (5th Generation mobile communication technology, 5G), or the like. A client of the UE accesses, over the cellular network and the Wi-Fi network, a server by using different IP addresses. A quintuple used by the UE to access the server over the cellular network is (1.1.1.1, xx, UDP, 3.3.3.3, zz), and a quintuple used by the UE to access the server over the Wi-Fi network is (2.2.2.2, yy, UDP, 3.3.3.3, zz). 1.1.1.1 and 2.2.2.2 are IP addresses of the UE, 3.3.3.3 is an IP address of the server, xx and yy are UDP ports of the client, and zz is a UDP port of the server. In this way, the multi-path is used, so that only one QUIC connection is established between the client and the server, and data can be simultaneously and concurrently transmitted on a plurality of paths.

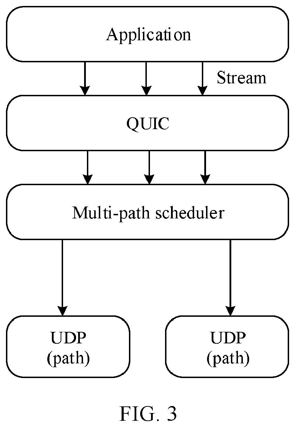

In the QUIC protocol, data transmission may be carried by using a stream, and a path is a data transmission path. Data carried by the stream needs to be associated with the path, to implement the data transmission. Optionally, in the QUIC protocol, data of the stream may be associated with the path by using a multi-path scheduler, to implement data sending. FIG. 3 is a schematic diagram of an implementation architecture of a multi-path. As shown in FIG. 3, data of an application is transmitted to a multi-path scheduler by using three streams, and the multi-path scheduler schedules the data transmitted by using the three streams to two paths for transmission.

For example, the multi-path scheduler associates the data sent by using the stream with the path in the following manners.

Traffic steering (traffic steering): When a new stream is created, the multi-path scheduler associates the stream with the path according to a policy. For example, there is a 1:1, P:1, or P:Q mapping relationship between the stream and the path, and both P and Q are positive integers greater than 1. When there is an N:M mapping relationship between the stream and the path, the multi-path scheduler may select, by using a current load status of the path, a lightly loaded path on which the data of the stream is to be sent.

Traffic switching (traffic switching): It is for implementing load balancing of each path. For example, in a QUIC running process, if load or a latency of a path changes, the multi-path scheduler may adjust data of a stream associated with the path to another path, to implement load balancing of each path.

Traffic splitting (traffic splitting): It is for splitting a large amount of to-be-sent data to a plurality of paths. For example, if a stream has a large amount of data and requires high transmission performance, the data of the stream may be simultaneously transmitted on the plurality of paths, that is, a ratio of the stream to the path is 1:P.

It should be noted that the foregoing is merely a solution for associating the data of the stream with the path. This is not limited in embodiments of this application.

### (c) Data transmission process of the QUIC protocol

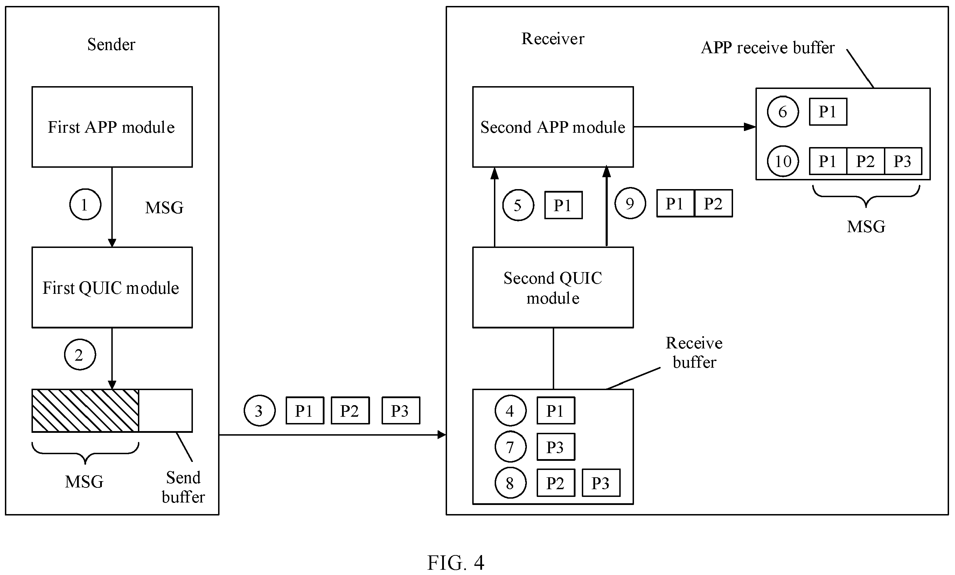

Refer to FIG. 4. The QUIC protocol is a byte stream-based transport protocol, and is similar to TCP. This means:
On a sender, when a QUIC module receives to-be-sent APP data from an APP module, a unique sequence number is assigned to each byte starting from 0 based on a receiving sequence. The QUIC module traces a sending operation of each byte by using the sequence number and ensures that each byte is correctly received by a receiver.

When sending APP data, the QUIC module does not manage a boundary of an APP message (MSG). An amount of APP data carried in a single QUIC packet is determined based on a size of a sending window.

The following describes the data transmission process of the QUIC protocol with reference to FIG. 4.
1. On the sender, a first APP module sends an application message (MSG) to a first QUIC module.
2. The first QUIC module first writes the MSG into a send buffer (Send Buffer).
3. The first QUIC module encapsulates the MSG into three QUIC packets (which are respectively a P1, a P2, and a P3), and successively sends the three QUIC packets to the receiver.
4. During transmission, the packets may arrive at the receiver out of order. It is assumed that a second QUIC module on the receiver first receives the P1, and writes the P1 into a receive buffer (Receive Buffer).
5. Because the P1 is consecutive APP data, the second QUIC module immediately sends the P1 to a second APP module, and then clears the receive buffer.
6. When the second APP module receives the P1, because the P1 is not a complete application message (MSG), the second APP module writes the P1 into an APP receive buffer, and waits to receive subsequent content of the MSG.
7. It is assumed that the second QUIC module receives the P3 after receiving the P1. Because the P3 is not consecutive APP data, the first QUIC module buffers the P3 in the receive buffer, and does not send the P3 to the second APP module for processing.
8. After receiving the P2, the second QUIC module writes the P2 into the receive buffer.
9. The second QUIC module finds that the P2 and the P3 in the receive buffer form consecutive APP data, and therefore sends the P2 and the P3 to the second APP module.
10. The second APP module first writes the P2 and the P3 into the APP receive buffer, and then finds that the P1, the P2, and the P3 form the complete application message MSG (packet delimitation). The second APP module reads the MSG from the APP receive buffer and processes the MSG. Finally, clear the APP receive buffer.

### (2) High availability (high availability, HA) technology

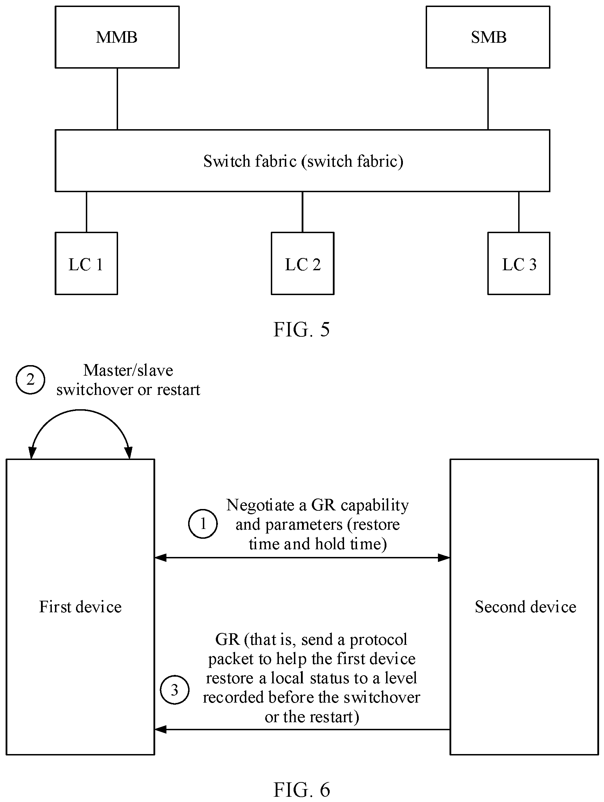

The HA technology is a key technology that ensures stable and continuous running of a network device (a router/a switch). Refer to FIG. 5. In order to enhance reliability, the network device (the router or the switch) generally adopts a distributed system and an architecture with two main control boards. The distributed system includes an MB and an LC, and the two main control boards are an MMB and an SMB. The MB functions as a control plane and a management plane, and includes the MMB and the SMB. The LC functions as a data plane. The MMB, the SMB, and the LC communicate with each other through a switch fabric (switch fabric). Generally, the MMB is in a working status and the SMB is in a backup status.

Master/slave backup and a graceful restart (graceful restart, GR) are most commonly used HA technologies.

### (a) For the master/slave backup:

As shown in Figure 5, the master/slave backup is performed between the MMB and the SMB, and includes batch backup and real-time backup.

The batch backup means that the MMB runs a service and generates a status in a single main control status. The SMB is newly inserted into a device or is restarted. After detecting that the SMB goes online, the MMB synchronizes the status of the MMB to the SMB at a time. The batch backup is applicable to synchronization of an inventory status of the MMB after the SMB goes online. That is, the inventory status of the MMB is synchronized to the SMB.

The real-time backup means that the MMB has completed the batch backup in a dual main control status. The MMB generates a new incremental status when running the service and synchronizes the incremental status to the SMB. The real-time backup is applicable to synchronization of the incremental status of the MMB after the synchronization of the inventory status is completed.

### (b) The GR is a master/slave switchover technology.

Refer to FIG. 6. In the GR technology, a first device is a device on which a master/slave switchover or a restart occurs, and a second device is a neighboring device that assists the first device in recovering a status.
1. In a normal working status, the first device and the second device negotiate a GR capability and parameters over a protocol, where the parameters include restore time (Restore time), hold time (hold time), and the like.
2. The master/slave switchover occurs on the first device or the first device is restarted.
3. After being aware that the first device is abnormal, the second device negotiates based on the GR capability, and does not immediately clear a protocol entry related to the first device. After a period of time (which is obtained by the second device through calculation based on the restore time and the hold time), the second device sends a protocol packet to the first device, to help the first device restore a local status to a level before the switchover or the restart.

Non-stop routing (non-stop routing, NSR) is an important technology of the GR technology.

The NSR is a master/slave switchover protection technology that neighbors are unaware of. For the QUIC protocol, the following aspects are included:
1. Uninterrupted QUIC connection: After the master/slave switchover, a QUIC module in a new MMB is in a same status as that in an old MMB. Therefore, a QUIC connection is not interrupted. During the switchover, the QUIC module can continue to process packets. However, a few packets may be lost due to buffer overflow or switching between switch fabric channels. The lost packets can be restored through a QUIC retransmission mechanism.
2. Uninterrupted APP neighbor relationship: Methods such as batch backup and delimitation are used, so that an APP in the new MMB after the master/slave switchover is in a same status as that in the old MMB, and an application packet with a semantic error does not exist. After the switchover is completed, the APP may immediately send a protocol packet (for example, a keep-alive packet) to the neighbor, to ensure that a neighbor relationship is not interrupted.
3. Uninterrupted forwarding flow: During the master/slave switchover, a forwarding entry generated by the APP through calculation on the LC is not affected and can continue to guide data forwarding.
4. Uninterrupted control flow: In an NSR real-time backup phase, if the master/slave switchover occurs when the application packet is received and sent, processing of the application packet is protected to the maximum extent without loss.

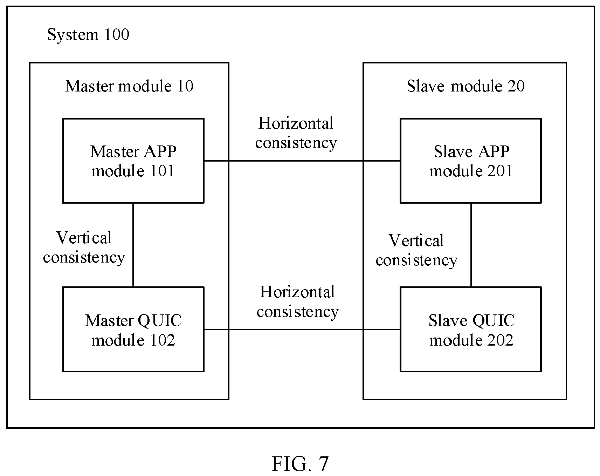

The following describes entities for executing embodiments of this application. Embodiments of this application may be executed by a system. Refer to FIG. 7. An embodiment of this application provides a system 100. The system 100 includes:
a master module 10 and a slave module 20. The slave module 20 is a backup module of the master module 10, the master module 10 communicates with the slave module 20, and the master module 10 is configured to provide an application service.

There is a QUIC protocol-based connection instance and a QUIC protocol-based stream instance between the master module 10 and a communication peer device of the system 10. The stream instance is carried on the connection instance. The master module 10 exchanges, with the communication peer device by using the connection instance and the stream instance, data for implementing the application service.

The master module 10 is configured to: obtain first data, where the first data is for implementing the application service; and send the first data to the slave module 20.

The slave module 20 is configured to: receive the first data, back up the first data, and send a backup success message to the master module 10, where the backup success message indicates that the first data is successfully backed up.

The master module 10 is further configured to process the first data based on the backup success message received from the slave module 20.

At least one stream instance is carried on the connection instance. Each stream instance is for transmitting a byte stream between the master module 10 and the communication peer device, and the byte stream includes the data for implementing the application service.

In some embodiments, a quantity of stream instances carried on the connection instance is less than or equal to 2⁶².

The first data may be first data 1 generated by the master module 10, or the first data may be first data 2 that is sent by the communication peer device and that is received by the master module 10.

In some embodiments, the master module 10 is configured to: generate the first data 1, where the first data 1 is the data for implementing the application service; and send the first data 1 to the slave module 20. The slave module 20 is configured to: receive the first data 1, back up the first data 1, and send a first backup success message to the master module 10, where the first backup success message indicates that the first data 1 is successfully backed up. The master module 10 is further configured to: receive the first backup success message, and send, based on the first backup success message, the first data 1 to the communication peer device by using the connection instance and the stream instance.

In some embodiments, the master module 10 is configured to: receive, by using the connection instance and the stream instance, the first data 2 sent by the communication peer device, where the first data 2 is also the data for implementing the application service; and send the first data 2 to the slave module 20. The slave module 20 is configured to: receive the first data 2, back up the first data 2, and send a second backup success message to the master module 10, where the second backup success message indicates that the first data 2 is successfully backed up. The master module 10 is configured to: receive the second backup success message, and provide the application service based on the second backup success message and the first data 2.

Refer to FIG. 7. After the master module 10 and the slave module 20 have backed up the data, data synchronization needs to be maintained between the master module 10 and the slave module 20. The data synchronization is also referred to as horizontal consistency. The horizontal consistency means that after the master module 10 and the slave module 20 have backed up the data, the data processed by the slave module 20 is synchronized with the data processed by the master module 10.

The master module 10 generates the first data 1, and sends the first data 1 to the slave module 20, to ensure the horizontal consistency between the master module 10 and the slave module 20; or
the master module 10 receives the first data 2, and sends the first data 2 to the slave module 20, to ensure the horizontal consistency between the master module 10 and the slave module 20.

After the master module 10 and the slave module 20 have backed up the data, the horizontal consistency needs to be maintained between the master module 10 and the slave module 20. In this way, when the master module 10 is faulty, the slave module 20 takes over the application service. The slave module 20 continues to process the data for implementing the application service based on data processing progress reported when the master module 10 is faulty, to ensure that no error occurs after the slave module 20 takes over the application service, and ensure that the application service is not interrupted.

In some embodiments, the master module 10 includes a master APP module 101 and a master QUIC module 102, and the slave module 20 includes a slave APP module 201 and a slave QUIC module 202. The slave APP module 101 is a backup module of the master APP module 201, and the slave QUIC module 202 is a backup module of the master QUIC module 101.

The master APP module 101 is configured to provide the application service. The master QUIC module 102 exchanges, with the communication peer device, the data for implementing the application service.

In some embodiments, the application service provided by the master APP module 101 includes one or more services, and each service corresponds to a different stream instance. For each service, the corresponding stream instance is for transmitting data that belongs to the service.

In some embodiments, a process in which the master module 10 obtains the first data and processes the first data is as follows:

The master APP module 101 generates the first data 1, and sends the first data 1 to the master QUIC module 102. The master QUIC module 102 receives the first data 1, and sends the first data 1 to the slave QUIC module 202. The slave QUIC module 202 receives the first data 1, backs up the first data 1, and sends the first backup success message to the master QUIC module 102. The master QUIC module 102 receives the first backup success message sent by the slave QUIC module 202, and sends the first data 1 to the communication peer device based on the first backup success message by using the connection instance and the stream instance, where the stream instance corresponds to a service to which the first data 1 belongs, and the stream instance is carried on the connection instance; and/or
the master QUIC module 102 receives, by using the connection instance and the stream instance, the first data 2 sent by the communication peer device, and sends the first data 2 to the slave QUIC module 202, where the stream instance corresponds to a service to which the first data 2 belongs, and the stream instance is carried on the connection instance. The slave QUIC module 202 receives the first data 2, backs up the first data 2, and sends the second backup success message to the master QUIC module 102. The master QUIC module 102 receives the second backup success message sent by the slave QUIC module 202, and sends the first data 2 to the master APP module 101 based on the second backup success message. The master APP module 101 provides the application service based on the first data 2.

In some embodiments, an operation of backing up the first data by the slave module 20 is exchanging the first data (the first data 1 or the first data 2) between the slave QUIC module 202 and the slave APP module 201. If exchange of the first data is completed between the slave QUIC module 202 and the slave APP module 202, it indicates that the slave module 20 successfully backs up the first data.

In some embodiments, the master module 10 may include a plurality of master APP modules 101, and the slave module 20 may include a plurality of slave APP modules 201. The plurality of master APP modules 101 are in a one-to-one correspondence with the plurality of slave APP modules 201. For the corresponding master APP module 101 and the slave APP module 201, the slave APP module 201 is the backup module of the master APP module 101.

After the master module 10 and the slave module 20 have backed up the data, the horizontal consistency between the master module 10 and the slave module 20 includes that a running status of the master APP module 101 is consistent with a running status of the slave APP module 201, and a running status of the master QUIC module 102 is consistent with a running status of the slave QUIC module 202.

Because the master APP module 101 generates the first data 1, the master QUIC module 102 sends the first data 1 to the slave QUIC module 202. The slave QUIC module 202 sends the first data 1 to the slave APP module 201, to simulate sending of the first data 1 to the communication peer device. After receiving the first backup success message, the master QUIC module 102 sends the first data 1 to the communication peer device. In this way, the master APP module 101 and the slave APP module 201 record data that is sent to the communication peer device as the first data 1, and the master QUIC module 102 and the slave QUIC module 202 record the data that is sent to the communication peer device as the first data 1. In this way, the running status of the master APP module 101 is consistent with the running status of the slave APP module 201, and the running status of the master QUIC module 102 is consistent with the running status of the slave QUIC module 202. In addition, a status of data exchange between the master APP module 101 and the master QUIC module 102 is also consistent with a status of data exchange between the slave APP module 201 and the slave QUIC module 202. In other words, the data between the master APP module 101 and the master QUIC module 102 and the data between the slave APP module 201 and the slave QUIC module 202 are naturally spliced.

In addition, because the master QUIC module 102 receives the first data 2, the master QUIC module 102 sends the first data 2 to the slave QUIC module 202. The slave QUIC module 202 sends the first data 2 to the slave APP module 201, to simulate receiving of the first data 2 sent by the communication peer device and sending of the first data 2 to the slave APP module 201. After receiving the second backup success message, the master QUIC module 102 sends the first data 2 to the master APP module 101. In this way, the master APP module 101 and the slave APP module 201 record received data that is sent by the communication peer device as the first data 2, and the master QUIC module 102 and the slave QUIC module 202 record the received data that is sent by the communication peer device as the first data 2. In this way, the running status of the master APP module 101 is consistent with the running status of the slave APP module 201, and the running status of the master QUIC module 102 is consistent with the running status of the slave QUIC module 202. In addition, the status of the data exchange between the master APP module 101 and the master QUIC module 102 is also consistent with the status of the data exchange between the slave APP module 201 and the slave QUIC module 202.

In this way, when the master APP module 101 and/or the master QUIC module 102 are/is faulty, the slave APP module 201 and the slave QUIC module 202 take over the application service, send data to the communication peer device, and receive data sent by the communication peer device. The sent data is data that is after the first data 1 and that is consecutive to the first data 1, and the received data is data that is after the first data 2 and that is consecutive to the first data 2. For example, assuming that the first data 1 is data that is of the 10^{th} to the 20^{th} bytes and that belongs to a service in the system 100, after the slave APP module 201 and the slave QUIC module 202 take over the application service, the data is sent starting from the 21^{st} byte of the service. In addition, assuming that the first data 2 is data that is of the 25^{th} to the 30^{th} bytes and that belongs to the service, after the slave APP module 201 and the slave QUIC module 202 take over the application service, the data is received starting from the 31^{st} byte of the service. That is, when the master APP module 101 and/or the master QUIC module 102 are/is faulty, running progress of the application service in the master module 10 is consistent with running progress of the application in the slave module 20, so that when taking over the application service, the slave module 20 continues to run the application service based on the running progress, to provide a service in the business service.

That the status of the data exchange between the master APP module 101 and the master QUIC module 102 is also consistent with the status of the data exchange between the slave APP module 201 and the slave QUIC module 202 may alternatively mean that data synchronization is maintained between the master APP module 101 and the master QUIC module 102 and between the slave APP module 201 and the slave QUIC module 202. The data synchronization is also referred to as vertical consistency.

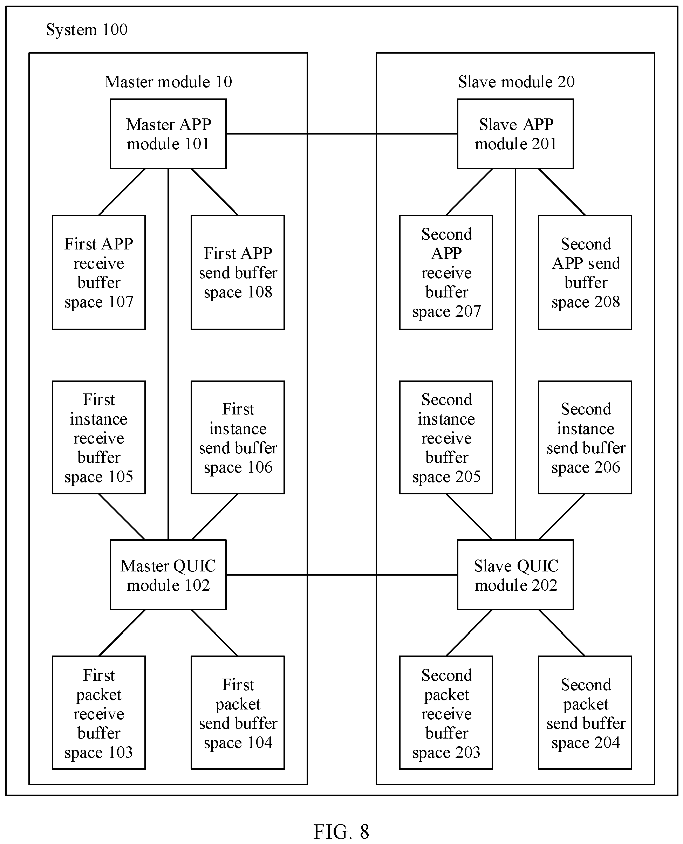

In some embodiments, refer to FIG. 8. The system 100 further includes one or more of the following buffer spaces corresponding to the master module 10: a first packet receive buffer space 103, a first packet send buffer space 104, a first instance receive buffer space 105, a first instance send buffer space 106, or a first APP receive buffer space 107.

In addition, the system 100 further includes one or more of the following buffer spaces corresponding to the slave module 20: a second packet receive buffer space 203, a second packet send buffer space 204, a second instance receive buffer space 205, a second instance send buffer space 206, or a second APP receive buffer space 207. The first instance receive buffer space 105, the first instance send buffer space 106, the second instance receive buffer space 205, and the second instance send buffer space 206 all correspond to the stream instance.

The second packet receive buffer space 203 backs up the first packet receive buffer space 103, the second packet send buffer space 204 backs up the first packet send buffer space 104, the second instance receive buffer space 205 backs up the first instance receive buffer space 105, the second instance send buffer space 206 backs up the first instance send buffer space 106, and the second APP receive buffer space 207 backs up the first APP receive buffer space 107.

When the first data is the first data 1 generated by the master APP module 101, the master APP module 101 sends the to-be-sent first data 1 to the master QUIC module 102, and the master QUIC module 102 first buffers the first data 1 in the first instance send buffer space 106. The master QUIC module 102 obtains the first data 1 from the first instance send buffer space 106, encapsulates the first data 1 into a first packet, where a payload of the first packet includes the first data 1, and buffers the first packet in the first packet send buffer space 104. After buffering the first packet in the first packet send buffer space 104, the master QUIC module 102 deletes the first data 1 from the first instance send buffer space 106. The master QUIC module 102 obtains the first packet from the first packet send buffer space 104, and sends the first packet to the communication peer device by using the connection instance. After successfully sending the first packet, the master QUIC module 102 deletes the first packet from the first packet send buffer space 104.

When the first data is the first data 2 sent by the communication peer device, the master QUIC module 102 receives a second packet sent by the communication peer device, where a payload of the second packet includes the first data 2, and buffers the second packet in the first packet receive buffer space 103. The master QUIC module 102 obtains the second packet from the first packet receive buffer space 103, parses the second packet to obtain the first data 2, and buffers the first data 2 in the first instance receive buffer space 105. After buffering the first data 2 in the first instance receive buffer space 105, the master QUIC module 102 deletes the second packet from the first packet receive buffer space 103. The master QUIC module 102 obtains the first data 2 from the first instance receive buffer space 105, and sends the first data 2 to the master APP module 101. The master APP module 101 receives the first data 2, and stores the first data 2 in the first APP receive buffer space 107. After sending the first data 2 to the master APP module 101, the master QUIC module 102 deletes the first data 2 from the first instance receive buffer space 105.

In some embodiments, refer to FIG. 8. The master module 10 further includes a first APP send buffer space 108, and the slave module 20 further includes a second APP send buffer space 208, where the second APP send buffer space 208 is for backing up the first APP send buffer space 108.

Before sending the first data 1 to the master QUIC module 102, the master APP module 101 buffers the first data 1 in the first APP send buffer space 108. After sending the first data 1 to the master QUIC module 102, the master APP module 101 deletes the first data 1 from the first APP send buffer space 108.

In some embodiments, refer to FIG. 7 or FIG. 8. The master module 10 and the slave module 20 included in the system 100 are located on a same device, or the master module 10 and the slave module 20 are located on different devices.

In some embodiments, the master module 10 and the slave module 20 are located on the same device, the master module 10 is located on a master main board (master main board, MMB), and the slave module 20 is located on a slave main board (slave main board, SMB). Optionally, the MMB communicates with the SMB through an internal connection, and the internal connection includes a switch board (switch fabric), a system bus, or the like.

In some embodiments, a device in the system 100 may be a virtual device or a physical device, and the virtual device may be a virtual machine, a container, or the like.

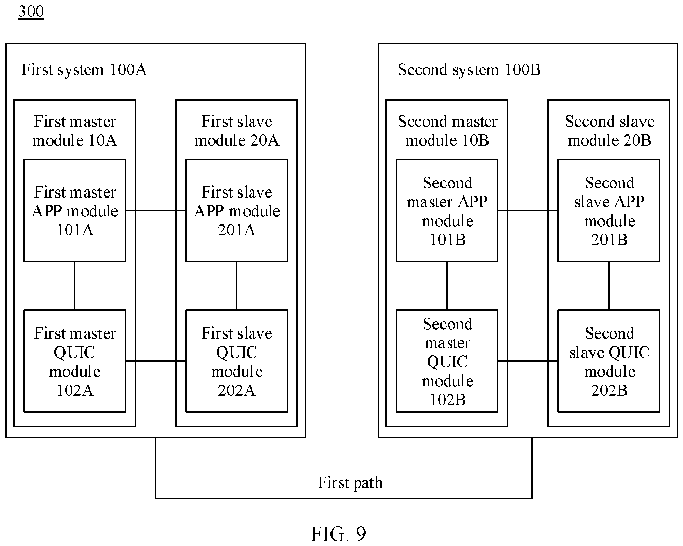

Refer to FIG. 9. An embodiment of this application provides a network architecture 300. The network architecture 300 includes a first system 100A and a second system 100B. The first system 100A communicates with the second system 100B based on the QUIC protocol. For a detailed structure of the first system 100A and a detailed structure of the second system 100B, refer to a structure of the system 100 provided in the embodiment shown in FIG. 7 or FIG. 8. The second system 100B is a communication peer device of the first system 100A. Likewise, the first system 100A is a communication peer device of the second system 100B.

In some embodiments, the first system 100A and the second system 100B exchange data for implementing an application service, so that the first system 100A and the second system 100B provide the application service.

In some embodiments, the first system 100A is located on a client side, and the second system 100B is located on a server side. For example, a device included in the first system 100A is a terminal device, and a device included in the second system 100B is a server. That is, the first system 100A includes at least one terminal device, and the second system 100B includes at least one server. The terminal device may be an electronic device such as a mobile phone, a tablet computer, a game host, an e-book reader, a multimedia playback device, a wearable device, or a PC (Personal Computer, personal computer). The second system 100B may include one server, or may include a plurality of servers. The second system 100B may be a server cluster formed by the plurality of servers. For example, the second system 100B is a cloud computing service center.

For ease of description, a master module 10A and a slave module 20A included in the first system 100A are respectively referred to as a first master module 10A and a first slave module 20A. A master APP module 101A and a master QUIC module 102A in the first master module 10A are respectively referred to as a first master APP module 101A and a first master QUIC module 102A. A slave APP module 201A and a slave QUIC module 202A in the first slave module 20A are respectively referred to as a first slave APP module 201A and a first slave QUIC module 202A.

Similarly, for ease of description, a master module 10B and a slave module 20B included in the second system 100B are respectively referred to as a second master module 10B and a second slave module 20B. A master APP module 101B and a master QUIC module 102B in the second master module 10B are respectively referred to as a second master APP module 101B and a second master QUIC module 102B. A slave APP module 201B and a slave QUIC module 202B in the second slave module 20B are respectively referred to as a second slave APP module 201B and a second slave QUIC module 202B.

The first system 100A includes a first connection instance, the second system 100B includes a second connection instance, the first connection instance corresponds to the second connection instance, both the first connection instance and the second connection instance include a first path, and the first path is a path between the first system 100A and the second system 100B. Connection instances between the first system 100A and the second system 100B include the first connection instance and the second connection instance.

A process in which the first system 100A sends first data 1 to the second system 100B is as follows:
The first master APP module 101A generates the first data 1. Optionally, a first APP send buffer space corresponding to the first master APP module 101A is for buffering the to-be-sent first data 1 generated by the first master APP module 101. To be specific, the first master APP module 101A first buffers the first data 1 in the first APP send buffer space, and the first master APP module 101A waits to send the first data 1 to the first master QUIC module 102A.

The first master APP module 101A sends the first data 1 and an identifier of a stream instance to the first master QUIC module 102A. Optionally, the first master APP module 101A reads the first data 1 from the first APP send buffer space, and sends the first data 1 and the identifier of the stream instance to the first master QUIC module 102A. The first master QUIC module 102A buffers the first data 1 in a first instance send buffer space corresponding to the stream instance, and the first master QUIC module 102A waits to encapsulate the first data 1 into a to-be-sent packet. After successfully sending the first data 1, the first master APP module 101A further deletes the first data 1 from the first APP send buffer space.

The first master QUIC module 102A encapsulates the first data 1 into a first packet, where a packet header of the first packet includes an identifier of the first connection instance, an identifier of the second connection instance, and the identifier of the stream instance, and a payload of the first packet includes the first data 1. The first connection instance and the second connection instance are respectively a source connection instance and a destination connection instance of the first packet, the stream instance is carried on the first connection instance and the second connection instance, and the first packet is a part of a byte stream transmitted by using the stream instance. Optionally, the first master QUIC module 102A reads the first data 1 from the first instance send buffer space, encapsulates the first data into the first packet, buffers the first packet in a first packet send buffer space, and waits to send the first packet to the second system 100B. After buffering the first packet in the first packet send buffer space, the first master QUIC module 102A deletes the first data from the first instance send buffer space.

The first master QUIC module 102A sends the first packet to the second system 100B through the first path. Optionally, the first master QUIC module 102A reads the first packet from the first packet send buffer space, sends the first packet to the second system 100B, and deletes the first packet from the first packet send buffer space after successfully sending the first packet.

A process in which the first system 100A receives first data 2 sent by the second system 100B is as follows:
The first master QUIC module 102A receives, through the first path, a second packet sent by the second system 100B. A packet header of the second packet includes the identifier of the first connection instance, the identifier of the second connection instance, and the identifier of the stream instance, a payload of the second packet includes the first data 2, and the first packet is a part of the byte stream transmitted by using the stream instance. The first connection instance and the second connection instance are respectively a destination connection instance and a source connection instance of the second packet. Optionally, the first master QUIC module 102A buffers the second packet in a first packet receive buffer space, and the first master QUIC module 102A waits to parse the second packet.

The first master QUIC module 102A parses the second packet to obtain the first data 2 and the identifier of the stream instance. Optionally, the first master QUIC module 102A reads the second packet from the first packet receive buffer space, and parses the second packet to obtain the first data 2 and the identifier of the stream instance. The first master QUIC module 102A buffers, based on the identifier of the stream instance, the first data 2 in a first instance receive buffer space corresponding to the stream instance, and waits to send the first data 2 to the first master APP module 101A. The first master QUIC module 102A deletes the second packet from the first packet receive buffer space.

The first master QUIC module 102A sends the first data 2 to the first master APP module 101A. Optionally, the first master QUIC module 102A obtains the first data 2 from the first instance receive buffer space. The first data 2 is consecutive to data that is last sent by the first master QUIC module 102A to the first master APP module 101A. The first master QUIC module 102A sends the first data 2 to the first master APP module 101A. The first master APP module 101A buffers the first data 2 in a first APP receive buffer space, and the first master QUIC module 101A deletes the first data 2 from the first instance receive buffer space.

The first master APP module 101A reads the first data from the first APP receive buffer space, and provides the application service based on the first data.

In the first system 101A, the first slave module 20A is a backup module of the first master module 10A. When the first master module 10A sends the data to the second system 100B, or the first master module 101A receives the data sent by the second system 100B, the first slave module 20A backs up a process of processing first data (the first data 1 or the first data 2) by the first master module 10A. After the backup is completed, horizontal consistency is maintained between the first slave module 20A and the first master module 10A, and vertical consistency is maintained between the first slave APP module 201A and the first slave QUIC module 202A in the first slave module 20A and between the first master APP module 101A and the first master QUIC module 102A in the first master module 10A. Detailed implementation is described in a subsequent example.

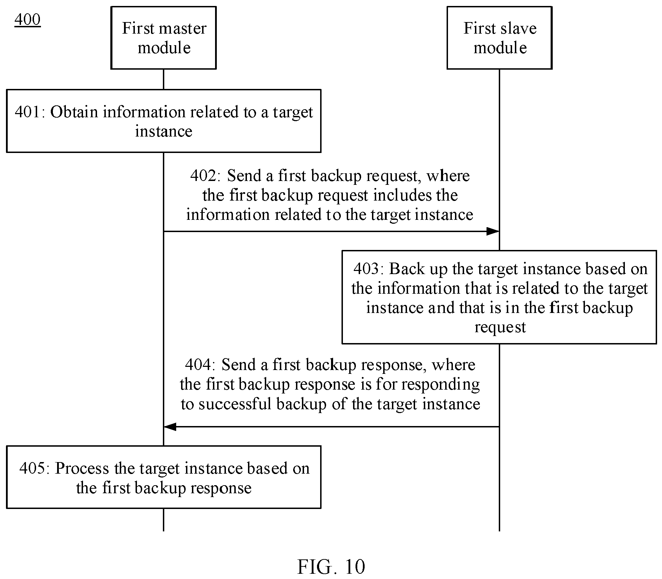

Refer to FIG. 10. An embodiment of this application provides an instance creation method 400. For ease of description, an entity for performing the method 400 is referred to as a communication local device. A structure of the communication local device is a structure of the system 100 shown in FIG. 7 or FIG. 8, and the communication local device includes a first master module and a first slave module. The communication local device communicates with a communication peer device based on the QUIC protocol. The communication peer device includes a second master module and a second slave module. A structure of the communication peer device is also the structure of the system 100 shown in FIG. 7 or FIG. 8.

For example, the method 400 is described by using an example in which the communication local device is the first system 100A in the network architecture 300 shown in FIG. 9 and the communication peer device is the second system 100B in the network architecture 300 shown in FIG. 9. The method 400 includes the following steps.

Step 401: The first master module obtains information related to a target instance.

In some embodiments, the information related to the target instance includes instance data of the target instance, and the instance data includes an identifier of the target instance.

The first master module includes a first master APP module and a first master QUIC module. The target instance includes a QUIC protocol-based first connection instance and/or a QUIC protocol-based stream instance. Optionally, the stream instance is carried on the first connection instance.

In step 401, the first master module creates the target instance, to obtain the instance data of the target instance. During implementation, the first master QUIC module in the first master module creates the target instance and obtains the instance data of the target instance. The instance data of the target instance includes instance data of the first connection instance and/or first instance data of the stream instance. Optionally, the instance data of the first connection instance includes an identifier of the first connection instance, and the first instance data of the stream instance includes an identifier of the stream instance. That is, the identifier of the target instance includes the identifier of the first connection instance and/or the identifier of the stream instance.

In some embodiments, that the first master QUIC module creates the target instance includes: The first master QUIC module creates the first connection instance. Optionally, that the first master QUIC module creates the target instance further includes: The first master QUIC module creates one or more stream instances carried on the first connection instance.

In some embodiments, if the communication local device is a system located on a client side, the communication peer device is a system located on a server side. The first master module in the communication local device creates the first connection instance in an active mode, and the second master module in the communication peer device creates a second connection instance corresponding to the first connection instance in a passive mode. The second master module includes a second master APP module and a second master QUIC module.

The active mode means that the first master APP module in the first master module actively triggers the first master QUIC module to create the first connection instance. During implementation, the first master APP module sends a first creation command to the first master QUIC module. The first creation command includes information such as an address and a port number of the communication peer device. The first master QUIC module receives the first creation command, and creates the first connection instance based on the information such as the address and the port number of the communication peer device.

The passive mode means that the second master QUIC module in the second master module is triggered by the first master module of the communication local device to create the second connection instance. The active mode and passive mode will be described in detail below.

In some embodiments, if the first master APP module needs the first master QUIC module to create the stream instance after creating the first connection instance, the first creation command further includes a service identifier. In this case, the first creation command is for indicating the first master QUIC module to create the stream instance carried on the first connection instance after creating the first connection instance. The stream instance is for transmitting service data corresponding to the service identifier. After the first master APP module creates the first connection instance, if the first master APP module needs to create the stream instance when the first master APP module needs to transmit service data to the communication peer device, the first master APP module sends a second creation command to the first master QUIC module. The second creation command includes a service identifier. The first master QUIC module receives the second creation command, and creates the stream instance carried on the first connection instance. The stream instance is for transmitting service data corresponding to the service identifier. Optionally, the first creation command or the second creation command further includes n service identifiers, where n is an integer greater than 0. In this way, n stream instances can be created, and the n stream instances are in a one-to-one correspondence with the n service identifiers.

In some embodiments, the first connection instance includes a first path, the second connection instance also includes the first path, the first path of the first connection instance is the same as that of the second connection instance, and the first path is a path between the communication local device and the communication peer device.

In some embodiments, the stream instance corresponds to a first instance send buffer space, a first instance receive buffer space, a second instance send buffer space, and a second instance receive buffer space in the communication local device. The first instance send buffer space, the first instance receive buffer space, the second instance send buffer space, and the second instance receive buffer space are four different buffer spaces in the communication local device.

Similarly, the stream instance corresponds to a first instance send buffer space, a first instance receive buffer space, a second instance send buffer space, and a second instance receive buffer space in the communication peer device. The first instance send buffer space, the first instance receive buffer space, the second instance send buffer space, and the second instance receive buffer space are four different buffer spaces in the communication peer device.

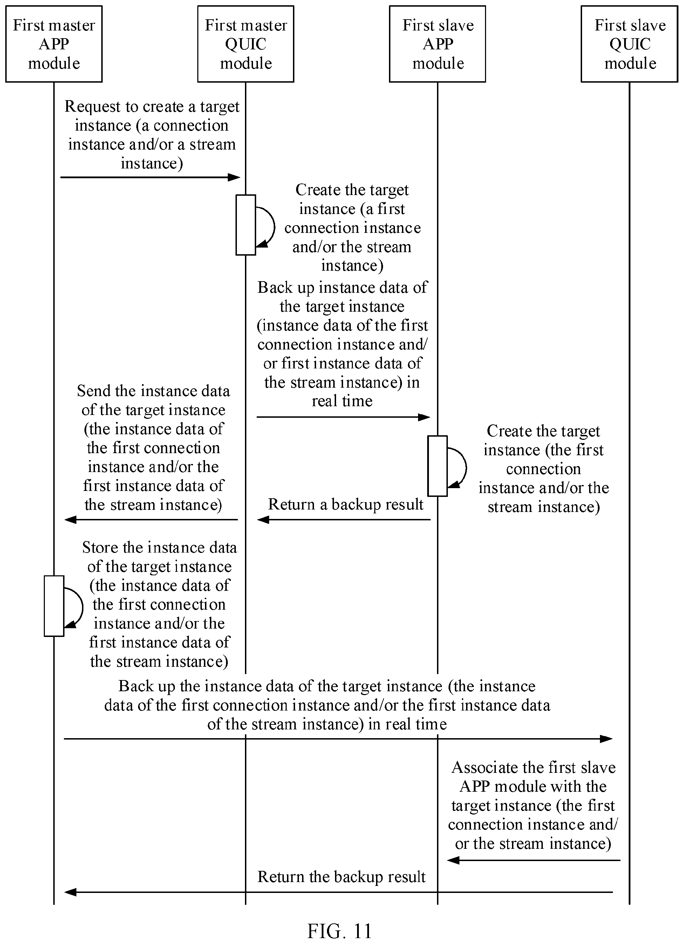

Refer to FIG. 11. The first master APP module in the first master module requests the first master QUIC module to create the target instance, to be specific, requests to create the first connection instance and/or the stream instance. The first master QUIC module creates the first connection instance to obtain the instance data of the first connection instance, and/or creates the stream instance to obtain the first instance data of the stream instance.

Next, a process of obtaining the instance data of the first connection instance and instance data of the second connection instance is described through operations of the following steps 4011 to 4016.

4011: The first master QUIC module in the first master module receives the first creation command, and sends a path establishment request to the communication peer device based on the information such as the address and the port number of the communication peer device, where the path establishment request is for requesting to establish the first path between the communication local device and the communication peer device.

4012: The second master QUIC module in the second master module receives the path establishment request, and establishes the first path with the first master QUIC module.

After the first path is established, the first master QUIC module performs an operation of the following 4013, and the second master QUIC module performs an operation of the following 4014.

4013: The first master QUIC module allocates the identifier of the first connection instance, and sends the identifier of the first connection instance to the second master QUIC module through the first path.

4014: The second master QUIC module allocates an identifier of the second connection instance, and sends the identifier of the second connection instance to the first master QUIC module through the first path.

There is no fixed sequence of performing the operation of 4013 and the operation of 4014. The operations of 4013 and 4014 may be performed simultaneously, the operation of 4013 is performed before the operation of 4014, or the operation of 4014 is performed before the operation of 4013.

4015: The first master QUIC module receives the identifier of the second connection instance, and obtains the instance data of the first connection instance, where the instance data of the first connection instance includes the identifier of the first connection instance.

In some embodiments, in addition to the identifier of the first connection instance, the instance data of the first connection instance may further include one or more of the following information: the identifier of the second connection instance, path identification information of the first path, key information, or the like.

4016: The second master QUIC module receives the identifier of the first connection instance, and obtains the instance data of the second connection instance, where the instance data of the second connection instance includes the identifier of the second connection instance.

In some embodiments, in addition to the identifier of the second connection instance, the instance data of the second connection instance may further include the identifier of the first connection instance, the path identification information of the first path, or the key information.

In some embodiments, the path identification information of the first path includes quintuple information, quadruplet information, or the like that corresponds to the first path. The quadruplet information includes an address of the communication local device, the address of the communication peer device, a port number corresponding to the first path in the communication local device, and a port number corresponding to the first path in the communication peer device. In addition to the quadruplet information, the quintuple information further includes a communication protocol used by the first path.

There is no fixed sequence of performing the operation of 4015 and the operation of 4016. The operations of 4015 and 4016 may be performed simultaneously, the operation of 4015 is performed before the operation of 4016, or the operation of 4016 is performed before the operation of 4015.

In some embodiments, when the first creation command further includes indication information, or when the first master QUIC module receives the second creation command sent by the first master APP module, the stream instance is created through the following operations of 4111 to 4113. The operations of 4111 to 4113 are as follows:

4111: The first master QUIC module allocates the identifier of the stream instance, the first instance send buffer space of the stream instance, and the first instance receive buffer space of the stream instance, to obtain the first instance data of the stream instance.

In 4111, the first master QUIC module allocates two buffer spaces in the communication local device, uses one buffer space as the first instance receive buffer space of the stream instance in the communication local device, and uses the other buffer space as the first instance send buffer space of the stream instance in the communication local device. In this way, the stream instance is created, and the identifier of the stream instance is allocated.

In addition to the identifier of the stream instance, the first instance data may further include the identifier of the first connection instance, the service identifier, a size of the first instance send buffer space, a size of the first instance receive buffer space, and the like. The service identifier is a service identifier of a service corresponding to the stream.

4112: The first master QUIC module sends the identifier of the stream instance to the second master QUIC module through the first path.

4113: The second master QUIC module receives the identifier of the stream instance through the first path, determines that the first path belongs to the second connection instance, and obtains second instance data of the stream instance.

In 4113, the second master QUIC module allocates two buffer spaces in the communication peer device, uses one buffer space as the first instance receive buffer space of the stream instance in the communication peer device, and uses the other buffer space as the first instance send buffer space of the stream instance in the communication peer device. In addition to the identifier of the stream instance, the second instance data of the stream instance further includes content such as the identifier of the second connection instance, the service identifier, a size of the first instance send buffer space, and a size of the first instance receive buffer space.

If the first creation command or the second creation command further includes n stream instances that need to be created, the n stream instances are created through the foregoing operations of 4111 to 4113.

In some embodiments, the communication local device is a system located on a server side, and the first master module creates the target instance in a passive mode. The passive mode means that the first master QUIC module in the first master module is triggered by the communication peer device to create the target instance. A process in which the first master QUIC module creates the target instance in the passive mode is the same as a process in which the second master QUIC module creates the second connection instance in the passive mode. Details are not described herein again.

Step 402: The first master module sends a first backup request to the first slave module, where the first backup request includes the information related to the target instance.

The first slave module includes a first slave APP module and a first slave QUIC module. Refer to FIG. 11. In step 402, the first master QUIC module in the first master module backs up the information related to the target instance to the first slave QUIC module in the first slave module in real time, that is, backs up the instance data of the target instance in real time. In other words, the first master QUIC module in the first master module sends the first backup request to the first slave QUIC module in the first slave module, where the first backup request includes the instance data of the first connection instance and/or the first instance data of the stream instance.

Step 403: The first slave module receives the first backup request, and backs up the target instance based on the information that is related to the target instance and that is in the first backup request.

In some embodiments, exchange of information related to creation of the target instance is completed between the first slave QUIC module included in the first slave module and the first slave APP module in the first slave module, to back up the target instance. Because the information related to the target instance is exchanged between the first slave QUIC module and the first slave APP module, the first slave APP module is associated with the target instance. In this way, when the first slave module replaces the master module, the first slave module can immediately transmit data between the first slave APP module and the communication peer device by using the target instance.

Refer to FIG. 11. The first slave QUIC module in the first slave module receives the first backup request, where the instance data of the target instance in the first backup request includes the instance data of the first connection instance and/or the first instance data of the stream instance. The target instance is created based on the first backup request. That is, the first connection instance and/or the stream instance are/is created based on the first backup request.

In some embodiments, when the first backup request includes the instance data of the first connection instance, the first slave QUIC module stores the instance data of the first connection instance, to back up the first connection instance.

In some embodiments, when the first backup request includes the first instance data of the stream instance, the first instance data of the stream instance includes the identifier of the first connection instance, the size of the first instance receive buffer space and/or the size of the first instance send buffer space, and the like. The first slave QUIC module allocates two buffer spaces in the communication local device, uses one buffer space as the second instance send buffer space of the first connection instance, and uses the other buffer space as the second instance receive buffer space of the first connection instance. The size of the first instance receive buffer space is equal to a size of the second instance receive buffer space, and the size of the first instance send buffer space is equal to a size of the second instance send buffer space. In addition, the first slave QUIC module stores the first instance data of the stream instance, to back up the stream instance.

Step 404: The first slave module sends a first backup response to the first master module, where the first backup response is for responding to successful backup of the target instance.

Refer to FIG. 11. In step 404, the first slave QUIC module in the first slave module sends the first backup response to the first master QUIC module in the first master module.

In some embodiments, the first backup response includes a backup result, and the backup result is that the backup succeeds.

Step 405: The first master module receives the first backup response, and processes the target instance based on the first backup response.

In step 405, the first master QUIC module in the first master module receives the first backup response, and the exchange of the information related to the creation of the target instance is completed between the first master QUIC module in the first master module and the first master APP module in the first master module based on the first backup response. In other words, the exchange of the instance data of the creation of the target instance is completed between the first master QUIC module and the first master APP module.

If the backup result in the first backup response is that the backup fails, the foregoing steps 402 and 403 are performed again, that is, the first master module sends the first backup request to the first slave module again.

In step 405, the following operations of 4051 to 4054 are for processing the target instance, and the operations of 4051 to 4054 are as follows:
4051: The first master QUIC module sends the instance data of the target instance to the first master APP module.

That is, in 4051, the first master QUIC module sends the instance data of the first connection instance and/or the first instance data of the stream instance to the first master APP module. That is, refer to FIG. 11. The first master QUIC module backs up the instance data of the target instance to the first slave QUIC module in real time.

The first master QUIC module is further associated with the first master APP module and the first connection instance, and/or the first master QUIC module is further associated with the first master APP module and the stream instance. During implementation, the first master QUIC module stores a correspondence between an identifier of a first master APP module and an identifier of a first connection instance, to associate the first master APP module with the first connection instance. The first master QUIC module stores a correspondence between an identifier of a first master APP module and an identifier of a stream instance, to associate the first master APP module with the stream instance.

4052: The first master APP module receives the instance data of the target instance, and sends a second backup request to the first slave APP module, where the second backup request includes the instance data of the target instance.

In some embodiments, refer to FIG. 11. The first master APP module further stores the instance data of the target instance. The first master APP module backs up the instance data of the target instance to the first slave APP module in real time.

4053: The first slave APP module receives the second backup request, and sends an association request to the first slave QUIC module, where the association request includes the instance data of the target instance.

In some embodiments, the first slave APP module further stores the instance data of the target instance.

4054: The first slave QUIC module receives the association request, and associates the target instance with the first slave APP module based on the association request.

The association request includes the instance data of the target instance, and the instance data includes the instance data of the first connection instance and/or the first instance data of the stream instance. Associating the target instance with the first slave APP module means associating the first slave APP module with the first connection instance on the first slave QUIC module, and/or associating the first slave APP module with the stream instance on the first slave QUIC module. During implementation, the first slave QUIC module stores a correspondence between an identifier of a first slave APP module and an identifier of a first connection instance, to associate the first slave APP module with the first connection instance. The first slave QUIC module stores a correspondence between an identifier of a first slave APP module and an identifier of a stream instance, to associate the first slave QUIC module with the stream instance.

In some embodiments, the first slave QUIC module sends an association response to the first slave APP module. The first slave APP module receives the association response, and sends a second backup response to the first master APP module. The second backup response includes a backup result, and the backup result is that backup succeeds.

In the communication peer device, the second master module sends the instance data of the second connection instance and/or the second instance data of the stream instance to the second slave module, and the second slave module backs up the second connection instance based on the instance data of the second connection instance, and/or backs up the stream instance based on the second instance data of the stream instance.

In this embodiment of this application, the first master module creates the target instance, and sends the first backup request to the first slave module. The first backup request includes the instance data of the target instance, and the instance data of the target instance includes the instance data of the first connection instance and/or the first instance data of the stream instance. The first slave module backs up the first connection instance based on the instance data of the first connection instance, and/or backs up the stream instance based on the first instance data of the stream instance. In this way, when the first master module is faulty, the first slave module replaces the first master module, and immediately uses the backed up first connection instance and/or stream instance, to continue to exchange, with the communication peer device, data for implementing an application service, to avoid interruption of the application service transmitted between the communication local device and the communication peer device.

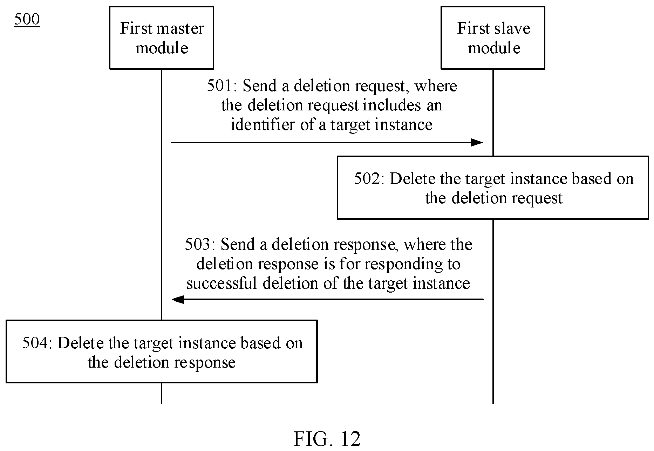

Refer to FIG. 12. An embodiment of this application provides an instance deletion method 500. The method 500 is applied to the system 100 shown in FIG. 7 or FIG. 8. For example, the method 500 is applied to the first system 100A or the second system 100B shown in FIG. 9. In the method 500, an instance that needs to be deleted may be a target instance created by using the method 400 shown in FIG. 10. The method 500 includes the following steps:
Step 501: A first master module sends a deletion request to a first slave module, where the deletion request includes an identifier of the target instance.
Step 502: The first slave module receives the deletion request, and deletes the target instance based on the deletion request.
Step 503: The first slave module sends a deletion response to the first master module, where the deletion response is for responding to successful deletion of the target instance.

The deletion request is for requesting to delete the target instance. The deletion request includes a first deletion request and a second deletion request. The first deletion request is for requesting a first slave APP module in the first slave module to delete the target instance. The second deletion request is for requesting a first slave QUIC module in the first slave module to delete the target instance. The deletion response includes a first deletion response corresponding to the first deletion request and a second deletion response corresponding to the second deletion request.

The target instance includes a first connection instance and/or a stream instance, and the stream instance is carried on the first connection instance. When the first connection instance is deleted, the stream instance carried on the first connection instance is also deleted. Alternatively, the stream instance carried on the first connection instance may be deleted, but the first connection instance is not deleted.

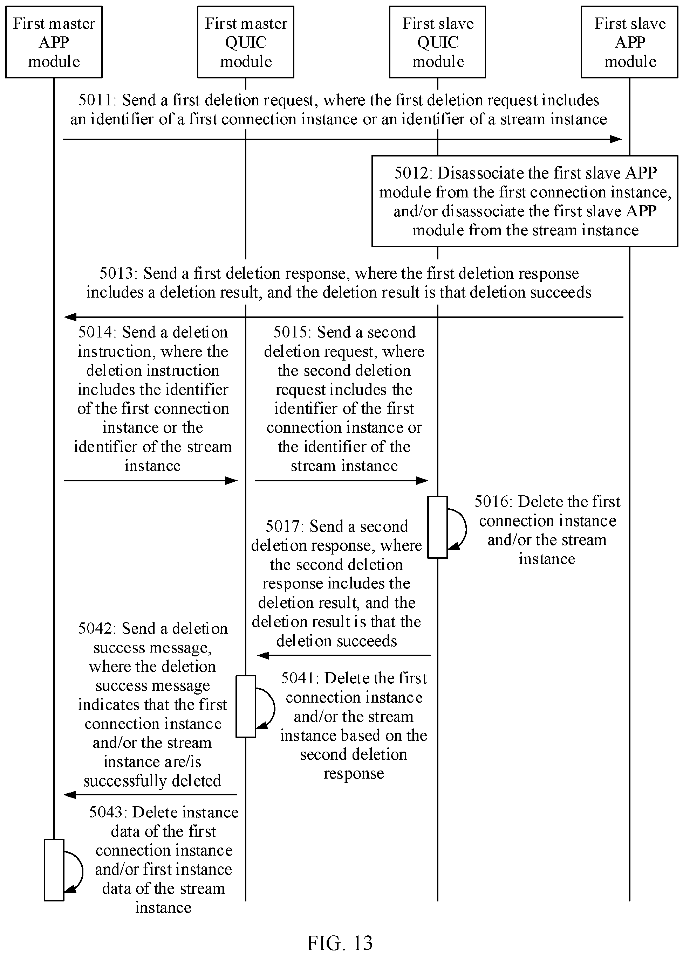

In steps 501 to 503, the first master module requests, through the following process of 5011 to 5017, the first slave module to delete the target instance. The following process is for deleting the first connection instance and/or the stream instance. In the following process, when the first connection instance is deleted, the stream instance is also deleted. Alternatively, the stream instance is deleted, but the first connection instance is not deleted. Refer to FIG. 13. The process of 5011 to 5017 is as follows:
5011: A first master APP module in the first master module sends the first deletion request to the first slave APP module in the first slave module, where the first deletion request includes an identifier of the first connection instance or an identifier of the stream instance, and the stream instance is carried on the first connection instance.
5012: The first slave APP module in the first slave module receives the first deletion request, and requests, based on the first deletion request, the first slave QUIC module in the first slave module to disassociate the first slave APP module from the first connection instance, and/or disassociate the first slave APP module from the stream instance.

In 5012, the first slave APP module sends a disassociation request to the first slave QUIC module, where the disassociation request includes the identifier of the first connection instance or the identifier of the stream instance. The first slave QUIC module receives the disassociation request.

When the disassociation request includes the identifier of the first connection instance, the first slave QUIC module deletes a correspondence between an identifier of a first slave APP module and an identifier of a first connection instance and a correspondence between an identifier of a first slave APP module and an identifier of a stream instance based on the identifier of the first connection instance included in the disassociation request. The first slave APP module also deletes stored instance data of the first connection instance and stored first instance data of the stream instance based on the identifier of the first connection instance included in the first deletion request.

When the disassociation request includes the identifier of the stream instance, the first slave APP module deletes the first instance data of the stream instance and a correspondence between an identifier of a first slave APP module and an identifier of a stream instance based on the identifier of the stream instance included in the disassociation request.

5013: The first slave APP module sends the first deletion response to the first master APP module, where the first deletion response includes a deletion result, and the deletion result is that the deletion succeeds.

5014: The first master APP module receives the first deletion response, and sends a deletion instruction to the first master QUIC module, where the deletion instruction includes the identifier of the first connection instance or the identifier of the stream instance.

5015: The first master QUIC module receives the deletion instruction, and sends the second deletion request to the first slave QUIC module in the first slave module, where the second deletion request includes the identifier of the first connection instance or the identifier of the stream instance.

5016: The first slave QUIC module receives the second deletion request, and deletes the first connection instance and/or the stream instance.

In some embodiments, when the second deletion request includes the identifier of the first connection instance, the first slave QUIC module releases a second instance receive buffer space and a second instance send buffer space of the stream instance carried on the first connection instance, deletes the first instance data of the stream instance, and then deletes the instance data of the first connection instance based on the identifier of the first connection instance included in the second deletion request.

In some embodiments, when the second deletion request includes the identifier of the stream instance, the first slave QUIC module releases a second instance receive buffer space and a second instance send buffer space of the stream instance, and deletes the first instance data of the stream instance based on the identifier of the stream instance included in the second deletion request.

In this way, the first slave module deletes the target instance through the operations of 5012 and 5016.

5017: The first slave QUIC module sends the second deletion response to the first master QUIC module, where the second deletion response includes the deletion result, and the deletion result is that the deletion succeeds.

Step 504: The first master module receives the deletion response, and deletes the target instance based on the deletion response.

In step 504, the first master QUIC module and the first master APP module in the first master module delete the target instance through the following process of 5041 to 5043. The process of 5041 to 5043 is as follows:

5041: The first master QUIC module in the first master module receives the second deletion response, and deletes the first connection instance and/or the stream instance based on the second deletion response.

In step 5041, when the deletion instruction received by the first master QUIC module includes the identifier of the first connection instance, the first master QUIC module disassociates the first master APP module from the first connection instance, and disassociates the first master APP module from the stream instance. In addition, the first master QUIC module deletes the instance data of the first connection instance, releases a first instance send buffer space and a first instance receive buffer space of the stream instance carried on the first connection instance, and deletes the first instance data of the stream instance.

When the deletion instruction received by the first master QUIC module includes the identifier of the stream instance, the first master QUIC module disassociates the first master APP module from the stream instance, and deletes the first instance data of the stream instance.

The first master QUIC module deletes a correspondence between an identifier of a first master APP module and an identifier of a first connection instance, to disassociate the first master APP module from the first connection instance. The first master QUIC module deletes a correspondence between an identifier of a first master APP module and an identifier of a stream instance, to disassociate the first master APP module from the stream instance.

5042: The first master QUIC module sends a deletion success message to the first master APP module, where the deletion success message indicates that the first connection instance and/or the stream instance are/is successfully deleted.

5043: The first master APP module receives the deletion success message, and deletes the instance data of the first connection instance and/or the first instance data of the stream instance.

In this embodiment of this application, when deleting the target instance, the first master module first requests the first slave module to delete the target instance, and the first master module deletes the target instance only after the first slave module successfully deletes the target instance. That is, the first master module deletes the target instance only after ensuring that the first slave module has successfully deleted the target instance, to ensure that both the first master module and the first slave module delete the target instance. In other words, after the target instance is deleted, horizontal consistency and vertical consistency are maintained between the first master module and the first slave module.

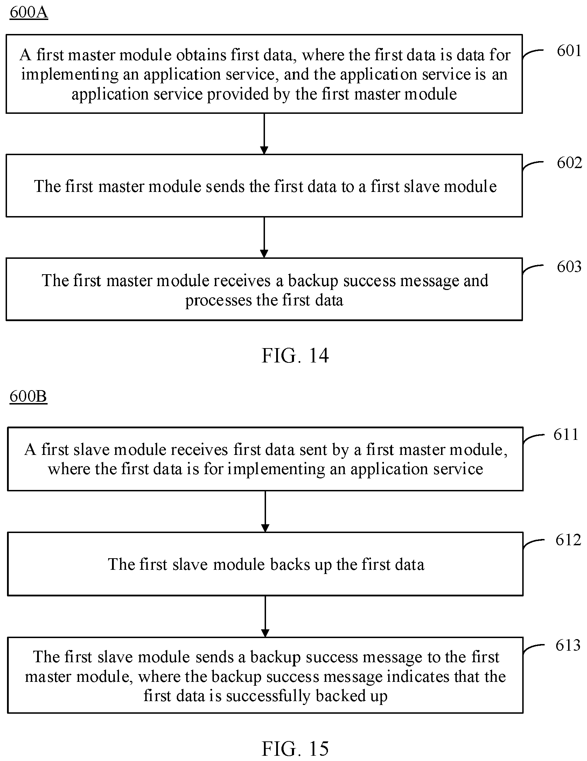

Refer to FIG. 14. This application provides a data sending method 600A. For ease of description, an entity for performing the method 600A is referred to as a communication local device. A structure of the communication local device is a structure of the system 100 shown in FIG. 7 or FIG. 8, and the communication local device includes a first master module and a first slave module. The communication local device communicates with a communication peer device based on the QUIC protocol. The communication peer device includes a second master module and a second slave module. A structure of the communication peer device is also the structure of the system 100 shown in FIG. 7 or FIG. 8.

For example, the method 600A is described by using an example in which the communication local device is the first system 100A in the network architecture 300 shown in FIG. 9 and the communication peer device is the second system 100B in the network architecture 300 shown in FIG. 9. Refer to FIG. 14. The method 600A includes the following steps.

Step 601: The first master module obtains first data, where the first data is data for implementing an application service, and the application service is an application service provided by the first master module.

The first master module includes a first master APP module and a first master QUIC module, and the first master APP module is configured to provide the application service.

In step 601, the first master module obtains the first data in the following two manners.

First manner: The first master module generates the first data. Optionally, the first master APP module in the first master module generates the first data. The first manner is applied to a case in which the first master module needs to send the first data to the communication peer device.

Second manner: The first master module receives the first data that is sent by the communication peer device based on the QUIC protocol. Optionally, the first master QUIC module in the first master module receives the first data that is sent by the communication peer device based on the QUIC protocol. The second manner is applied to a case in which the first master module receives the first data sent by the communication peer device.

In some embodiments, the application service is another application service above a transport layer, for example, an upper-layer communications protocol. The upper-layer communications protocol includes the border gateway protocol (border gateway protocol, BGP) and the like. The first data includes a BGP message and the like. For example, the first data includes a BGP update (Update) message and/or a BGP withdraw (Withdraw) message.

Step 602: The first master module sends the first data to the first slave module.

The first master module and the first slave module are located in a same system, and the first slave module is a backup module of the first master module.

The first slave module includes a first slave APP module and a first slave QUIC module, and the first slave APP module and the first slave QUIC module are respectively a backup module of the first master APP module and a backup module of the first master QUIC module.

In step 602, the first master QUIC module sends the first data to the first slave QUIC module.

The first slave module receives the first data, backs up the first data, and sends a backup success message to the first master module, where the backup success message indicates that the first data is successfully backed up.

The first slave QUIC module in the first slave module receives the first data, and exchange of the first data is completed between the first slave QUIC module and the first slave APP module, to back up the first data. Optionally, the first slave QUIC module sends the first data to the first slave APP module. The first slave QUIC module in the first slave module sends the backup success message to the first master QUIC module in the first master module.

When the first master module needs to send the first data to the communication peer device, the first slave QUIC module sends the first data to the first slave APP module, and the first slave APP module records data sent by the first slave APP module as the first data. In this way, both the data sent by the first slave APP module and data sent by a second master APP module are both the first data, and the two pieces of data are consistent.

When the first master module receives the first data from the communication peer device, the first slave QUIC module sends the first data to the first slave APP module, and the first slave APP module records data received by the first slave APP module as the first data. In this way, both the data received by the first slave APP module and data received by a second master APP module are the first data, and the two pieces of data are consistent.

Step 603: The first master module receives the backup success message and processes the first data.

In step 603, the first master QUIC module in the first master module receives the backup success message. The first master module obtains the first data in different manners, and accordingly processes the first data in different manners. In step 601, the first master module obtains the first data in the first manner and the second manner. Therefore, in step 603, the first master module processes the first data in the following two cases.

When the first master module obtains the first data in the first manner, the first master module sends the first data to the communication peer device over the QUIC protocol. Optionally, the first master QUIC protocol in the first master module sends the first data to the communication peer device by using a target instance. The target instance is an instance created by the first master module by using the method 400 shown in FIG. 10.

When the first master module obtains the first data in the second manner, the exchange of the first data is completed between the first master QUIC module and the first master APP module in the first master module. Optionally, the first master QUIC module sends the first data to the first master APP module, so that the first master APP module records data received by the first master APP module as the first data, which is consistent with that of the first slave APP module.

In this embodiment of this application, the first master module obtains the first data. Before the first master module processes the first data, the first master module sends the first data to the first slave module. The first slave module backs up the first data. After successfully backing up the first data, the first master module processes the first data. In this way, after the first data is backed up, it is ensured that both the first master module and the first slave module obtain the first data, so that data between the first master module and the first slave module is consistent, that is, horizontal consistency of the first data is maintained between the first master module and the first slave module. An operation of backing up the first data by the first slave module is a backup operation of processing the first data by the first master module. After the first data is backed up, first data processing progress of the first master module is also consistent with first data processing progress of the first slave module, that is, vertical consistency of the first data is maintained between the first master module and the first slave module. In this way, when the first master module is faulty, the first slave module starts, based on the data processing progress reported when the first master module is faulty, to process the data for implementing the application service. In this way, the first slave module can successfully become the master module, and continue to transmit the data for implementing the application service to the communication peer device, to avoid interruption of the application service between the communication local device and the communication peer device.

Refer to FIG. 15. This application provides a data receiving method 600B. For ease of description, an entity for performing the method 600B is referred to as a communication local device. A structure of the communication local device is a structure of the system 100 shown in FIG. 7 or FIG. 8, and the communication local device includes a first master module and a first slave module. The communication local device communicates with a communication peer device based on the QUIC protocol. The communication peer device includes a second master module and a second slave module. A structure of the communication peer device is also the structure of the system 100 shown in FIG. 7 or FIG. 8.

For example, the method 600B is described by using an example in which the communication local device is the first system 100A in the network architecture 300 shown in FIG. 9 and the communication peer device is the second system 100B in the network architecture 300 shown in FIG. 9. Refer to FIG. 15. The method 600B includes the following steps.

Step 611: The first slave module receives first data sent by the first master module, where the first data is for implementing an application service.

The first slave module is a backup module of the first master module, the first master module is configured to exchange the first data with the communication peer device based on the QUIC protocol, and the first master module is configured to provide the application service.

In step 611, a first slave QUIC module in the first slave module receives the first data.

The first data is data generated by the first master module or data that is sent by the communication peer device and that is received by the first master module.

Step 612: The first slave module backs up the first data.

In step 612, exchange of the first data is completed between the first slave QUIC module and a first slave APP module in the first slave module, to back up the first data. Optionally, the first slave QUIC module sends the first data to the first slave APP module.

If the first data is the data generated by the first master module, the first data is data that needs to be sent by the first master module to the communication peer device. The first slave QUIC module sends the first data to the first slave APP module, and the first slave APP module records data sent by the first slave APP module as the first data. In this way, both the data sent by the first slave APP module and data sent by a second master APP module are both the first data, and the two pieces of data are consistent.

If the first data is the data that is sent by the communication peer device and that is received by the first master module, the first slave QUIC module sends the first data to the first slave APP module, and the first slave APP module records data received by the first slave APP module as the first data. In this way, both the data received by the first slave APP module and data received by a second master APP module are the first data, and the two pieces of data are consistent.

Step 613: The first slave module sends a backup success message to the first master module, where the backup success message indicates that the first data is successfully backed up.

In step 613, the first slave QUIC module in the first slave module sends the backup success message to a first master QUIC module in the first master module.

In this embodiment of this application, the first slave module receives the first data sent by the first master module, and the first slave module backs up the first data, and sends the backup success message to the first master module, so that the first master module processes the first data. In this way, it is ensured that both the first master module and the first slave module obtain the first data. After the first data is backed up, data between the first master module and the first slave module is consistent, that is, horizontal consistency of the first data is maintained between the first master module and the first slave module. An operation of backing up the first data by the first slave module is a backup operation of processing the first data by the first master module. After the first data is backed up, first data processing progress of the first master module is also consistent with first data processing progress of the first slave module, that is, vertical consistency of the first data is maintained between the first master module and the first slave module. In this way, when the first master module is faulty, the first slave module starts, based on the data processing progress reported when the first master module is faulty, to process the data for implementing the application service. In this way, the first slave module can successfully become the master module, and continue to transmit the data for implementing the application service to the communication peer device, to avoid interruption of the application service between the communication local device and the communication peer device.

The method 600A described in FIG. 14 and the method 600B described in FIG. 15 are applied to a plurality of cases. For example, the method 600A and the method 600B are applied to a scenario in which the first master module backs up data to be backed up to the first slave module in batches after the first slave module in the communication local device goes online. In this scenario, after backing up the data to be backed up to the first slave module in batches, the first master module performs delimitation by using the method 600A and the method 600B. The delimitation includes delimitation in a receiving direction and delimitation in a sending direction. That the first slave module goes online means that a master/slave redundancy protection relationship is formed between the first slave module and the first master module. For example, when the first slave module starts running, the redundancy protection relationship is formed between the first slave module and the first master module. In this case, the first slave module goes online. Alternatively, when the first slave module is set as the backup module, the redundancy protection relationship is established between the first slave module and the first master module. In this case, the first slave module goes online.

The delimitation in the receiving direction means keeping an offset position of data received by the first master module consistent with an offset position of data received by the first slave module, where both the data received by the first master module and the data received by the first slave module are received data that is sent by the communication peer device.

The delimitation in the sending direction means keeping an offset position of data sent by the first master module consistent with an offset position of data sent by the first slave module, where both the data sent by the first master module and the data sent by the first slave module are data sent to the communication peer device.

For another example, the method 600A and the method 600B are applied to a scenario in which the communication local device sends data to the communication peer device. In this scenario, the first master module and the first slave module in the communication local device implement a dual sending mechanism by using the method 600A and the method 600B. The dual sending mechanism means that the first slave module simulates sending of data to the communication peer device, and the first master module sends the data to the communication peer device at a same moment.

For still another example, the method 600A and the method 600B are applied to a scenario in which the communication local device receives data sent by the communication peer device. In this scenario, the first master module and the first slave module in the communication local device implement a dual receiving mechanism by using the method 600A and the method 600B. The dual receiving mechanism means that the first slave module simulates receiving of data sent by the communication peer device, and the first master module receives the data sent by the communication peer device at a same moment.

The following separately describes in detail the different scenarios to which the method 600A and the method 600B are applied.

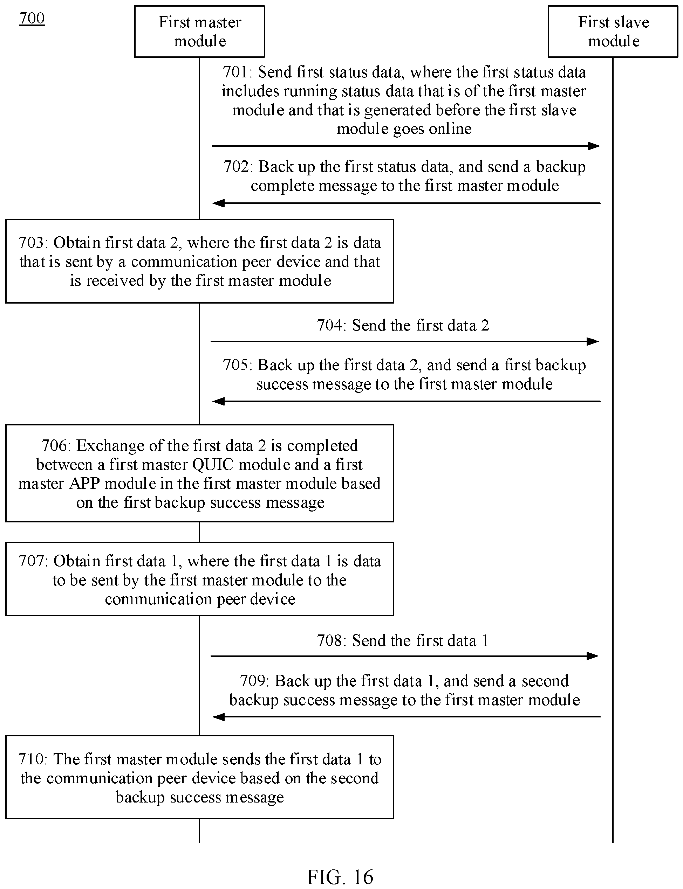

Refer to FIG. 16. The method 600A and the method 600B are applied to a scenario in which a first master module backs up data to be backed up to a first slave module in batches after the first slave module in a communication local device goes online. In this scenario, this application provides a batch backup method 700. The method includes the following steps.

Step 701: When the first slave module goes online, the first master module sends first status data to the first slave module, where the first status data includes running status data that is of the first master module and that is generated before the first slave module goes online.

In some embodiments, the first status data includes first inventory status data, and the first inventory status data includes running status data that is of a first master QUIC module and that is generated before the first slave module goes online. Optionally, the first inventory status data includes at least one of the following: a QUIC protocol-based first connection instance (instance data of the first connection instance), a QUIC protocol-based stream instance (first instance data of the stream instance), and data buffered in buffer spaces (a first instance receive buffer space and a first instance send buffer space) corresponding to the stream instance.

The stream instance is carried on the first connection instance. The first instance receive buffer space is for buffering data that is sent by a communication peer device and that is received by the first master QUIC module. The data in the first instance receive buffer space needs to be sent to a first master APP module. The first instance send buffer space is for buffering data that is sent by the first master APP module and that is received by the first master QUIC module, and the data in the first instance send buffer space needs to be sent to the communication peer device. The data in the first instance send buffer space and the data in the first instance receive buffer space belong to a byte stream corresponding to the stream instance.

The instance data of the first connection instance includes an identifier of the first connection instance, path identification information of a first path, an identifier of a second connection instance corresponding to the first connection instance and/or key information, and the like. The first instance data of the stream instance includes an identifier of the stream instance, a size of the first instance receive buffer space corresponding to the stream instance, a size of the first instance send buffer space corresponding to the stream instance and/or the identifier of the first connection instance, and the like.

In some embodiments, the first status data further includes second inventory status data, and the second inventory status data includes running status data that is of the first master APP module and that is generated before the first slave module goes online. Optionally, the second inventory status data includes at least one of the following: data buffered in a buffer space corresponding to the first master APP module, the instance data of the first connection instance, the first instance data of the stream instance, and dynamic running data of the first master APP module.

The buffer space corresponding to the first master APP module includes a first APP receive buffer space. The buffer space corresponding to the first master APP module may further include a first APP send buffer space. The first APP receive buffer space is for buffering data received by the first master APP module, and the first APP send buffer space is for buffering data to be sent by the first master APP module.

When the first slave module goes online, the first master module needs to back up the running status data of the first master module to the first slave module, so that a running status of the first slave module is consistent with a running status of the first master module. The first master module includes the first master APP module and the first master QUIC module, and the first slave module includes a first slave APP module and a first slave QUIC module. That a running status of the first slave module is consistent with a running status of the first master module includes that a running status of the first master APP module is consistent with a running status of the first slave APP module, and a running status of the first master QUIC module is consistent with a running status of the first slave QUIC module. During implementation, the first master APP module sends the second inventory status data to the first slave APP module, so that the running status of the first master APP module is consistent with the running status of the first slave APP module. The first master QUIC module sends the first inventory status data to the first slave QUIC module, so that the running status of the first master QUIC module is consistent with the running status of the first slave QUIC module.

In some embodiments, when the first slave QUIC module goes online, the first master QUIC module sends the first inventory status data to the first slave QUIC module. When the first slave APP module goes online, the first master APP module sends the second inventory status data to the first slave APP module.

In some embodiments, the communication local device includes high availability management (high availability management, HAM), and the HAM monitors each functional module in the communication local device, that is, monitors the first master APP module, the first slave APP module, the first master QUIC module, the first slave QUIC module, and the like in the communication local device. Initial statuses of the first slave APP module and the first slave QUIC module are off statuses. When detecting that the first slave APP module and the first slave QUIC module go online, the HAM notifies the first master APP module that the first slave APP module goes online, and notifies the first master QUIC module that the first slave QUIC module goes online.

In some embodiments, the first master APP module determines whether to use a batch backup function. If the batch backup function is used, the first master APP module sends the second inventory status data and notifies the first master QUIC module to send the first inventory status data.

Step 702: The first slave module receives the first status data, backs up the first status data, and sends a backup complete message to the first master module.

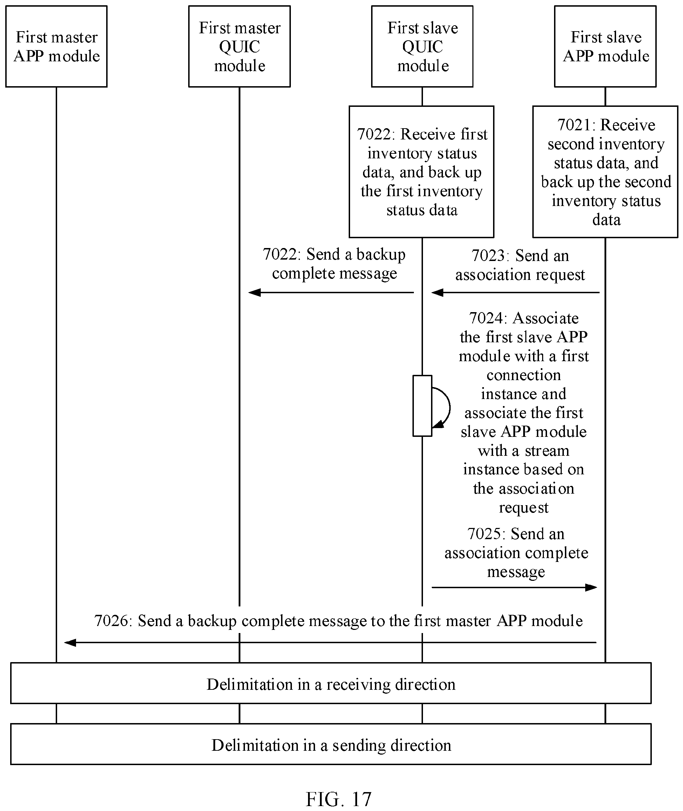

Refer to FIG. 17. In step 702, the first slave APP module and the first slave QUIC module in the first slave module back up the first status data through the following process of 7021 to 7026. The process of 7021 to 7026 is as follows:
7021: The first slave APP module receives the second inventory status data, and backs up the second inventory status data.

In 7021, the first slave APP module receives the second inventory status data, where the second inventory status data includes the data buffered in the buffer space corresponding to the first master APP module, the instance data of the first connection instance, the first instance data of the stream instance, and the running status data of the first master APP module. The first slave APP module buffers the data in the buffer space into a buffer space corresponding to the first slave APP module, and sets the running status of the first slave APP module based on the running status data, so that the running status of the first master APP module is consistent with the running status of the first slave APP module. In this way, when the first master APP module and/or the first master QUIC module in the first master module are/is faulty, the first slave module can successfully replace the first master module to continue to provide an application service.

Optionally, the buffer space corresponding to the first master APP module includes the first APP send buffer space and/or the first APP receive buffer space, and the buffer space corresponding to the first slave APP module includes a second APP send buffer space and/or a second APP receive buffer space. Therefore, the first slave APP module buffers the data in the first APP send buffer space into the second APP send buffer space, and/or the first slave APP module buffers the data in the first APP receive buffer space into the second APP receive buffer space.

7022: The first slave QUIC module receives the first inventory status data, backs up the first inventory status data, and sends a backup complete message to the first master QUIC module.

The first slave QUIC module receives the first inventory status data, where the first inventory status data includes the data buffered in the buffer spaces corresponding to the stream instance, the instance data of the first connection instance, and the first instance data of the stream instance. The instance data of the first connection instance includes the identifier of the first connection instance, the identifier of the second connection instance, the path identifier information of the first path and/or the key information, and the like. The first instance data of the stream instance includes the identifier of the stream instance, the identifier of the first connection instance, the size of the first instance receive buffer space and/or the size of the first instance send buffer space, and the like.

The first slave QUIC module allocates two buffer spaces in the communication local device, uses one buffer space as a second instance send buffer space of the stream instance, and uses the other buffer space as a second instance receive buffer space of the stream instance. The size of the first instance receive buffer space is equal to a size of the second instance receive buffer space, and the size of the first instance send buffer space is equal to a size of the second instance send buffer space.

The first slave QUIC module separately buffers the data in the first instance send buffer space and the data in the first instance receive buffer space into the second instance send buffer space and the second instance receive buffer space. In addition, the first slave QUIC module stores the instance data of the first connection instance and the first instance data of the stream instance. In this way, the first slave QUIC module also creates the first connection instance and the stream instance, and the first slave QUIC module sends the backup complete message to the first master QUIC module.

7023: The first slave APP module sends an association request to the first slave QUIC module, where the association request includes the identifier of the first connection instance and the identifier of the stream instance.

Generally, 7023 is performed after 7021. A difference between a time point at which the first slave QUIC module receives the first inventory status data and a time point at which the first slave APP module receives the second inventory status data is very small, and the difference between the two time points may be 0. Therefore, when the first slave APP module performs the operation of 7021, the first slave QUIC module also performs the operation of 7022, to ensure that after the first slave QUIC module receives the association request, the first slave QUIC module has created the first connection instance and the stream instance.

7024: The first slave QUIC module receives the association request, and associates the first slave APP module with the first connection instance and associates the first slave APP module with the stream instance based on the association request.

In 7024, the first slave QUIC module determines, based on the identifier of the first connection instance included in the association request, whether there is the first connection instance in the first slave QUIC module. When the first slave QUIC module determines that there is the first connection instance in the first slave QUIC module, the first slave QUIC module stores a correspondence between an identifier of a first slave APP module and an identifier of a first connection instance, to associate the first slave APP module with the first connection instance.

The first slave QUIC module determines, based on the identifier of the stream instance included in the association request, whether there is the stream instance in the first slave QUIC module. When the first slave QUIC module determines that there is the stream instance in the first slave QUIC module, the first slave QUIC module stores a correspondence between an identifier of a first slave APP module and an identifier of a stream instance, to associate the first slave APP module with the stream instance.

7025: The first slave QUIC module sends an association complete message to the first slave APP module.

7026: The first slave APP module receives the association complete message, and sends a backup complete message to the first master APP module.

The backup complete message sent by the first slave module to the first master module includes the backup complete message sent by the first slave APP module to the first master APP module and the backup complete message sent by the first slave QUIC module to the first master QUIC module.

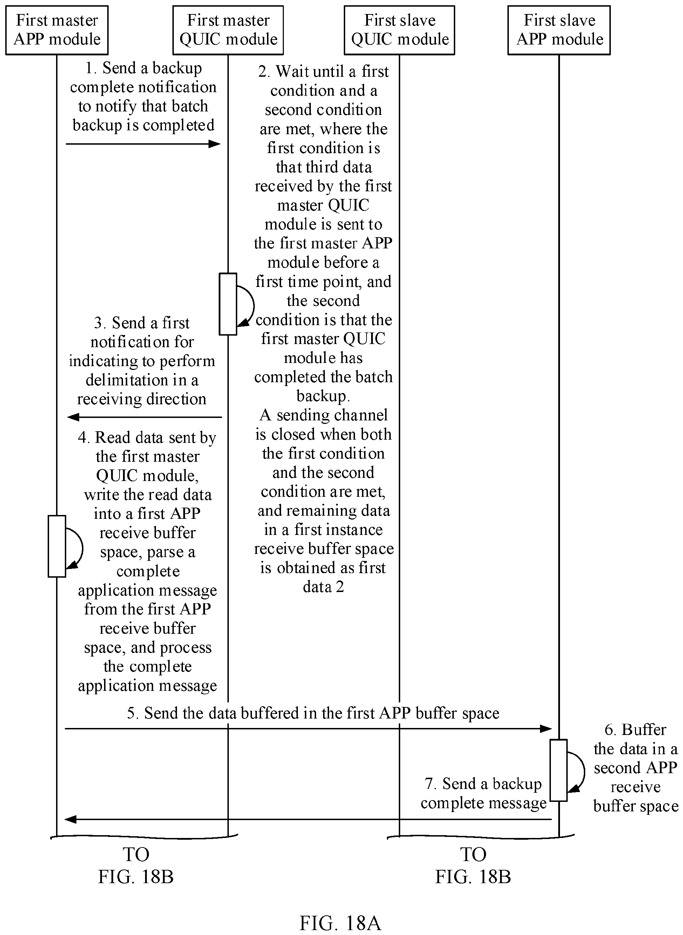

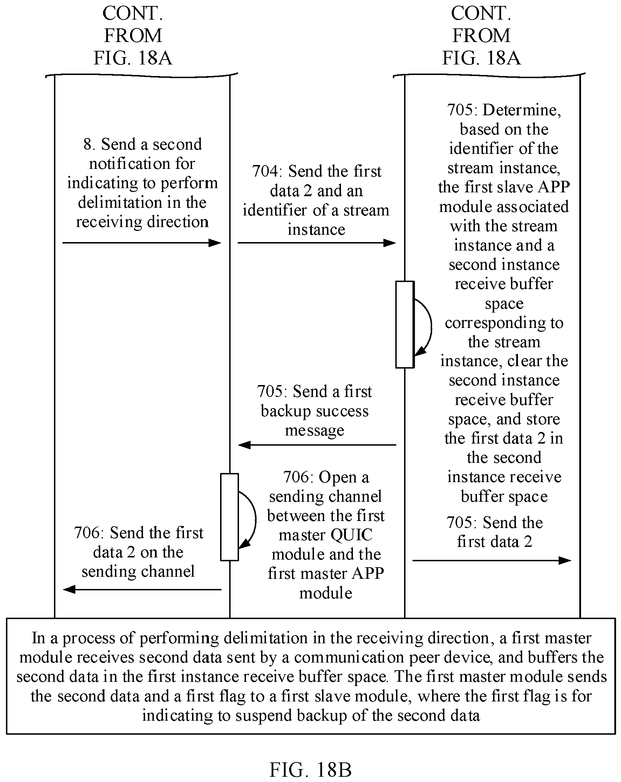

Refer to FIG. 18 A and FIG. 18B. After receiving the backup complete message sent by the first slave APP module, the first master APP module sends a backup complete notification to the first master QUIC module, to notify that batch backup is completed.

Next, the first master module and the first slave module implement delimitation in a receiving direction or delimitation in a sending direction by using the method 600A shown in FIG. 14 and the method 600B shown in FIG. 15. The first master module and the first slave module first perform delimitation in the receiving direction, and then perform delimitation in the sending direction; or first perform delimitation in the sending direction, and then perform delimitation in the receiving direction; or simultaneously perform delimitation in the receiving direction and delimitation in the sending direction.

The first master module and the first slave module implement the delimitation in the receiving direction through a process of the following steps 703 to 706 and implement the delimitation in the sending direction through a process of the following steps 707 to 710.

Step 703: The first master module obtains first data 2, where the first data 2 is the data that is sent by the communication peer device and that is received by the first master module.

In step 703, the first master QUIC module in the first master module receives the backup complete notification sent by the first master APP module, and then starts to obtain the first data 2 from the first instance receive buffer space.

The data buffered in the first instance receive buffer space is data obtained by the first master QUIC module by parsing a packet sent by the communication peer device. In addition, the data buffered in the first instance receive buffer space is data that has not been sent by the first master QUIC module to the first master APP module. The first master QUIC module further records an offset position of data last sent to the first master APP module.

In step 703, after receiving the backup complete message sent by the first master APP module and backing up the first inventory status data to the first slave QUIC module, the first master QUIC module in the first master module obtains the first data 2 from the first instance receive buffer space. Optionally, the first master QUIC module determines a stream instance associated with the first master APP module, and obtains the first data 2 from the first instance receive buffer space corresponding to the stream instance.

In some embodiments, the first master QUIC module obtains an identifier of a corresponding stream instance from a correspondence between an identifier of a master APP module and an identifier of a stream instance based on an identifier of the first master APP module. The stream instance corresponding to the obtained identifier is determined as the stream instance associated with the first master APP module.

In some embodiments, the first data 2 is consecutive to the data that is last sent by the first master QUIC module to the first master APP module. For example, it is assumed that the data last sent to the first master APP module is data that is of the 10^{th} to the 20^{th} bytes in a service and that is received by the communication local device, and the offset position of the data last sent to the first master APP module is 20. The first master QUIC module obtains the first data 2 from the first instance receive buffer space. It is assumed that the first data 2 is data of the 21 ^{st} to 30^{th} bytes in the service, the first data 2 is consecutive to the data last sent to the first master APP module.

In some embodiments, after obtaining the first data 2, the first master QUIC module sends, to the first master APP module, a first notification for indicating to perform delimitation in the receiving direction. The first master APP module receives the first notification for indicating to perform delimitation in the receiving direction, and sends the data buffered in the first APP receive buffer space to the first slave APP module. The first slave APP module receives the data, buffers the data in the second APP receive buffer space, and sends the backup complete message to the first master APP module. In this way, when the delimitation in the receiving direction begins, an offset position of the data received by the first master APP module is consistent with an offset position of the data received by the first slave APP module. The first master APP module receives the backup complete message, and sends, to the first master QUIC module, a second notification for indicating to perform delimitation in the receiving direction. The first master QUIC module receives the second notification for indicating to perform delimitation in the receiving direction, and starts to perform an operation of the following step 704.

In some embodiments, the first instance receive buffer space may further include third data, the third data is data that is sent by the communication peer device and that is received before a first time point, and the first time point is a time point at which the first slave module successfully backs up the first status data. Optionally, when receiving the backup complete notification sent by the first master APP module, the first master QUIC module determines that the first slave module successfully backs up the first status data, and obtains a time point at which the backup complete notification is received as the first time point.

In some embodiments, the third data is consecutive to the data that is last sent by the first master QUIC module to the first master APP module. The first master QUIC module sends the third data to the first master APP module, and then sends, to the first master APP module, the first notification for indicating to perform delimitation in the receiving direction. In this way, the first master APP module stores the third data in the first APP receive buffer space. After receiving the first notification for indicating to perform delimitation in the receiving direction, the first master APP module also backs up the third data to the first slave APP module.

Because the third data is consecutive to the data that is last sent by the first master QUIC module to the first master APP module, the first master QUIC module can send the third data to the first master APP module. In this way, the first master QUIC module first sends the third data to the first master APP module. The first master APP module can obtain the third data in advance, and provide the application service based on the third data, to improve efficiency of providing the application service.

In some embodiments, when the first master QUIC module sends, to the first master APP module, the first notification for indicating to perform delimitation in the receiving direction, the first master QUIC module closes a sending channel on which the data is sent to the first master APP module. This ensures that when the first master module backs up the first data 2 to the first slave module, the first master QUIC module is prevented from sending the data to the first master APP module.

The sending channel is a channel on which the first master QUIC module sends the data to the first master APP module.

After sending the third data to the first master APP module, the first master QUIC module deletes the third data from the first instance receive buffer space. Optionally, the first master QUIC module further updates an offset position of data sent by the first master QUIC module to the first master APP module to an end location of the third data.

Optionally, refer to FIG. 18 A and FIG. 18B. Conclusions are as follows: 1. The first master APP module sends the backup complete notification to the first master QUIC module, to notify, by using the backup complete notification, the first master QUIC module that the batch backup is completed. 2. After the first master APP module notifies that the first master APP module has completed the batch backup, the first master QUIC module waits until a first condition and a second condition are met, where the first condition is that the third data received by the first master QUIC module is sent to the first master APP module before the first time point, and the second condition is that the first master QUIC module has completed the batch backup. The sending channel is closed only when both the first condition and the second condition are met, and remaining data in the first instance receive buffer space is obtained as the first data 2. 3. The first master QUIC module sends, to the first master APP module, the first notification for indicating to perform delimitation in the receiving direction. 4. The first master APP module receives the first notification for indicating to perform delimitation in the receiving direction, reads the data sent by the first master QUIC module, writes the read data into the first APP receive buffer space, parses a complete application message from the first APP receive buffer space, and processes the complete application message. 5. The first master APP module sends, to the first slave APP module, the data buffered in the first APP buffer space. 6. The first slave APP module receives the data, and buffers the data in the second APP receive buffer space. 7. The first slave APP module sends the backup complete message to the first master APP module. 8. The first master APP module receives the backup complete message, and sends, to the first master QUIC module, the second notification for indicating to perform delimitation in the receiving direction, to indicate the first master QUIC module to start the delimitation in the receiving direction based on the following step 704.

Step 704: The first master module sends the first data 2 to the first slave module.

In step 704, refer to FIG. 18B. The first master QUIC module in the first master APP module sends the first data 2 and the identifier of the stream instance to the first slave QUIC module in the first slave module.

In some embodiments, when all remaining data in the first instance buffer space is consecutive data, the first data 2 is all the remaining data in the first instance receive buffer space.

Step 705: The first slave module backs up the first data 2, and sends a first backup success message to the first master module, where the first backup success message indicates that the first data 2 is successfully backed up.

In step 705, refer to FIG. 18B. The first slave QUIC module in the first slave module receives the first data 2 and the identifier of the stream instance, determines, based on the identifier of the stream instance, the first slave APP module associated with the stream instance and the second instance receive buffer space corresponding to the stream instance, clears the second instance receive buffer space, and stores the first data 2 in the second instance receive buffer space. The first slave QUIC module sends the first backup success message to the first master QUIC module, and then sends the first data 2 to the first slave APP module. Alternatively, the first slave QUIC module sends the first data 2 to the first slave APP module. After sending the first data 2, the first slave QUIC module sends the first backup success message to the first master QUIC module.

In some embodiments, the first slave APP module obtains an identifier of a corresponding slave APP module from a correspondence between an identifier of a stream instance and an identifier of a slave APP module based on the identifier of the stream instance, and the slave APP module corresponding to the obtained identifier of the slave APP module is used as the first slave APP module associated with the stream instance.

After buffering the first data 2 in the second instance receive buffer space, the first slave QUIC module sends the first backup success message to the first master QUIC module. In this way, when receiving the first backup success message, the first master QUIC module performs the following operation of step 706. When the first master QUIC module performs the operation of step 706, the first slave QUIC module sends the first data 2 to the first slave APP module, to improve efficiency of the delimitation in the receiving direction.

In some embodiments, that the first slave QUIC module sends the first data 2 to the first slave APP module is: The first slave APP module reads the first data 2 from the second instance receive buffer space, sends the first data 2 to the first slave APP module, and updates an offset position of data that is recorded by the first slave QUIC module and that is sent by the first slave QUIC module to the first slave APP module to an end location of the first data 2. In addition, after sending the first data 2, the first slave QUIC module further deletes the first data 2 from the second instance receive buffer space. The first slave APP module receives the first data 2, and stores the first data 2 in the second APP receive buffer space.

For example, the first data 2 is data of the 21^{st} to 30^{th} bytes in a service, and the end location of the first data 2 is "30". The first slave QUIC module updates the offset position of the data that is recorded by the first slave QUIC module and that is sent by the first slave QUIC module to the first slave APP module to the end location "30" of the first data 2.

In some embodiments, there is a first sending channel and a second sending channel in the first slave QUIC module and the first slave APP module, data transmitted on the first sending channel is the data received by the communication local device from the communication peer device, and data transmitted on the second sending channel is the data sent by the communication local device to the communication peer device. Therefore, the first slave QUIC module sends the first data 2 to the first slave APP module on the first sending channel.

Step 706: The first master module receives the first backup success message, and exchange of the first data 2 is completed between the first master QUIC module and the first master APP module in the first master module based on the first backup success message.

In step 706, refer to FIG. 18B. The first master QUIC module receives the first backup success message, opens a sending channel between the first master QUIC module and the first master APP module, and sends the first data 2 to the first master APP module on the sending channel. The first master APP module buffers the first data 2 in the first APP receive buffer space. The first master QUIC module further updates the offset position of the data that is recorded by the first master QUIC module and that is sent by the first master QUIC module to the first master APP module to the end location of the first data 2, and deletes the first data from the first instance receive buffer space.

In this way, the offset position of the data sent by the first master QUIC module in the first master module to the first master APP module is the same as the offset position of the data sent by the first slave QUIC module in the first slave module to the first slave APP module. In this way, the data received by the first master module is consistent with the data received by the first slave module, to implement horizontal consistency and vertical consistency between the first master module and the first slave module. For example, the first data 2 is data of the 21^{st} to 30^{th} bytes in a service, and the end location of the first data 2 is "30". The first master QUIC module updates the offset position of the data that is recorded by the first master QUIC module and that is sent by the first master QUIC module to the first master APP module to the end location "30" of the first data 2. The offset position of the data that is recorded by the first slave QUIC module and that is sent by the first slave QUIC module to the first slave APP module is also the end location "30" of the first data 2.

In some embodiments, in a process of performing delimitation in the receiving direction (that is, in a process in which the first master module processes the first data 2), the first master module may receive second data sent by the communication peer device, and buffer the second data in the first instance receive buffer space. The first master module sends the second data and a first flag to the first slave module, where the first flag is for indicating to suspend backup of the second data.

In a process in which the first master module processes the first data 2, the first master QUIC module receives, through the first path of the first connection instance, a third packet sent by the communication peer device, and buffers the third packet in a first packet receive buffer space, where the third packet includes the second data. The first master QUIC module obtains the third packet from the first packet receive buffer space, parses the third packet to obtain the second data, buffers the second data in the first instance buffer space, sets the first flag, and sends the second data and the first flag to the first slave QUIC module. A second slave QUIC module receives the second data and the first flag, and stops sending the second data to the first slave APP module.

After processing the first data 2, that is, after the first master QUIC module sends the first data 2 to the first master APP module, the first master APP module sends the second data to the first master APP module only after the delimitation in the receiving direction is completed. In addition, the first slave QUIC module sends the second data to the first slave APP module, that is, starts to back up the second data only after the first slave QUIC module sends the first data 2. In this way, when the first master module and the first slave module obtain the second data in a process of processing the first data, the first slave module suspends the backup of the second data based on the first flag, so that an error caused because the first slave module processes the second data in the process of processing the first data can be avoided. For example, a case in which data processing progress of the first master module is inconsistent with data processing progress of the first slave module can be avoided.

Next, the following process of 707 to 710 is for describing a case in which the first master module performs delimitation in the sending direction.

Step 707: The first master module obtains first data 1, where the first data 1 is data to be sent by the first master module to the communication peer device.

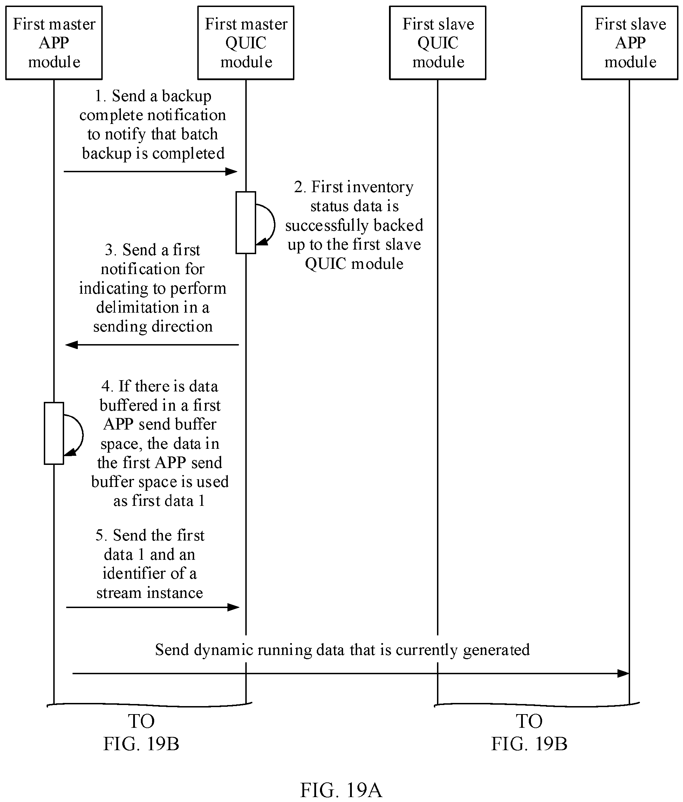

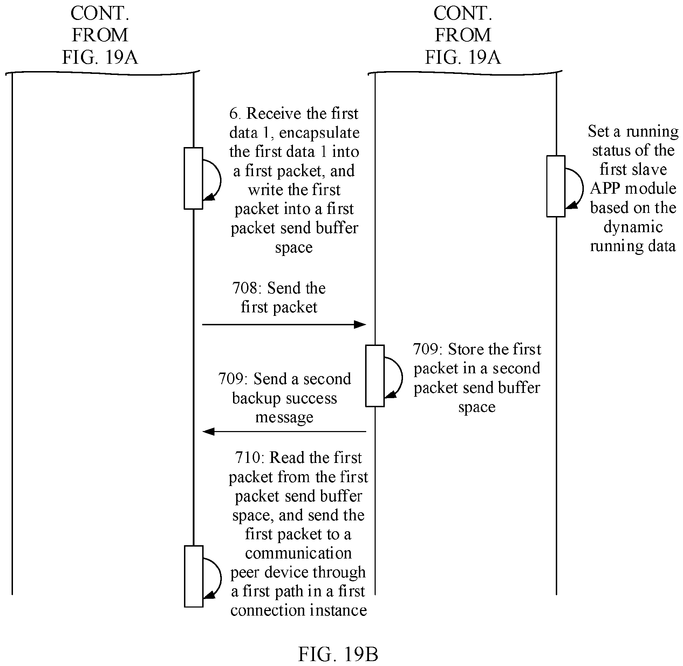

In step 707, refer to FIG. 19 A and FIG. 19B. 1. The first master APP module in the first master module sends the backup complete notification to the first master QUIC module, to notify that the first master APP module has completed the batch backup. 2. The first master QUIC module in the first master module receives the backup complete notification sent by the first master APP module, and the first master QUIC module successfully backs up the first inventory status data to the first slave QUIC module. 3. The first master QUIC module sends, to the first master APP module, a first notification for indicating to perform delimitation in the sending direction. 4. The first master APP module receives the first notification for indicating to perform delimitation in the sending direction. If there is data buffered in the first APP send buffer space, the data in the first APP send buffer space is used as the first data 1. 5. The first master APP module sends the first data 1 and the identifier of the stream instance to the first master QUIC module. 6. The first master QUIC module receives the first data 1, encapsulates the first data 1 into a first packet, and stores the first packet in a first packet send buffer space. A payload of the first packet includes the first data 1, a packet header of the first packet includes the identifier of the first connection instance, the identifier of the second connection instance, and the identifier of the stream instance, and the stream instance is carried on the first connection instance and the second connection instance. The first connection instance and the second connection instance are respectively a source connection instance and a destination connection instance of the first packet. If there is no data buffered in the first APP send buffer space, the delimitation in the sending direction does not need to be performed, that is, the operation ends.

In some embodiments, after receiving the first data 1 and the identifier of the stream instance, the first master QUIC module stores the first data 1 in the first instance send buffer space corresponding to the stream instance, and waits to send the first data 1. Then, the first master QUIC module obtains the first data 1 from the first instance send buffer space, and determines the first connection instance. The first connection instance is associated with the first master APP module, and the stream instance is carried on the first connection instance. The first master QUIC module obtains the identifier of the first connection instance and the identifier of the second connection instance from the instance data corresponding to the first connection instance, encapsulates content such as the identifier of the first connection instance, the identifier of the second connection instance, the identifier of the stream instance, and the first data 1 into the first packet, buffers the first packet in the first packet send buffer space, and waits to send the first packet. The first master QUIC module further deletes the first data 1 from the first instance send buffer space.

In some embodiments, an operation of determining the first connection instance is: The first master QUIC module determines, from identifiers of connection instances included in the first instance data of the stream instance, a connection instance that carries the stream, and determines, from a correspondence between an identifier of a master APP module and an identifier of a connection instance based on the identifier of the first master APP module, each connection instance associated with the first master APP module, where the first connection instance is a common instance between each connection instance associated with the first master APP module and the connection instance that carries the stream.

In some embodiments, the instance data of the first connection instance further includes key information, the first master QUIC module encrypts the first data 1 based on the key information, and the payload of the first packet includes the encrypted first data 1.

In some embodiments, a format of the first packet is an APP over QUIC packet or the like.

In some embodiments, after sending the first data 1 to the first master QUIC module, the first master APP module sends currently generated dynamic running data to the first slave APP module. The first slave APP module receives the dynamic running data, and sets a running status of the first slave APP module based on the dynamic running data, so that the running status of the first slave APP module is consistent with the running status of the first master APP module.

In some embodiments, after sending the dynamic running data to the first slave APP module, the first master APP module further sends, to the first master QUIC module, a second notification for indicating to perform delimitation in the sending direction, where the second notification for indicating to perform delimitation in the sending direction is for triggering the first master QUIC module to back up the first data 1 to the first slave module, that is, triggering to perform an operation of the following step 708.

Step 708: The first master module sends the first data 1 to the first slave module.

In step 708, refer to FIG. 19B. The first master QUIC module in the first master module sends the first packet to the first slave QUIC module in the first slave module.

In some embodiments, the first master QUIC module further sets a first sending flag, and the first sending flag is for indicating the first slave QUIC module to send the first data 1 to the first slave APP module and send the first packet and the first sending flag to the first slave QUIC module.

Step 709: The first slave module backs up the first data 1, and sends a second backup success message to the first master module, where the second backup success message indicates that the first data 1 is successfully backed up.

In step 709, refer to FIG. 19B. The first slave QUIC module in the first slave module receives the first packet, and stores the first packet in a second packet send buffer space. The first slave QUIC module sends the second backup success message to the first master QUIC module, and then sends the first data 1 to the first slave APP module. Alternatively, the first slave QUIC module sends the first data 1 to the first slave APP module. After sending the first data 1, the first slave QUIC module sends the second backup success message to the first master QUIC module.

After buffering the first packet in the second instance receive buffer space, the first slave QUIC module sends the second backup success message to the first master QUIC module. In this way, when receiving the second backup success message, the first master QUIC module performs the following operation of step 709. When the first master QUIC module performs the operation of step 709, the first slave QUIC module sends the first data 1 to the first slave APP module, to improve efficiency of the delimitation in the sending direction.

In some embodiments, the first slave QUIC module further receives the first sending flag, and immediately sends the first data 1 to the first slave APP module based on the first sending flag. Optionally, that the first slave QUIC module sends the first data 1 to the first slave APP module is:

The first slave QUIC module reads the first packet from the second packet send buffer space, parses the first packet to obtain the first data 1, the identifier of the stream instance, and the identifier of the first connection instance, determines the second instance send buffer space corresponding to the stream instance based on the identifier of the stream instance, determines, based on the identifier of the stream instance and the identifier of the first connection instance, the first slave APP module associated with both the first connection instance and the stream instance, stores the first data 1 in the second instance send buffer space, and waits to send the first data 1 to the first slave APP module. The first slave QUIC module further deletes the first packet from the second packet send buffer space.

Then, the first slave QUIC module reads the first data 1 from the second instance send buffer space, and sends the first data 1 to the first slave APP module. The first slave APP module stores the first data 1 in the second APP send buffer space. The first slave QUIC module further deletes the first data 1 from the second instance send buffer space.

In some embodiments, that the first slave QUIC module determines the first slave APP module associated with both the first connection instance and the stream instance is:
The first slave QUIC module determines, based on the identifier of the stream instance and the correspondence between an identifier of a slave APP module and an identifier of a stream instance, a slave APP module associated with the stream instance, and determines, based on the identifier of the first connection instance and a correspondence between an identifier of a slave APP module and an identifier of a connection instance, a slave APP module associated with the first connection instance. The first slave APP module is a common module between the slave APP module associated with the stream instance and the slave APP module associated with the first connection instance.

Step 710: The first master module receives the second backup success message, and sends, based on the second backup success message, the first data 1 to the communication peer device based on the QUIC protocol.

In step 710, the first master QUIC module receives the second backup success message, reads the first packet from the first packet send buffer space based on the second backup success message, and sends the first packet to the communication peer device through the first path in the first connection instance. After successfully sending the first packet, the first master QUIC module deletes the first packet from the first packet send buffer space.

Through the foregoing steps 707 to 710, an offset position of data currently sent by the first master module is the same as an offset position of data currently sent by the first slave module, and both are an end location of the first data 1, so that the data received by the first master module is consistent with the data sent by the first slave module. This implements horizontal consistency and vertical consistency between the first master module and the first slave module.

In this embodiment of this application, the first master module sends the first status data to the first slave module, and the first slave module backs up the first status data, so that the connection instance and the stream instance in the first master module are backed up to the first slave module. The first master module performs delimitation in the receiving direction, so that the offset position of the data received by the first master module is the same as the offset position of the data received by the first slave module. The first master module performs delimitation in the sending direction, so that the offset position of the data sent by the first master module is the same as the offset position of the data sent by the first slave module. In this way, it is ensured that both the first master module and the first slave module obtain the same data, so that data consistency is maintained between the first master module and the first slave module, and vertical consistency is maintained between the first master module and the first slave module. In this way, when the first master module is faulty, the first slave module can successfully become the master module, and continue to transmit the data for implementing the application service to the communication peer device, to avoid interruption of the application service between the communication local device and the communication peer device.

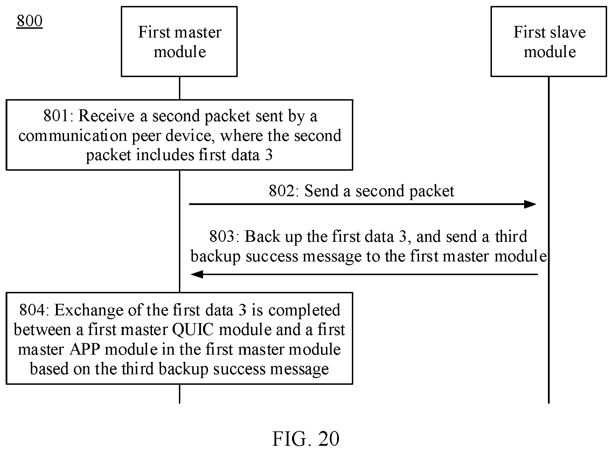

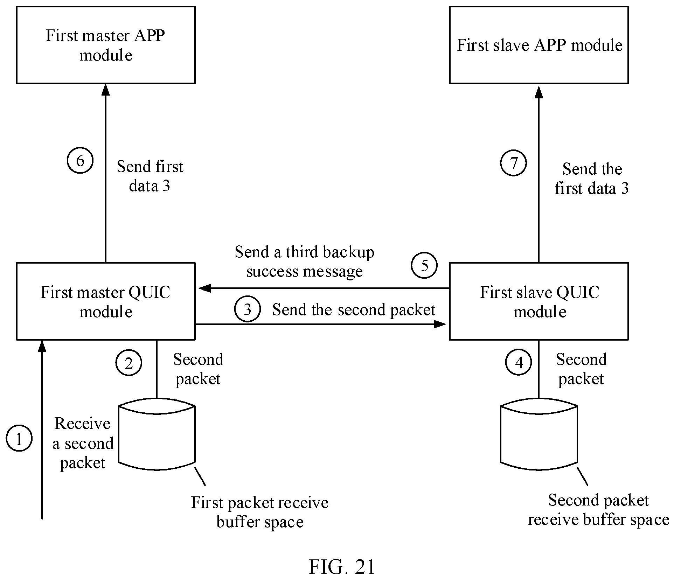

Refer to FIG. 20 and FIG. 21. The method 600A and the method 600B are applied to a scenario in which a communication local device receives data sent by a communication peer device. In this scenario, this application provides a data receiving method 800. The communication local device receives, in real time by using the method 800, the data sent by the communication peer device. The method includes the following steps.

Step 801: A first master module receives a second packet sent by the communication peer device, where the second packet includes first data 3.

In step 801, a first master QUIC module in the first master module receives, through a first path, the second packet sent by the communication peer device, and stores the second packet in a first packet receive buffer space, where a packet header of the second packet includes an identifier of a first connection instance, an identifier of a second connection instance, and an identifier of a stream instance, and a payload of the second packet includes the first data 3. The first connection instance and the second connection instance are respectively a destination connection instance and a source connection instance of the second packet. The first path is a path between the communication local device and the communication peer device, and the first path is a path in the first connection instance and the second connection instance.

Step 802: The first master module sends the second packet to a first slave module.

In some embodiments, the first master QUIC module in the first master module determines, based on a current situation, whether to send the first data 3 to a first master APP module. If determining to send the first data 3 to the first master APP module, the first master QUIC module sets a second sending flag, and sends the second packet and the second sending flag to a first slave QUIC module in the first slave module.

In some embodiments, when the first master QUIC module performs delimitation in a receiving direction, the first master QUIC module determines not to send the first data 3 to the first master APP module. When the first master QUIC module does not perform delimitation in a receiving direction, the first master QUIC module determines to send the first data 3 to the first master APP module.

Step 803: The first slave module backs up the first data 3 in the second packet, and sends a third backup success message to the first master module, where the third backup success message indicates that the first data 3 is successfully backed up.

In step 803, the first slave QUIC module in the first slave module receives the second packet and the second sending flag, buffers the second packet in a second packet receive buffer space, and sends the third backup success message to the first master QUIC module.

In some embodiments, if the first slave QUIC module does not receive the second sending flag, after buffering the second packet in the second packet receive buffer space, the first slave QUIC module first suspends sending of the first data 3 to a first slave APP module. After the delimitation in the receiving direction is completed, the first slave QUIC module sends the first data 3 to the first slave APP module.

In some embodiments, if the first slave QUIC module receives the second sending flag, the first slave QUIC module immediately sends the first data 3 to a first slave APP module based on the second sending flag.

During implementation, the first slave QUIC module reads the second packet from the second packet receive buffer space, parses the second packet to obtain the first data 3, the identifier of the first connection instance, and the stream instance, and determines, based on the identifier of the first connection instance and the identifier of the stream instance, the first slave APP module associated with both the first connection instance and the stream instance. In addition, the first slave QUIC module determines a second instance receive buffer space corresponding to the stream instance based on the identifier of the stream instance, and stores the first data 3 in the second instance receive buffer space. The first slave QUIC module further deletes the second packet from the second packet receive buffer space.

Then, the first slave APP module reads the first data 3 from the second instance receive buffer space, sends the first data 3 to the first slave APP module, and updates an offset position of data that is recorded by the first slave QUIC module and that is sent to the first slave APP module to an end location of the first data 3. In addition, after sending the first data 3, the first slave QUIC module further deletes the first data 3 from the second instance receive buffer space. The first slave APP module receives the first data 3, and stores the first data 3 in a second APP receive buffer space.

In some embodiments, the first slave QUIC module further obtains instance data of the first connection instance based on the identifier of the first connection instance, decrypts the first data 3 in the second packet based on key information included in the instance data, and stores the decrypted first data 3 in a second instance receive buffer space corresponding to the first connection instance.

Step 804: The first master module receives the third backup success message, and exchange of the first data 3 is completed between the first master QUIC module and the first master APP module in the first master module based on the third backup success message.

In step 804, the first master QUIC module in the first master module receives the third backup success message, and sends the first data 3 to the first master APP module. Optionally, a process of sending the first data 3 is:
The first master QUIC module reads the second packet from the first packet receive buffer space, parses the second packet to obtain the first data 3, the identifier of the first connection instance, and the identifier of the stream instance, determines, based on the identifier of the first connection instance and the identifier of the stream instance, the first master APP module associated with both the first connection instance and the stream instance, determines a first instance receive buffer space corresponding to the stream instance based on the identifier of the stream instance, and buffers the first data 3 in the first instance receive buffer space. The first master QUIC module further deletes the second packet from the first packet receive buffer space.

The first master QUIC module reads the first data 3 from the first instance receive buffer space, and sends the first data 3 to the first master APP module. The first master APP module buffers the first data 3 in a first APP receive buffer space. After successfully sending the first data 3, the first master QUIC module further deletes the first data 3 from the first instance receive buffer space. In addition, the first master QUIC module further updates an offset position of data that is recorded by the first master QUIC module and that is last sent to the first master APP module to the end location of the first data 3.

In some embodiments, the first master QUIC module further obtains the instance data of the first connection instance based on the identifier of the first connection instance, decrypts the first data 3 in the second packet based on the key information included in the instance data, and stores the decrypted first data 3 in a first instance receive buffer space corresponding to the first connection instance.

In this embodiment of this application, the first master module receives the second packet, and first sends the second packet to the first slave module. The first slave module backs up the first data 3 in the second packet, and sends the third backup success message to the first master module. The first master QUIC module in the first master module sends the first data 3 to the first master APP module in the first master module based on the third backup success message. In this way, it is ensured that both the first master module and the first slave module obtain the first data 3, so that data consistency is maintained between the first master module and the first slave module, that is, horizontal consistency is maintained between the first master module and the first slave module. An operation of backing up the first data by the first slave module is a backup operation of sending the first data 3 by the first master QUIC module to the first master APP module, so that a location of data received by the first master module is also consistent with a location of data received by the first slave module, that is, vertical consistency is maintained between the first master module and the first slave module. In this way, when the first master module is faulty, the first slave module can successfully become the master module, and continue to transmit data for implementing an application service to the communication peer device, to avoid interruption of the application service between the communication local device and the communication peer device. In addition, the first master module and the first slave module are located in the communication local device, data between the first master module and the first slave module is consistent, and the location of the data received by the first master module is also consistent with the location of the data received by the first slave module. Therefore, when the first master module is faulty, the first slave module continues to receive the data based on the location that is of the data received by the first master module and that is recorded before the first master module is faulty. In this way, before and after the first master module is faulty, the communication local device can continuously receive the data continuously sent by the communication peer device, and the communication peer device is unaware that the first master module is faulty.

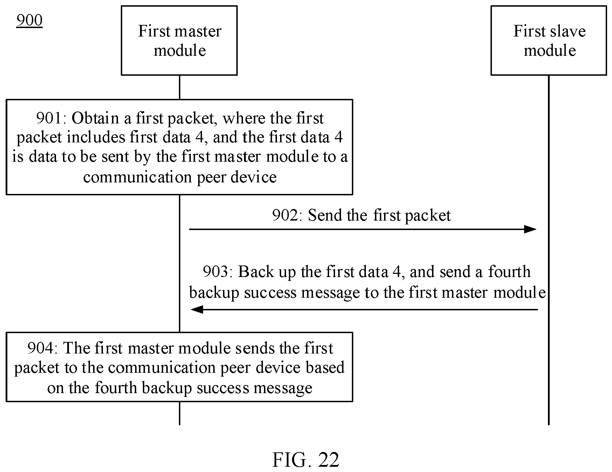

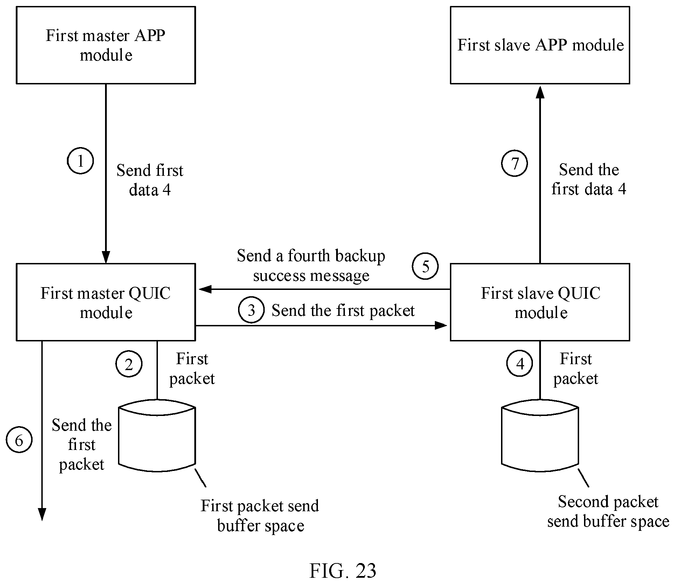

Refer to FIG. 22 and FIG. 23. The method 600A and the method 600B are applied to a scenario in which a communication local device sends data to a communication peer device. In this scenario, this application provides a data sending method 900. The communication local device sends the data to the communication peer device in real time by using the method 900. The method includes the following steps.

Step 901: A first master module obtains a first packet, where the first packet includes first data 4, and the first data 4 is data to be sent by the first master module to the communication peer device.

In step 901, a first master APP module generates the first data 4, and sends the first data 4 and an identifier of a stream instance to a first master QUIC module. Optionally, the stream instance corresponds to a service to which the first data 4 belongs.

The first master QUIC module receives the first data 4 and the identifier of the stream instance, and encapsulates the first data 4 into the first packet. A payload of the first packet includes the first data 4, a packet header of the first packet includes an identifier of a first connection instance, an identifier of a second connection instance, and the identifier of the stream instance, and the stream instance is carried on the first connection instance and the second connection instance. The first connection instance and the second connection instance are respectively a source connection instance and a destination connection instance of the first packet.

In some embodiments, after generating the first data 4, for a service identifier of the service to which the first data 4 belongs, the first master APP module 4 obtains, from stored first instance data of the stream instance, first instance data including the service identifier, and obtains, from the first instance data, the identifier of the stream instance corresponding to the service.

In some embodiments, after receiving the first data 4 and the identifier of the stream instance, the first master QUIC module determines the first connection instance associated with both the first master APP module and the stream instance, and determines a first instance send buffer space corresponding to the stream instance based on the identifier of the stream instance. The first master QUIC module stores the first data 4 in the first instance send buffer space, and the first master QUIC module waits to send the first data 4. The first master QUIC module obtains the first data 4 from the first instance send buffer space, obtains the identifier of the first connection instance and the identifier of the second connection instance from instance data corresponding to the first connection instance, encapsulates content such as the identifier of the first connection instance, the identifier of the second connection instance, the identifier of the stream instance, and the first data 4 into the first packet, buffers the first packet in a first packet send buffer space, and waits to send the first packet. The first master QUIC module further deletes the first data 4 from the first instance send buffer space.

In some embodiments, the instance data corresponding to the first connection instance includes key information, the first data 4 is encrypted by using the key information, and the payload of the first packet includes the encrypted first data 4.

Step 902: The first master module sends the first packet to a first slave module.

In some embodiments, the first master QUIC module in the first master module determines, based on a current situation, whether to set a sending flag for the first packet. If determining to set the sending flag, the first master QUIC module in the first master module sets a third sending flag, and sends the first packet and the third sending flag to a first slave QUIC module in the first slave module. If determining not to set a sending flag, the first master QUIC module sends the first packet to a first slave QUIC module.

In some embodiments, when the first master QUIC module performs delimitation in a receiving direction, the first master QUIC module determines not to set the sending flag. When the first master QUIC module does not perform delimitation processing in a receiving direction, the first master QUIC module determines to set the sending flag.

Step 903: The first slave module backs up the first data 4 in the first packet, and sends a fourth backup success message to the first master module, where the fourth backup success message indicates that the first data 4 is successfully backed up.

In step 903, the first slave QUIC module in the first slave module receives the first packet and the third sending flag, and stores the first packet in a second packet send buffer space. The first slave QUIC module sends the fourth backup success message to the first master QUIC module.

In some embodiments, if the first slave QUIC module does not receive the third sending flag, after buffering the first packet in a second packet receive buffer space, the first slave QUIC module first suspends sending of the first data 4 to a first slave APP module. After the delimitation in the receiving direction is completed, the first slave QUIC module sends the first data 4 to the first slave APP module.

In some embodiments, if the first slave QUIC module receives the third sending flag, the first slave QUIC module immediately sends the first data 4 to a first slave APP module based on the third sending flag.

During implementation, the first slave APP module reads the first packet from the second packet send buffer space based on the third sending flag, parses the first packet to obtain the first data 4, the identifier of the stream instance, and the identifier of the first connection instance, determines, based on the identifier of the first connection instance and the identifier of the stream instance, the first slave APP module associated with both the first connection instance and the stream instance, determines a second instance send buffer space corresponding to the stream instance based on the identifier of the stream instance, stores the first data 4 in the second instance send buffer space, and waits to send the first data 4 to the first slave APP module. The first slave QUIC module further deletes the first packet from the second packet send buffer space.

Then, the first slave QUIC module reads the first data 4 from the second instance send buffer space, and sends the first data 4 to the first slave APP module. The first slave APP module stores the first data 4 in a second APP send buffer space. The first slave QUIC module further deletes the first data 4 from the second instance send buffer space.

Step 904: The first master module receives the fourth backup success message, and sends the first packet to the communication peer device based on the fourth backup success message.

In step 904, the first master QUIC module receives the fourth backup success message, reads the first packet from the first packet send buffer space based on the fourth backup success message, and sends the first packet to the communication peer device through a first path in the first connection instance. After successfully sending the first packet, the first master QUIC module deletes the first packet from the first packet send buffer space.

In this embodiment of this application, the first master module generates the first packet, and first sends the first packet to the first slave module. The first slave module backs up the first data 4 in the first packet, and sends the fourth backup success message to the first master module. The first master QUIC module in the first master module sends the first packet to the communication peer device based on the fourth backup success message. In this way, it is ensured that both the first master module and the first slave module obtain the first data 4, so that data consistency is maintained between the first master module and the first slave module, that is, horizontal consistency is maintained between the first master module and the first slave module. An operation of backing up the first data by the first slave module is a backup operation of sending the first data 4 by the first master QUIC module to the communication peer device, so that a location of data sent by the first master module is also consistent with a location of data sent by the first slave module, that is, vertical consistency is maintained between the first master module and the first slave module. In this way, when the first master module is faulty, the first slave module can successfully become the master module, and continue to transmit data for implementing an application service to the communication peer device, to avoid interruption of the application service between the communication local device and the communication peer device. In addition, the first master module and the first slave module are located in the communication local device, data between the first master module and the first slave module is consistent, and the location of the data sent by the first master module is also consistent with the location of the data sent by the first slave module. Therefore, when the first master module is faulty, the first slave module continues to send the data based on the location that is of the data sent by the first master module and that is recorded before the first master module is faulty. In this way, before and after the first master module is faulty, the communication peer device receives the data continuously sent by the communication local device, and the communication peer device is unaware that the first master module is faulty.

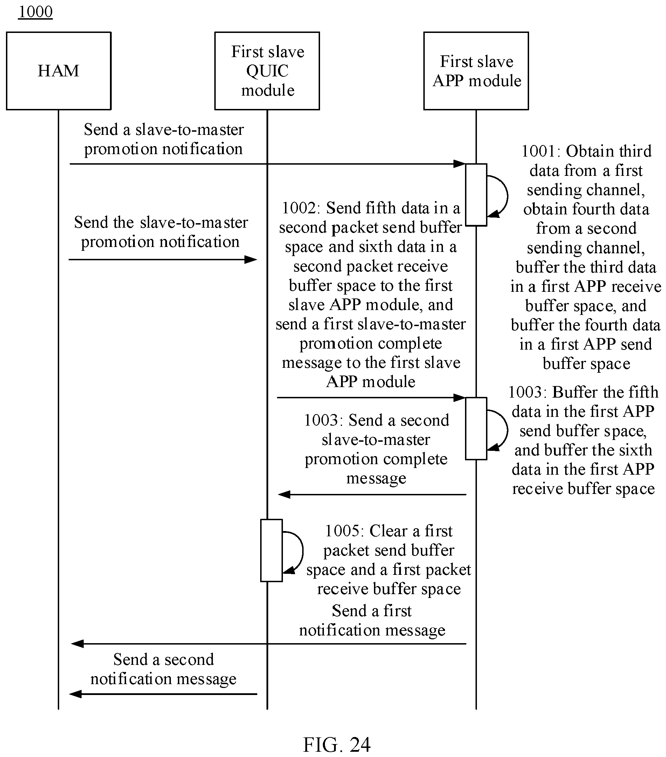

The foregoing examples mainly describe a case in which the first slave module in a system backs up the first master module, and horizontal consistency and vertical consistency are maintained between the first master module and the first slave module when the backup is completed. For example, in any embodiment shown in FIG. 10 to FIG. 23, the first slave module backs up the first master module. When the first master module is faulty, the first slave module is upgraded to the master module, and replaces the first master module to provide the application service. Refer to FIG. 24. A first slave APP module and a first slave QUIC module in a first slave module provide an application service based on the following process. The process includes the following steps.

Step 1001: The first slave APP module receives a slave-to-master promotion notification, obtains third data from a first sending channel, obtains fourth data from a second sending channel, buffers the third data in a first APP receive buffer space, and buffers the fourth data in a first APP send buffer space.

The third data is data that is sent by a communication peer device and that is received by a first master module, and the fourth data is data sent by the first master module to the communication peer device. Therefore, a first master APP module in the first master module records received data as the third data and records sent data as the fourth data.

After the first slave QUIC module sends the third data on the first sending channel and sends the fourth data on the second sending channel, the first slave APP module may not immediately receive the third data on the first sending channel and receive the fourth data on the second sending channel. In other words, after the third data and the fourth data are respectively buffered on the first sending channel and the second sending channel for a period of time, the first slave APP module may receive the third data and the fourth data.

When detecting that the first master module is faulty, HAM separately sends the slave-to-master promotion notification to the first slave APP module and the first slave QUIC module in the first slave module. The first slave APP module receives the slave-to-master promotion notification, and immediately obtains the third data from the first sending channel and obtains the fourth data from the second sending channel, so that the first slave APP module also records received data as the third data and records sent data as the fourth data, which is consistent with a case of the first master APP module. This prepares for upgrade to the master APP module.

Step 1002: The first slave QUIC module receives the slave-to-master promotion notification, sends fifth data in a second packet send buffer space and sixth data in a second packet receive buffer space to the first slave APP module, and sends a first slave-to-master promotion complete message to the first slave APP module.

When the first slave QUIC module receives the slave-to-master promotion notification, the first slave QUIC module processes unprocessed data in the second packet send buffer space and the second packet receive buffer space. During implementation, the first slave QUIC module parses a packet buffered in a first packet send buffer space to obtain the fifth data, and sends the fifth data to the first slave APP module. The first slave QUIC module parses a packet buffered in the first packet receive buffer space to obtain the sixth data, and sends the sixth data to the first slave APP module, where the sixth data is consecutive to data that is last sent by the first slave QUIC module to the first slave APP module.

Step 1003: The first slave APP module receives the first slave-to-master promotion complete message, the fifth data, and the sixth data, buffers the fifth data in the first APP send buffer space, buffers the sixth data in the first APP receive buffer space, and sends a second slave-to-master promotion complete message to the first slave QUIC module.

In some embodiments, the first slave APP module further determines whether to associate, on the first slave QUIC module, the first slave APP module with each connection instance and each stream instance that are recorded by the first slave APP module. If a connection instance is not associated with the first slave APP module, the connection instance and a stream instance on the connection instance are aged; and/or if a stream instance is not associated with the first slave APP module, the stream instance is aged.

The first slave APP module further sends a first notification message to the HAM, where the first notification message indicates that the first slave APP module is upgraded to the master APP module.

Step 1005: The first slave QUIC module receives a second slave-to-master promotion complete message, and clears the first packet send buffer space and the first packet receive buffer space.

In some embodiments, there may be some packets in the second packet receive buffer space. If data in the packet is not consecutive to the sixth data, the data in the packet is not sent to the first slave APP module. In this way, the packet is deleted when the first packet receive buffer space is cleared. When the first slave QUIC module is upgraded to a master QUIC module, the first slave QUIC module may request the communication peer device to resend the packet.

The first slave QUIC module further sends a second notification message to the HAM, where the second notification message indicates that the first slave QUIC module is upgraded to the master QUIC module.

After the first slave APP module is upgraded to the master APP module and the first slave QUIC module is upgraded to the master QUIC module, the first slave APP module exchanges, with the communication peer device through the first slave QUIC module, data for implementing an application service. The first slave APP module and the first slave QUIC module continue to exchange, with the communication peer device by using a first connection instance and the stream instance, the data for implementing the application service. For detailed implementation, refer to the method 800 shown in FIG. 20 or the method 900 shown in FIG. 22.

In this embodiment of this application, when the first master module is faulty, the first slave module is upgraded to the master module, and replaces the first master module to continue to exchange, with the communication peer device by using the first connection instance and the stream instance, the data for implementing the application service. In this way, when the first master module is faulty, the first slave module is upgraded to the master module and seamlessly connects to an original first connection instance and stream instance, so that the first slave module can quickly take over the application service provided by the first master module. A recovery time is short, and a neighboring device is unaware of the fault.

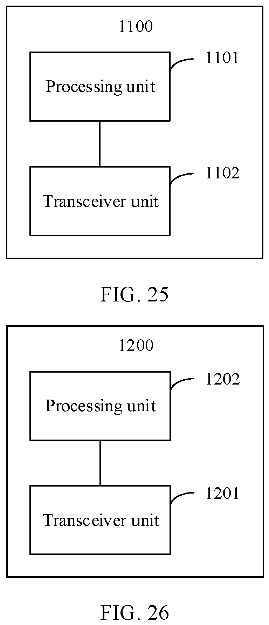

Refer to FIG. 25. An embodiment of this application provides a data sending apparatus 1100. The apparatus 1100 is deployed in the system 100 shown in FIG. 7 or FIG. 8, is deployed in the first system or the second system shown in FIG. 9, or is deployed in the communication local device provided in the embodiments shown in FIG. 10 to FIG. 24.

The apparatus 1100 is configured to exchange first data with a communication peer device based on the QUIC protocol. The apparatus 1100 is configured to provide an application service. The apparatus 1100 includes:
a processing unit 1101, configured to obtain the first data, where the first data is for implementing the application service; and
a transceiver unit 1102, configured to send the first data to a slave module serving as a backup module.

The processing unit 1101 is further configured to process the first data based on a backup success message received from the slave module, where the backup success message indicates that the first data is successfully backed up.

Optionally, for a detailed implementation process of obtaining the first data by the processing unit 1101, refer to related content in step 601 of the method 600A shown in FIG. 14, refer to related content in step 703 or step 707 of the method 700 shown in FIG. 16, refer to related content in step 801 of the method 800 shown in FIG. 20, or refer to related content in step 901 of the method 900 shown in FIG. 22. Details are not described herein again.

Optionally, for a detailed implementation process of sending the first data by the transceiver unit 1102, refer to related content in step 602 of the method 600A shown in FIG. 14, refer to related content in step 704 or step 708 of the method 700 shown in FIG. 16, refer to related content in step 802 of the method 800 shown in FIG. 20, or refer to related content in step 902 of the method 900 shown in FIG. 22. Details are not described herein again.

Optionally, for a detailed implementation process of processing the first data by the processing unit 1101, refer to related content in step 603 of the method 600A shown in FIG. 14, refer to related content in step 706 or step 710 of the method 700 shown in FIG. 16, refer to related content in step 804 of the method 800 shown in FIG. 20, or refer to related content in step 904 of the method 900 shown in FIG. 22. Details are not described herein again.

Optionally, the processing unit 1101 is configured to generate the first data.

The transceiver unit 1102 is further configured to send the first data to the communication peer device over the QUIC protocol.

Optionally, for a detailed implementation process of generating the first data by the processing unit 1101, refer to related content in step 601 of the method 600A shown in FIG. 14, refer to related content in step 707 of the method 700 shown in FIG. 16, or refer to related content in step 901 of the method 900 shown in FIG. 22. Details are not described herein again.

Optionally, for a detailed implementation process of sending the first data by the transceiver unit 1102, refer to related content in step 603 of the method 600A shown in FIG. 14, refer to related content in step 710 of the method 700 shown in FIG. 16, or refer to related content in step 904 of the method 900 shown in FIG. 22. Details are not described herein again.

Optionally, the transceiver unit 1102 is further configured to receive the first data sent by the communication peer device based on the QUIC protocol.

The processing unit 1101 is configured to complete exchange of the first data between a master QUIC module included in the apparatus and a master application APP module included in the apparatus.

Optionally, for a detailed implementation process of receiving the first data by the transceiver unit 1102, refer to related content in step 601 of the method 600A shown in FIG. 14, refer to related content in step 703 of the method 700 shown in FIG. 16, or refer to related content in step 801 of the method 800 shown in FIG. 20. Details are not described herein again.

Optionally, for a detailed implementation process of processing the first data by the processing unit 1101, refer to related content in step 603 of the method 600A shown in FIG. 14, refer to related content in step 706 of the method 700 shown in FIG. 16, or refer to related content in step 804 of the method 800 shown in FIG. 20. Details are not described herein again.

Optionally, that the first data is successfully backed up includes that the exchange of the first data is completed between a slave QUIC module included in the slave module and a slave APP module included in the slave module. The exchange of the first data is completed between the slave QUIC module and the slave APP module, so that the slave module backs up an operation of processing the first data by the apparatus.

Optionally, the processing unit 1101 is further configured to obtain second data before completing processing the first data, where the second data is for implementing the application service, and the second data is different from the first data.

The transceiver unit 1102 is further configured to send the second data and a first flag to the slave module, where the first flag is for indicating to suspend backup of the second data.

Optionally, for a detailed implementation process of obtaining the second data by the processing unit 1101, refer to related content in step 706 of the method 700 shown in FIG. 16. Details are not described herein again.

Optionally, for a detailed implementation process of sending the second data and the first flag by the transceiver unit 1102, refer to related content in step 706 of the method 700 shown in FIG. 16. Details are not described herein again.

Optionally, the transceiver unit 1102 is further configured to send first status data to the slave module, where the first status data includes running status data that is of the apparatus 1100 and that is generated before the slave module goes online.

Optionally, for a detailed implementation process of sending the first status data by the transceiver unit 1102, refer to related content in step 701 of the method 700 shown in FIG. 16. Details are not described herein again.

Optionally, the first status data includes at least one of the following: a QUIC protocol-based connection connection instance, a QUIC protocol-based stream stream instance, and data buffered in a buffer space corresponding to the stream instance.

Optionally, the processing unit 1101 is further configured to process third data, where the third data is data that is sent by the communication peer device and that is received by the transceiver unit 1102 before a first time point, and the first time point is a time point at which the slave module successfully backs up the first status data.

Optionally, for a detailed implementation process of processing the third data by the processing unit 1101, refer to related content in step 703 of the method 700 shown in FIG. 16. Details are not described herein again.

Optionally, the processing unit 1101 is further configured to obtain an identifier of a target instance, where the identifier of the target instance is for identifying the target instance created by the apparatus and the communication peer device.

The transceiver unit 1102 is further configured to send a backup request to the slave module, where the backup request includes the identifier of the target instance, and the backup request is for requesting to back up the target instance.

The processing unit 1101 is further configured to process the target instance based on a backup response sent by the slave module, where the backup response is for responding to successful backup of the target instance.

Optionally, for a detailed implementation process of obtaining the identifier of the target instance by the processing unit 1101, refer to related content in step 401 of the method 400 shown in FIG. 10. Details are not described herein again.

Optionally, for a detailed implementation process of sending the backup request by the transceiver unit 1102, refer to related content in step 402 of the method 400 shown in FIG. 10. Details are not described herein again.

Optionally, for a detailed implementation process of processing the target instance by the processing unit 1101, refer to related content in step 405 of the method 400 shown in FIG. 10. Details are not described herein again.

Optionally, the processing unit 1101 is further configured to create the target instance. Exchange of information related to creation of the target instance is completed between the master QUIC module included in the apparatus 1100 and the master application APP module included in the apparatus 1100.

Optionally, for a detailed implementation process of creating the target instance by the processing unit 1101, refer to related content in step 401 of the method 400 shown in FIG. 10. Details are not described herein again.

Optionally, the exchange of the information related to creation of the target instance is completed between the slave QUIC module included in the slave module and the slave APP module included in the slave module.

Optionally, the transceiver unit 1102 is further configured to send a deletion request to the slave module, where the deletion request includes the identifier of the target instance, and the deletion request is for requesting to delete the target instance.

The transceiver unit 1102 is further configured to receive a deletion response sent by the slave module, where the deletion response is for responding to successful deletion of the target instance.

Optionally, for a detailed implementation process of sending the deletion request by the transceiver unit 1102, refer to related content in step 501 of the method 500 shown in FIG. 12. Details are not described herein again.

Optionally, for a detailed implementation process of receiving the deletion response by the transceiver unit 1102, refer to related content in step 504 of the method 500 shown in FIG. 12. Details are not described herein again.

Optionally, the target instance is the QUIC protocol-based connection instance or the QUIC protocol-based stream instance.

Optionally, the apparatus 1100 and the slave module are located on a same device, or the apparatus 1100 and the slave module are located on different devices.

In this embodiment of this application, before the processing unit processes the first data, the transceiver unit sends the first data to the slave module, where the slave module is the backup module of the apparatus, and the slave module processes the first data. The processing operation performed by the slave module is a backup operation of processing the first data by the apparatus. When the slave module successfully backs up the first data, the processing unit processes the first data to ensure that both the slave module and the apparatus have the first data. First data processing progress of the apparatus is the same as first data processing progress of the slave module. In this way, when the apparatus is faulty, the slave module continues to process the data based on data processing progress reported when the apparatus is faulty, so that the slave module continues to provide the application service, to avoid interruption of the application service.

Refer to FIG. 26. An embodiment of this application provides a data receiving apparatus 1200. The apparatus 1200 is deployed in the system 100 shown in FIG. 7 or FIG. 8, is deployed in the first system or the second system shown in FIG. 9, or is deployed in the communication local device provided in the embodiments shown in FIG. 10 to FIG. 24.

The apparatus 1200 is a backup module of a master module, the master module is configured to exchange first data with a communication peer device based on the QUIC protocol, and the master module is configured to provide an application service. The apparatus 1200 includes:
a transceiver unit 1201, configured to receive the first data sent by the master module, where the first data is for implementing the application service; and
a processing unit 1202, configured to back up the first data.

The transceiver unit 1201 is further configured to send a backup success message to the master module, where the backup success message indicates that the first data is successfully backed up.

Optionally, for a detailed implementation process of receiving the first data by the transceiver unit 1201, refer to related content in step 611 of the method 600B shown in FIG. 15, refer to related content in step 705 or step 709 of the method 700 shown in FIG. 16, refer to related content in step 803 of the method 800 shown in FIG. 20, or refer to related content in step 903 of the method 900 shown in FIG. 22. Details are not described herein again.

Optionally, for a detailed implementation process of backing up the first data by the processing unit 1202, refer to related content in step 612 of the method 600B shown in FIG. 15, refer to related content in step 705 or step 709 of the method 700 shown in FIG. 16, refer to related content in step 803 of the method 800 shown in FIG. 20, or refer to related content in step 903 of the method 900 shown in FIG. 22. Details are not described herein again.

Optionally, for a detailed implementation process of sending the backup success message by the transceiver unit 1201, refer to related content in step 613 of the method 600B shown in FIG. 15, refer to related content in step 705 or step 709 of the method 700 shown in FIG. 16, refer to related content in step 803 of the method 800 shown in FIG. 20, or refer to related content in step 903 of the method 900 shown in FIG. 22. Details are not described herein again.

Optionally, the first data is data generated by the master module.

Optionally, the first data is data that is sent by the communication peer device based on the QUIC protocol and that is received by the master module.

Optionally, the processing unit 1202 is configured to complete exchange of the first data between a slave QUIC module included in the apparatus 1200 and a slave APP module included in the apparatus 1200.

Optionally, for a detailed implementation process of completing the exchange of the first data between the slave QUIC module and the slave APP module, refer to related content in step 612 of the method 600B shown in FIG. 15, refer to related content in step 705 or step 709 of the method 700 shown in FIG. 16, refer to related content in step 803 of the method 800 shown in FIG. 20, or refer to related content in step 903 of the method 900 shown in FIG. 22. Details are not described herein again.

Optionally, the transceiver unit 1201 is further configured to receive second data and a first flag, where the second data is data obtained by the master module before the master module completes processing the first data, the second data is for implementing the application service, and the second data is different from the first data.

The processing unit 1202 is further configured to suspend backup of the second data based on the first flag.

Optionally, for a detailed implementation process of receiving the second data and the first flag by the transceiver unit 1201, refer to related content in step 706 of the method 700 shown in FIG. 16. Details are not described herein again.

Optionally, for a detailed implementation process of suspending the backup of the second data by the processing unit 1202, refer to related content in step 706 of the method 700 shown in FIG. 16. Details are not described herein again.

Optionally, the transceiver unit 1201 is further configured to receive first status data sent by the master module, where the first status data includes running status data that is of the master module and that is generated before the apparatus 1200 goes online.

The processing unit 1202 is further configured to back up the first status data.

Optionally, for a detailed implementation process of receiving the first status data by the transceiver unit 1201, refer to related content in step 702 of the method 700 shown in FIG. 16. Details are not described herein again.

Optionally, for a detailed implementation process of backing up the first status data by the processing unit 1202, refer to related content in step 702 of the method 700 shown in FIG. 16. Details are not described herein again.

Optionally, the first status data includes at least one of the following: a connection connection instance, a stream stream instance, and data buffered in a buffer space corresponding to the stream instance.

Optionally, the transceiver unit 1201 is further configured to receive a backup request sent by the master module, where the backup request includes an identifier of a target instance, and the identifier of the target instance is for identifying the target instance created by the master module and the communication peer device.

The processing unit 1202 is further configured to back up the target instance based on the backup request.

The transceiver unit 1201 is further configured to send a backup response to the master module, where the backup response is for responding to successful backup of the target instance.

Optionally, for a detailed implementation process of receiving the backup request by the transceiver unit 1201, refer to related content in step 403 of the method 400 shown in FIG. 10. Details are not described herein again.

Optionally, for a detailed implementation process of backing up the target instance by the processing unit 1202, refer to related content in step 403 of the method 400 shown in FIG. 10. Details are not described herein again.

Optionally, for a detailed implementation process of sending the backup response by the transceiver unit 1201, refer to related content in step 404 of the method 400 shown in FIG. 10. Details are not described herein again.

Optionally, the processing unit 1202 is configured to complete exchange of information related to creation of the target instance between the slave QUIC module included in the apparatus 1200 and the slave APP module included in the apparatus 1200.

Optionally, for a detailed implementation process of completing the exchange of the information related to creation of the target instance between the slave QUIC module and the slave APP module, refer to related content in step 405 of the method 400 shown in FIG. 10. Details are not described herein again.

Optionally, the transceiver unit 1201 is further configured to receive a deletion request sent by the master module, where the deletion request includes the identifier of the target instance.

The processing unit 1202 is further configured to delete the target instance based on the deletion request.

The transceiver unit 1201 is further configured to send a deletion response to the master module, where the deletion response is for responding to successful deletion of the target instance.

Optionally, for a detailed implementation process of receiving the deletion request by the transceiver unit 1201, refer to related content in step 502 of the method 500 shown in FIG. 12. Details are not described herein again.

Optionally, for a detailed implementation process of deleting the target instance by the processing unit 1202, refer to related content in step 502 of the method 500 shown in FIG. 12. Details are not described herein again.

Optionally, for a detailed implementation process of sending the deletion response by the transceiver unit 1201, refer to related content in step 503 of the method 500 shown in FIG. 12. Details are not described herein again.

Optionally, the target instance a QUIC protocol-based connection instance or a QUIC protocol-based stream instance.

Optionally, the master module and the apparatus are located on a same device, or the master module and the apparatus are located on different devices.

In this embodiment of this application, because the apparatus is the backup module of the master module, the transceiver unit receives the first data sent by the master module, and the processing unit processes the first data. The processing operation performed by the processing unit is a backup operation of processing the first data by the master module. After the processing unit successfully backs up the first data, the master module processes the first data to ensure that both the apparatus and the master module have the first data. First data processing progress of the master module is the same as first data processing progress of the apparatus. In this way, when the master module is faulty, the apparatus continues to process the data based on data processing progress reported when the master module is faulty, so that the apparatus continues to provide the application service, to avoid interruption of the application service.

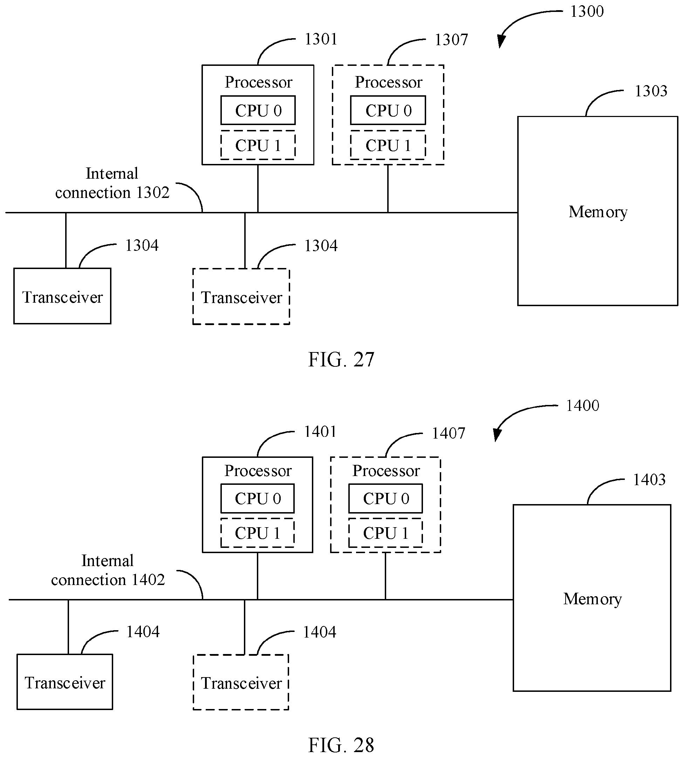

FIG. 27 is a schematic diagram of a data sending apparatus 1300 according to an embodiment of this application. The apparatus 1300 may be the master module provided in any one of the foregoing embodiments. For example, the apparatus 1300 is the master module in the system 100 shown in FIG. 7 or FIG. 8. Alternatively, the apparatus 1300 is the first master module in the first system 100A shown in FIG. 9 or the second master module in the second system 100B shown in FIG. 9. Alternatively, the apparatus 1300 is the first master module in the communication local device in the embodiments shown in FIG. 10 to FIG. 24. The apparatus 1300 includes at least one processor 1301, an internal connection 1302, a memory 1303, and at least one transceiver 1304.

The apparatus 1300 is an apparatus of a hardware structure, and can be configured to implement the functional modules in the apparatus 1100 shown in FIG. 25. For example, a person skilled in the art may figure out that the processing unit 1101 in the apparatus 1100 shown in FIG. 25 may be implemented by the at least one processor 1301 by invoking code in the memory 1303, and the transceiver unit 1102 in the apparatus 1100 shown in FIG. 25 may be implemented by the at least one transceiver 1304.

The apparatus 1300 may be further configured to implement a function of the master module in any one of the foregoing embodiments.

The processor 1301 may be a general-purpose central processing unit (central processing unit, CPU), a network processor (network processor, NP), a microprocessor, an application-specific integrated circuit (application-specific integrated circuit, ASIC), or one or more integrated circuits for controlling program execution of the solutions of this application.

The internal connection 1302 may include a path for transmitting information between the foregoing components. The internal connection 1302 may be a board, a bus, or the like.

The at least one transceiver 1304 is configured to communicate with another device or a communications network.

For example, the memory 1303 may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital versatile disc, a Blu-ray disc, and the like), a magnetic disk storage medium or another magnetic storage device, or any other medium that can be used to carry or store expected program code in a form of instructions or a data structure and that can be accessed by a computer, but is not limited thereto. The memory may exist independently, and is connected to the processor through the bus. Alternatively, the memory may be integrated with the processor.

The memory 1303 is configured to store application code for executing the solutions in this application, and the processor 1301 controls the execution. The processor 1301 is configured to execute the application program code stored in the memory 1303, and cooperate with the at least one transceiver 1304, so that the apparatus 1300 implements a function in the method in this patent.

During specific implementation, in an embodiment, the processor 1301 may include one or more CPUs, for example, a CPU 0 and a CPU 1 in FIG. 27.

During specific implementation, in an embodiment, the apparatus 1300 may include a plurality of processors, for example, the processor 1301 and a processor 1307 in FIG. 27. Each of the processors may be a single-core (single-CPU) processor, or may be a multi-core (multi-CPU) processor. The processor herein may be one or more devices, circuits, and/or processing cores configured to process data (for example, computer program instructions).

FIG. 28 is a schematic diagram of a data receiving apparatus 1400 according to an embodiment of this application. The apparatus 1400 may be the slave module provided in any one of the foregoing embodiments. For example, the apparatus 1300 is the slave module in the system 100 shown in FIG. 7 or FIG. 8. Alternatively, the apparatus 1300 is the first slave module in the first system 100A shown in FIG. 9 or the second slave module in the second system 100B shown in FIG. 9. Alternatively, the apparatus 1300 is the first slave module in the communication local device in the embodiments shown in FIG. 10 to FIG. 24. The apparatus 1400 includes at least one processor 1401, an internal connection 1402, a memory 1403, and at least one transceiver 1404.

The apparatus 1400 is an apparatus of a hardware structure, and can be configured to implement the functional modules in the apparatus 1200 shown in FIG. 26. For example, a person skilled in the art may figure out that the processing unit 1202 in the apparatus 1200 shown in FIG. 26 may be implemented by the at least one processor 1401 by invoking code in the memory 1403, and the transceiver unit 1201 in the apparatus 1200 shown in FIG. 26 may be implemented by the at least one transceiver 1404.

The apparatus 1400 may be further configured to implement a function of the slave module in any one of the foregoing embodiments.

The processor 1401 may be a general-purpose central processing unit (central processing unit, CPU), a network processor (network processor, NP), a microprocessor, an application-specific integrated circuit (application-specific integrated circuit, ASIC), or one or more integrated circuits for controlling program execution of the solutions of this application.

The internal connection 1402 may include a path for transmitting information between the foregoing components. The internal connection 1402 may be a board, a bus, or the like.

The at least one transceiver 1404 is configured to communicate with another device or a communications network.

For example, the memory 1403 may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital versatile disc, a Blu-ray disc, and the like), a magnetic disk storage medium or another magnetic storage device, or any other medium that can be used to carry or store expected program code in a form of instructions or a data structure and that can be accessed by a computer, but is not limited thereto. The memory may exist independently, and is connected to the processor through the bus. Alternatively, the memory may be integrated with the processor.

The memory 1403 is configured to store application code for executing the solutions in this application, and the processor 1401 controls the execution. The processor 1401 is configured to execute the application program code stored in the memory 1403, and cooperate with the at least one transceiver 1404, so that the apparatus 1400 implements a function in the method in this patent.

During specific implementation, in an embodiment, the processor 1401 may include one or more CPUs, for example, a CPU 0 and a CPU 1 in FIG. 28.

During specific implementation, in an embodiment, the apparatus 1400 may include a plurality of processors, for example, the processor 1401 and a processor 1407 in FIG. 28. Each of the processors may be a single-core (single-CPU) processor, or may be a multi-core (multi-CPU) processor. The processor herein may be one or more devices, circuits, and/or processing cores configured to process data (for example, computer program instructions).

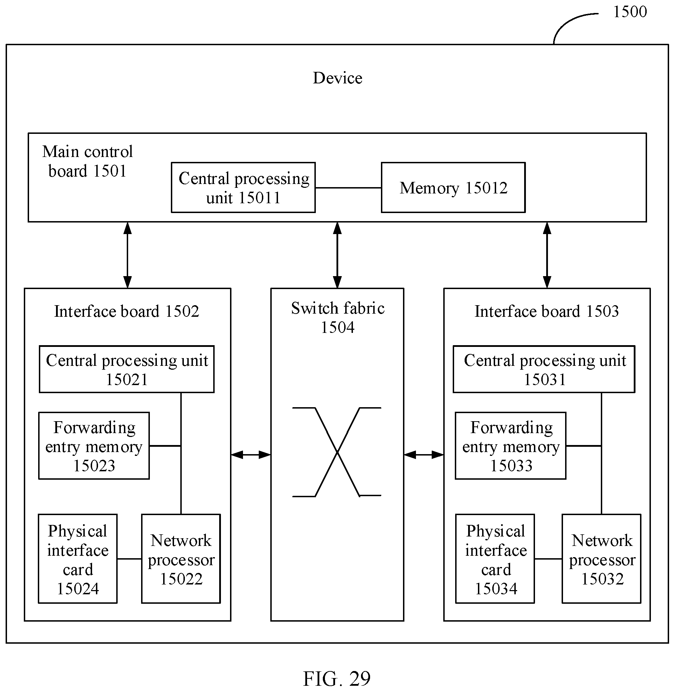

FIG. 29 is a schematic diagram of a structure of a device 1500 according to an example embodiment of this application. Optionally, the device 1500 is the master module in the communication local device or the communication peer device in any one of the foregoing embodiments. For example, the device 1500 is the master module in the system 100 shown in FIG. 7 or FIG. 8. Alternatively, the device 1500 is the master module in the first system 100A or the second system 100B shown in FIG. 9. Alternatively, the device 1500 is the master module in the communication local device in any embodiment shown in FIG. 10 to FIG. 24. In other words, the master module in the communication local device or the communication peer device in FIG. 10 to FIG. 24 may be implemented by using the device 1500.

For example, the device 1500 is a network device. For example, the device 1500 is a switch, a router, or the like. As shown in FIG. 29, the device 1500 includes a main control board 1501 and an interface board 1502.

The main control board 1501 is also referred to as a main processing unit (main processing unit, MPU) or a route processor card (route processor card). The main control board 1501 is configured to control and manage components in the device 1500, including route computation, device management, device maintenance, and a protocol-based processing function. The main control board 1501 includes a central processing unit 15011 and a memory 15012.

The interface board 1502 is also referred to as a line interface unit card (line processing unit, LPU), a line card (line card), or a service board. The interface board 1502 is configured to provide various service interfaces and forward a packet. The service interface include but is not limited to an Ethernet interface, a POS (Packet over SONET/SDH) interface, and the like. The Ethernet interface is, for example, a flexible Ethernet service interface (Flexible Ethernet Clients, FlexE Clients). The interface board 1502 includes a central processing unit 15021, a network processor 15022, a forwarding entry memory 15023, and a physical interface card (physical interface card, PIC) 15024.

The central processing unit 15021 on the interface board 1502 is configured to: control and manage the interface board 1502, and communicate with the central processing unit 15011 on the main control board 1501.

The network processor 15022 is configured to forward a data packet. A form of the network processor 15022 may be a forwarding chip. The forwarding chip may be a network processor (network processor, NP). In some embodiments, the forwarding chip may be implemented as an application-specific integrated circuit (application-specific integrated circuit, ASIC) or a field programmable gate array (field programmable gate array, FPGA). Specifically, the network processor 15022 is configured to forward a received packet based on a forwarding table stored in the forwarding entry memory 15023. If a destination address of the packet is an address of the device 1500, the network processor 15022 sends the packet to a CPU (for example, the central processing unit 15021) for processing. If a destination address of the packet is not an address of the device 1500, the network processor 15022 searches for, based on the destination address, a next hop and an outbound interface corresponding to the destination address in the forwarding table, and forwards the packet to the outbound interface corresponding to the destination address. Processing on an uplink packet may include processing at a packet ingress interface and forwarding table searching, and processing on a downlink packet may include forwarding table searching and the like. In some embodiments, the central processing unit may also perform a function of the forwarding chip, for example, implement software forwarding based on a general-purpose CPU, so that the interface board does not need the forwarding chip.

The physical interface card 15023 is configured to implement a physical layer interconnection function. Original traffic enters the interface board 1502 from the physical interface card 15023, and a processed packet is sent out from the physical interface card 1502. The physical interface card 15023 is also referred to as a subcard, may be mounted on the interface board 1502, and is responsible for converting an optical/electrical signal into a packet, performing validity check on the packet, and forwarding the packet to the network processor 15022 for processing. In some embodiments, the central processing unit may also perform a function of the network processor 15022, for example, implement software forwarding based on a general-purpose CPU. Therefore, the network processor 15022 is not required in the physical interface card 15023.

Optionally, the device 1500 includes a plurality of interface boards. For example, the device 1500 further includes an interface board 1503. The interface board 1503 includes a central processing unit 15031, a network processor 15032, a forwarding entry memory 15033, and a physical interface card 15034. Functions and implementations of components in the interface board 1503 are the same as or similar to those of the interface board 1502, and details are not described herein again.

Optionally, the device 1500 further includes a switch fabric 1504. The switch fabric 1504 may also be referred to as a switch fabric unit (switch fabric unit, SFU). When the device 1500 has a plurality of interface boards, the switch fabric 1504 is configured to complete data exchange between the interface boards. For example, the interface board 1502 and the interface board 1503 may communicate with each other through the switch fabric 1504.

The main control board 1501 is coupled to the interface board 1502. For example, the main control board 1501, the interface board 1502, the interface board 1503, and the switch fabric 1504 are connected to a system backplane through a system bus to implement interworking. In a possible implementation, an inter-process communication (inter-process communication, IPC) channel is established between the main control board 1501 and the interface board 1502, and the main control board 1501 and the interface board 1502 communicate with each other on the IPC channel.

Logically, the device 1500 includes a control plane and a forwarding plane. The control plane includes the main control board 1501 and the central processing unit. The forwarding plane includes components that perform forwarding, for example, the forwarding entry memory 15023, the physical interface card 15024, and the network processor 15022. The control plane performs functions such as routing, generating a forwarding table, processing signaling and a protocol packet, and configuring and maintaining a device status. The control plane delivers the generated forwarding table to the forwarding plane. On the forwarding plane, the network processor 15022 searches the forwarding table delivered by the control plane to forward a packet received by the physical interface card 15024. The forwarding table delivered by the control plane may be stored in the forwarding entry memory 15023. In some embodiments, the control plane and the forwarding plane may be totally separated, and are not on a same device.

It should be noted that, there may be one or more main control boards 1501. When there are a plurality of main control boards 1501, the main control boards 1501 may include a master main board and a slave main board. There may be one or more interface boards, and the device 1500 having a stronger data processing capability provides more interface boards. There may also be one or more physical interface cards on the interface board. There may be no switch fabric 1504 or one or more switch fabrics 1504. When there are a plurality of switch fabrics 1504, load balancing and redundancy backup may be implemented together. In a centralized forwarding architecture, the device 1500 may not need the switch fabric, and the interface board provides a function of processing service data of an entire system. In a distributed forwarding architecture, the device 1500 may include at least one switch fabric 1504. Data exchange between a plurality of interface boards is implemented by using the switch fabric 1504, to provide a large-capacity data exchange and processing capability. Therefore, a data access and processing capability of the device 1500 of a distributed architecture is better than that of a device of a centralized architecture. Optionally, the device 1500 may alternatively be in a form in which there is only one card. To be specific, there is no switch fabric, and functions of the interface board and the main control board are integrated on the card. In this case, the central processing unit on the interface board and the central processing unit on the main control board may be combined to form one central processing unit on the card, to perform functions obtained by combining the two central processing units. This form of device (for example, a network device such as a low-end switch or a router) has a weak data exchange and processing capability. A specific architecture that is to be used depends on a specific networking deployment scenario. This is not limited herein.

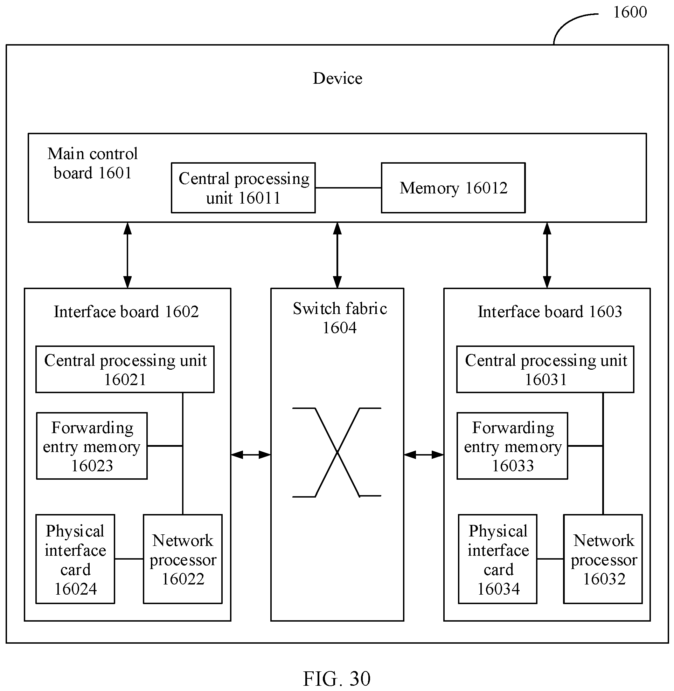

FIG. 30 is a schematic diagram of a structure of a device 1600 according to an example embodiment of this application. Optionally, the device 1600 is the slave module in the communication local device or the communication peer device in any one of the foregoing embodiments. For example, the device 1600 is the slave module in the system 100 shown in FIG. 7 or FIG. 8. Alternatively, the device 1600 is the slave module in the first system 100A or the second system 100B shown in FIG. 9. Alternatively, the device 1600 is the slave module in the communication local device in any embodiment shown in FIG. 10 to FIG. 24. In other words, the slave module in the communication local device or the communication peer device in FIG. 10 to FIG. 24 may be implemented by using the device 1600.

For example, the device 1600 is a network device. For example, the device 1600 is a switch, a router, or the like. As shown in FIG. 30, the device 1600 includes a main control board 1601 and an interface board 1602.

The main control board 1601 is also referred to as a main processing unit (main processing unit, MPU) or a route processor card (route processor card). The main control board 1601 is configured to control and manage components in the device 1600, including route computation, device management, device maintenance, and a protocol-based processing function. The main control board 1601 includes a central processing unit 16011 and a memory 16012.

The interface board 1602 is also referred to as a line interface unit card (line processing unit, LPU), a line card (line card), or a service board. The interface board 1602 is configured to provide various service interfaces and forward a packet. The service interface include but is not limited to an Ethernet interface, a POS (Packet over SONET/SDH) interface, and the like. The Ethernet interface is, for example, a flexible Ethernet service interface (Flexible Ethernet Clients, FlexE Clients). The interface board 1602 includes a central processing unit 16021, a network processor 16022, a forwarding entry memory 16023, and a physical interface card (physical interface card, PIC) 16024.

The central processing unit 16021 on the interface board 1602 is configured to: control and manage the interface board 1602, and communicate with the central processing unit 16011 on the main control board 1601.

The network processor 16022 is configured to forward a data packet. A form of the network processor 16022 may be a forwarding chip. The forwarding chip may be a network processor (network processor, NP). In some embodiments, the forwarding chip may be implemented as an application-specific integrated circuit (application-specific integrated circuit, ASIC) or a field programmable gate array (field programmable gate array, FPGA). Specifically, the network processor 16022 is configured to forward a received packet based on a forwarding table stored in the forwarding entry memory 16023. If a destination address of the packet is an address of the device 1600, the network processor 16022 sends the packet to a CPU (for example, the central processing unit 16021) for processing. If a destination address of the packet is not an address of the device 1600, the network processor 16022 searches for, based on the destination address, a next hop and an outbound interface corresponding to the destination address in the forwarding table, and forwards the packet to the outbound interface corresponding to the destination address. Processing on an uplink packet may include processing at a packet ingress interface and forwarding table searching, and processing on a downlink packet may include forwarding table searching and the like. In some embodiments, the central processing unit may also perform a function of the forwarding chip, for example, implement software forwarding based on a general-purpose CPU, so that the interface board does not need the forwarding chip.

The physical interface card 16023 is configured to implement a physical layer interconnection function. Original traffic enters the interface board 1602 from the physical interface card 16023, and a processed packet is sent out from the physical interface card 1602. The physical interface card 16023 is also referred to as a subcard, may be mounted on the interface board 1602, and is responsible for converting an optical/electrical signal into a packet, performing validity check on the packet, and forwarding the packet to the network processor 16022 for processing. In some embodiments, the central processing unit may also perform a function of the network processor 16022, for example, implement software forwarding based on a general-purpose CPU. Therefore, the network processor 16022 is not required in the physical interface card 16023.

Optionally, the device 1600 includes a plurality of interface boards. For example, the device 1600 further includes an interface board 1603. The interface board 1603 includes a central processing unit 16031, a network processor 16032, a forwarding entry memory 16033, and a physical interface card 16034. Functions and implementations of components in the interface board 1603 are the same as or similar to those of the interface board 1602, and details are not described herein again.

Optionally, the device 1600 further includes a switch fabric 1604. The switch fabric 1604 may also be referred to as a switch fabric unit (switch fabric unit, SFU). When the device 1600 has a plurality of interface boards, the switch fabric 1604 is configured to complete data exchange between the interface boards. For example, the interface board 1602 and the interface board 1603 may communicate with each other through the switch fabric 1604.

The main control board 1601 is coupled to the interface board 1602. For example, the main control board 1601, the interface board 1602, the interface board 1603, and the switch fabric 1604 are connected to a system backplane through a system bus to implement interworking. In a possible implementation, an inter-process communication (inter-process communication, IPC) channel is established between the main control board 1601 and the interface board 1602, and the main control board 1601 and the interface board 1602 communicate with each other on the IPC channel.

Logically, the device 1600 includes a control plane and a forwarding plane. The control plane includes the main control board 1601 and the central processing unit. The forwarding plane includes components that perform forwarding, for example, the forwarding entry memory 16023, the physical interface card 16024, and the network processor 16022. The control plane performs functions such as routing, generating a forwarding table, processing signaling and a protocol packet, and configuring and maintaining a device status. The control plane delivers the generated forwarding table to the forwarding plane. On the forwarding plane, the network processor 16022 searches the forwarding table delivered by the control plane to forward a packet received by the physical interface card 16024. The forwarding table delivered by the control plane may be stored in the forwarding entry memory 16023. In some embodiments, the control plane and the forwarding plane may be totally separated, and are not on a same device.

It should be noted that, there may be one or more main control boards 1601. When there are a plurality of main control boards 1601, the main control boards 1601 may include a master main board and a slave main board. There may be one or more interface boards, and the device 1600 having a stronger data processing capability provides more interface boards. There may also be one or more physical interface cards on the interface board. There may be no switch fabric 1604 or one or more switch fabrics 1604. When there are a plurality of switch fabrics 1604, load balancing and redundancy backup may be implemented together. In a centralized forwarding architecture, the device 1600 may not need the switch fabric, and the interface board provides a function of processing service data of an entire system. In a distributed forwarding architecture, the device 1600 may include at least one switch fabric 1604. Data exchange between a plurality of interface boards is implemented by using the switch fabric 1604, to provide a large-capacity data exchange and processing capability. Therefore, a data access and processing capability of the device 1600 of a distributed architecture is better than that of a device of a centralized architecture. Optionally, the device 1600 may alternatively be in a form in which there is only one card. To be specific, there is no switch fabric, and functions of the interface board and the main control board are integrated on the card. In this case, the central processing unit on the interface board and the central processing unit on the main control board may be combined to form one central processing unit on the card, to perform functions obtained by combining the two central processing units. This form of device (for example, a network device such as a low-end switch or a router) has a weak data exchange and processing capability. A specific architecture that is to be used depends on a specific networking deployment scenario. This is not limited herein.

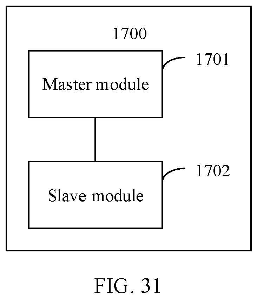

Refer to FIG. 31. An embodiment of this application provides a data receiving system 1700. The system 1700 includes the apparatus 1100 shown in FIG. 25 and the apparatus 1200 shown in FIG. 26. Alternatively, the system 1600 includes the apparatus 1300 shown in FIG. 27 and the apparatus 1400 shown in FIG. 28. Alternatively, the system 1600 includes the device 1500 shown in FIG. 29 and the apparatus 1600 shown in FIG. 30.

The apparatus 1100 shown in FIG. 25, the apparatus 1300 shown in FIG. 27, or the device 1500 shown in FIG. 29 is a master module 1601. The apparatus 1200 shown in FIG. 26, the apparatus 1400 shown in FIG. 28, or the apparatus 1600 shown in FIG. 30 is a slave module 1602.

A person of ordinary skill in the art may understand that all or some of the steps of embodiments may be implemented by hardware or a program instructing related hardware. The program may be stored in a computer-readable storage medium. The storage medium may be a read-only memory, a magnetic disk, an optical disc, or the like.

The foregoing descriptions are merely optional embodiments of this application, but are not intended to limit this application. Any modification, equivalent replacement, or improvement made without departing from the principle of this application should fall within the protection scope of this application.

## Claims

1. A data sending method, wherein the method is applied to a master module that exchanges first data with a communication peer device based on QUIC protocol, the master module is configured to provide an application service, and the method comprises:
obtaining, by the master module, the first data, wherein the first data is for implementing the application service;
sending, by the master module, the first data to a slave module serving as a backup module; and
processing, by the master module, the first data based on a backup success message received from the slave module, wherein the backup success message indicates that the first data is successfully backed up.

2. The method according to claim 1, wherein the obtaining, by the master module, the first data comprises:
generating, by the master module, the first data; and
the processing, by the master module, the first data based on a backup success message received from the slave module comprises:
sending, by the master module, the first data to the communication peer device over the QUIC protocol.

3. The method according to claim 1, wherein the obtaining, by the master module, the first data comprises:
receiving, by the master module, the first data that is sent by the communication peer device based on the QUIC protocol; and
the processing, by the master module, the first data based on a backup success message received from the slave module comprises:
completing exchange of the first data between a master QUIC module comprised in the master module and a master application, APP, module comprised in the master module.

4. The method according to any one of claims 1 to 3, wherein that the first data is successfully backed up comprises that the exchange of the first data is completed between a slave QUIC module comprised in the slave module and a slave APP module comprised in the slave module.

5. The method according to any one of claims 1 to 4, wherein the method further comprises:
before the master module completes processing the first data, obtaining, by the master module, second data, wherein the second data is for implementing the application service, and the second data is different from the first data; and
sending, by the master module, the second data and a first flag to the slave module, wherein the first flag is for indicating to suspend backup of the second data.

6. The method according to any one of claims 1 to 5, wherein before the obtaining, by the master module, the first data, the method further comprises:
sending, by the master module, first status data to the slave module, wherein the first status data comprises running status data that is of the master module and that is generated before the slave module goes online.

7. The method according to claim 6, wherein the first status data comprises at least one of the following: a QUIC protocol-based connection instance, a QUIC protocol-based stream instance, and data buffered in a buffer space corresponding to the stream instance.

8. The method according to claim 6 or 7, wherein before the sending, by the master module, the first data to a slave module serving as a backup module, the method further comprises:
processing, by the master module, third data, wherein the third data is data that is sent by the communication peer device and that is received by the master module before a first time point, and the first time point is a time point at which the slave module successfully backs up the first status data.

9. The method according to any one of claims 1 to 8, wherein the method further comprises:
obtaining, by the master module, an identifier of a target instance, wherein the identifier of the target instance is for identifying the target instance created by the master module and the communication peer device;
sending, by the master module, a backup request to the slave module, wherein the backup request comprises the identifier of the target instance, and the backup request is for requesting to back up the target instance; and
processing, by the master module, the target instance based on a backup response sent by the slave module, wherein the backup response is for responding to successful backup of the target instance.

10. The method according to claim 9, wherein the successful backup of the target instance comprises:
the exchange of the information related to the creation of the target instance is completed between the slave QUIC module comprised in the slave module and the slave APP module comprised in the slave module.

11. The method according to claim 9, wherein the method further comprises:
sending, by the master module, a deletion request to the slave module, wherein the deletion request comprises the identifier of the target instance, and the deletion request is for requesting to delete the target instance; and
receiving, by the master module, a deletion response sent by the slave module, wherein the deletion response is for responding to successful deletion of the target instance.

12. The method according to claim 9, wherein the target instance is the QUIC protocol-based connection instance or the QUIC protocol-based stream instance.

13. The method according to any one of claims 1 to 12, wherein the master module and the slave module are located on a same device, or the master module and the slave module are located on different devices.

14. A data receiving device, wherein the device comprises:
a processor and a memory, wherein the memory is configured to store a program, and the processor is configured to execute the program in the memory, to enable the apparatus to complete the method according to any one of claims 1 to 13.

15. A data receiving system, wherein the system comprises:
a master module and a slave module, wherein the master module is configured to perform the method according to any one of claims 1 to 13.
